# EUROPEAN PATENT APPLICATION

(11) **EP 1 288 781 A1**
(43) Date of publication of application: **05.03.2003**
(21) Application number: 01934518.0
(22) Date of filing: 04.06.2001
(51) Int. Cl.: G06F 12/00, G06F 13/00, H04N 7/16

(54) **RECEIVING/STORING DEVICE, TRANSMISSION DEVICE, BROADCASTING SYSTEM, RECEIVING/STORING METHOD, TRANSMISSION METHOD, BROADCASTING METHOD, PROGRAMME AND MEDIUM**

(30) Priority: 05.06.2000 JP 2000167260
(71) Applicant: MATSUSHITA ELECTRIC INDUSTRIAL CO., LTD., Kadoma-shi, Osaka 571-8501 (JP)
(72) Inventor: KATAOKA, Mitsuteru, Katano-shi, Osaka 576-0034 (JP)
(74) Representative: Grünecker, Kinkeldey, Stockmair & Schwanhäusser Anwaltssozietät
(86) International application number: JP0104692
(87) International publication number: WO01095112

(57) **Abstract**

There have been increasing requirements for a technique for storing and managing broadcasted contents more appropriately.

A broadcast system 0100 comprises: a send-out apparatus 0110 for transmitting at least a content and a contents ID for identifying the content; and a reception apparatus 0130 for receiving and storing the transmitted content and the transmitted contents ID; wherein: the reception apparatus 0130 stores a path name corresponding to the content and the contents ID; and the path name is transmitted from the send-out apparatus 0110 or generated in the reception apparatus 0130, presentable to a user of the reception apparatus 0130, and changeable in response to an instruction by the user.

## Description

### TECHNICAL FIELD

The present invention relates to a reception storage apparatus, a transmission apparatus, a broadcast system, a reception storage method, a transmission method, a broadcast method, a program, and a medium used in a storage-type broadcasting service in which information which is renewed as time advances, such as electronic newspapers distributed by radio-wave broadcasting, Internet communications, and the like, is temporarily stored in a reception apparatus, and in which the stored contents are browsed by users depending on their necessity.

### BACKGROUND ART

A service in which data distributed by broadcasting is temporarily stored in a reception apparatus and automatically renewed, and in which the stored data is watched by each user at a desired time of day is called a "server-type broadcasting service" or a "storage-type broadcasting service," in some cases.

An example of storage-type broadcasting services according to the prior art is the implementation of push-type information distribution services, such as Pointcast and ActivePage (by Microsoft Corporation), on the Internet using PCs (personal computers).

In the prior art, contents, such as news and weather forecast, broadcasted from a broadcasting station on the Internet are received by and stored in a reception apparatus such as a personal computer. In response to an operation by a user, the reception apparatus invokes a browser serving as a user interface used for browsing the stored contents, whereby the stored contents are watched.

Further, a virtual distribution path called a "channel" is separately provided for each kind of contents, such as political news, international news, and weather forecast, and for each contents provider. A user previously selects channels to subscribe, and registers them in a reception apparatus, whereby the contents of the registered channels are solely stored and watched.

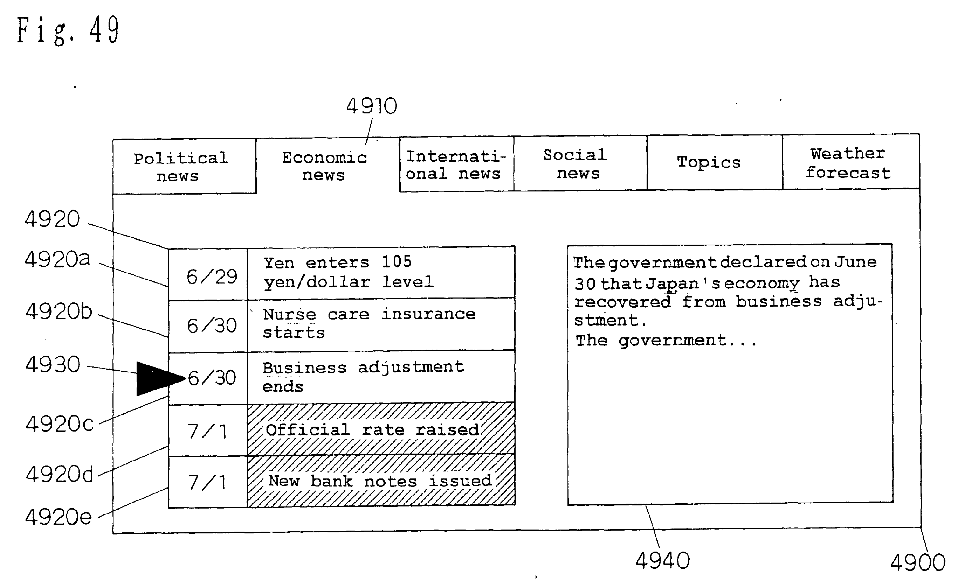

Figure 49 shows a display screen of a reception apparatus according to the prior art. In the figure, numeral 4900 indicates a GUI (graphical user interface) used for channel selection and contents browsing. When the portion of a desired channel is selected, the display moves to the channel. In the figure, a channel "Economic news" is selected, as indicated by numeral 4910.

Numeral 4920 indicates the list of the stored contents from the selected channels. The list 4920 displays five contents (items) 4920a, 4920b, 4920c, 4920d, and 4920e.

Two contents 4920d and 4920e among the five are already read and accordingly reverse-displayed. A triangular arrow 4930 points at a content of current interest. Here, the arrow 4930 indicates that the content 4920c is of current interest.

A section 4940 displays a content of current interest. In this case, the section 4940 displays the text of the content 4920c.

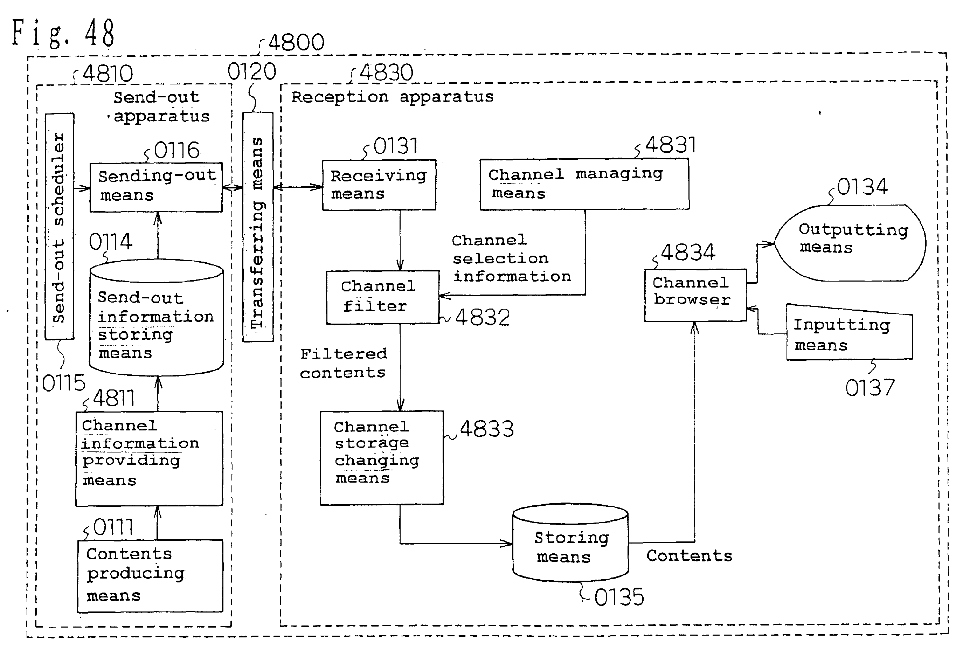

Figure 48 is a configuration diagram of a broadcast system according to the prior art. A configuration diagram of a broadcast system according to the present invention is described later. At that time, like components in these configuration diagrams are designated by like reference numerals for simplicity.

Numeral 4800 indicates the entirety of a prior art broadcast system which comprises a send-out apparatus 4810, transferring means 0120, and a reception apparatus 4830. The send-out apparatus 4810 is an apparatus on the broadcasting station side. Information including contents is transmitted through broadcasting or communications by the transferring means 0120, to the reception apparatus 4830 installed in a home or the like.

A plurality of reception apparatuses 4830 may be provided for a single send-out apparatus 4810. However, only one reception apparatus 4830 is shown in the figure for simplicity.

The send-out apparatus 4810 comprises contents producing means 0111, channel information providing means 4811, send-out information storing means 0114, send-out scheduler 0115, and sending-out means 0116.

The contents producing means 0111 is an authoring tool for producing various specific data of contents. A content output from the contents producing means 0111 is provided with a contents ID (identifier) serving as information for identifying the content.

The channel information providing means 4811 provides, to each content produced by the contents producing means 0111, information specifying the channel to which the content belongs.

The send-out information storing means is used for storing the contents which are produced and then provided with channel information.

The reception apparatus 4830 comprises receiving means 0131, channel managing means 4831, a channel filter 4832, channel storage changing means 4833, storing means 0135, inputting means 0137, a channel browser 4834, and outputting means 0134.

The reception apparatus 4830 receives data as digital information from the transferring means 0120. The channel managing means 4831 stores currently subscribed channels. The channel filter 4830 selects contents belonging to the currently subscribed channels stored in the channel managing means 4831, and then stores them in the storing means 0135.

The channel browser 4834 displays the GUI shown in Figure 49. In response to an operation through the inputting means 0137, a content stored in the storing means 0135 is selected and reproduced, whereby the content is displayed on the outputting means 0134 and thereby presented to a user.

The data stored in the reception apparatus 4830 of the broadcast system according to the prior art is described below with reference to schematic diagrams.

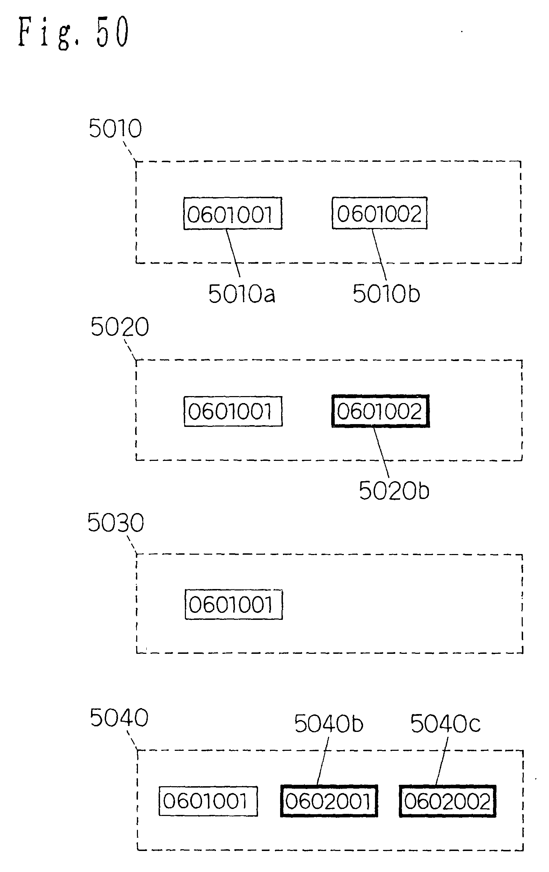

Figure 50 shows schematic diagrams of the data of a file system according to the prior art.

Each of numerals 5010, 5020, 5030, and 5040 schematically indicates the data of the file system at a certain time point.

In Diagram 5010, numerals 5010a and 5010b indicate contents stored in the reception apparatus 4830 according to the prior art. Each number shown in a small rectangle representing each content indicates the contents ID thereof.

Diagram 5020 shows the situation that the stored content 5010b in Diagram 5010 is replaced by content 5020b. The thick line surrounding the content 5020b indicates that the byte string representing the data of the content is changed from that of the situation shown in the previous diagram (Diagram 10, in this case) . Such a thick line is used only for simplicity in description.

Diagram 5030 shows the situation that the content 5020b having existed in the Diagram 5020 is deleted automatically. Each content has an expiration date when the content is to be deleted automatically.

For example, the expiration date of the content 5020b is set to be June 2, whereby, the content 5020 is deleted when the date exceeds June 2. At this time, the situation changes into that shown in Diagram 5030.

In Diagram 5040, added are a content 5040b having a contents ID "0602001" and a content 5040c having a contents ID "0602002."

Described below is an example of detailed data structure for implementing the data of the file system shown in the diagrams in Figure 50.

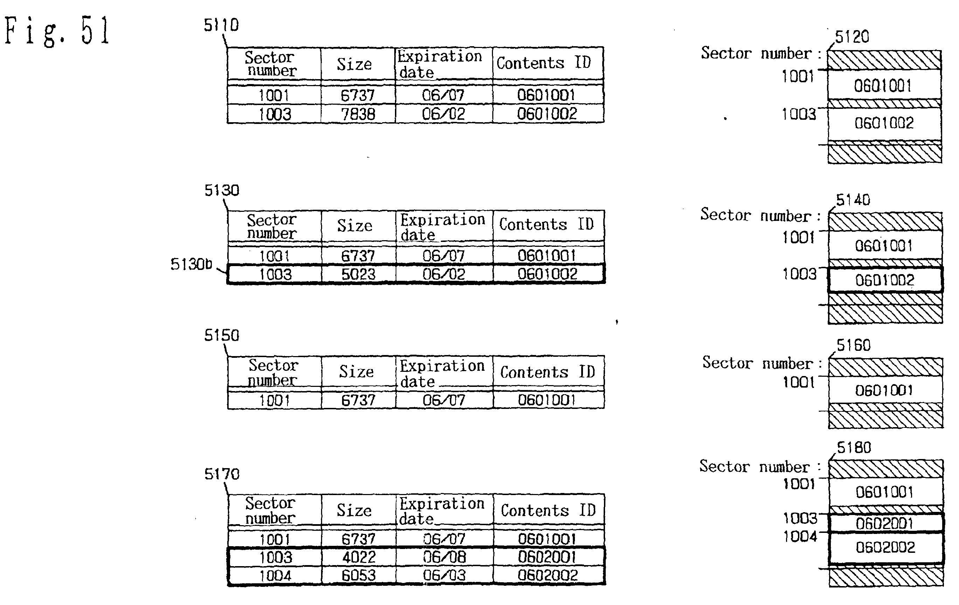

Figure 51 shows an example of data structure according to the prior art. Data structure comprises: a storage heap for storing byte strings each representing the entity of a content; and a file management table used for managing the storage positions in the storage heap and the identification of the stored contents.

Data structure corresponding to Diagram 5010 in Figure 50 comprises a file management table 5110 and a storage heap 5120. Each line of the file management table 5110 represents each content stored in the storing means 0135 of the reception apparatus 4830. Each line comprises: a sector number field for specifying the storage position of a content in the storage heap; a size field for indicating the size of the byte string of the content; an expiration date field for specifying the expiration date when the content is to be deleted automatically; and a contents field for identifying the content.

Similarly, Diagram 5020 corresponds to a file management table 5130 and a storage heap 5140, while Diagram 5030 corresponds to a file management table 5150 and a storage heap 5160. Further, Diagram 5040 corresponds to a file management table 5170 and a storage heap 5180.

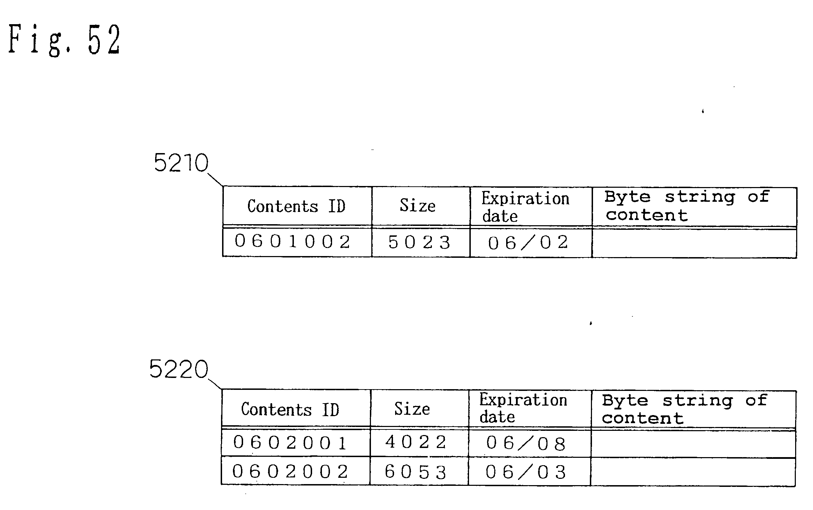

Figure 52 shows an example of transmission contents tables each comprising: a byte string of a transmitted content; and information used for the management of the byte string. When a transmission contents table 5210 is received, the file management table 5110 and the storage heap 5120 corresponding to Diagram 5010 are changed into the file management table 5130 and the storage heap 5140 corresponding to Diagram 5020.

Similarly, when a transmission contents table 5220 is received, the file management table 5150 and the storage heap 5160 corresponding to Diagram 5030 are changed into the file management table 5170 and the storage heap 5180 corresponding to Diagram 5040.

A transmission contents information is in the form of a table composed of a line or lines. Each line contains a content transmitted at that time point and information thereof. A contents ID field, a size field, and an expiration date field contain information in the same form as those fields with the same name in the file management table.

A contents byte string field contains a byte string representing the entity of a content. As such, the content is transmitted. For example, in the transmission contents table 5210, the size field has a value of "5023." Thus, the contents byte string field contains data of 5023 bytes.

Nevertheless, in the prior art, stored data varies solely depending on whether each channel is subscribed or not. More specifically, contents in each channel are disposed in the order of distribution, and then the screen merely displays whether each content is already read or not. That is, the arrangement of channels and contents in each channel is fixed.

Thus, in contrast to the case of a file system of UNIX OS or Windows OS, file names (content names, in this case) can not be changed, and files can not be moved, without restriction. Further, files can be neither duplicated for backup, nor created by oneself, without restriction. For example, even in case that files can be duplicated, the files do not appear in the list of stored contents from broadcasting stations, but appear in a completely separate list. Accordingly, the data other than the contents from broadcasting stations can not be managed in the same manner in the contents list. For example, data created by duplication and the like by a user can not be stored in the same manner as that of the contents transmitted from broadcasting stations. From a different viewpoint, this restriction is expressed as the impossibility of creating files (contents) of a kind capable of being automatically stored and renewed on a file system having performance similar to that of a UNIX OS and a Windows OS. For example, in case that contents are arrangedhierarchically, no backup subdirectory can be created in the tree of the hierarchy.

Further, in case that a reception apparatus is used by a plurality of users, it is impossible that contents are stored separately for each user. For example, deletion by use's explicit operation as well as move and duplication are carried out for each user's convenience. As a result, stored contents differ for each user. A method of varying stored data for each user by a simple procedure is to store the data in independent disks (or alternatively, directories) different for each user. Nevertheless, this method prevents efficient use of the disk capacity, and further, a change (renewal) of a content needs a number of changes (rewrite operations) corresponding to the number of users. This has caused problems in processing load, power consumption, and the like.

A method in which the preference of each user is registered as a user profile, in the reception apparatus in advance, whereby contents matching with each user profile are solely stored is to write sole contents matching with each user profile into a disk (or alternatively, a directory) different for each user. Nevertheless, this method has the problem that when a user profile is changed, matched contents are not acquired until contents to be stored are received again. In particular, when a new user is registered and even when a user profile similar to that of an existing user is set, contents need to be stored starting from the vacancy of contents. This has caused the problem that rapid watching of contents is difficult in the case of changing a user profile including the case of registering a new user.

### DISCLOSURE OF INVENTION

Considering the above-mentioned problems in the prior art, an object of the present invention is to provide a reception storage apparatus, a transmission apparatus, a broadcast system, a reception storage method, a transmission method, a broadcast method, a program, and a medium in which broadcast contents are stored and managed appropriately.

The 1st invention of the present invention (corresponding to claim 1) is a reception storage apparatus for receiving and storing at least a content and a contents ID for identifying said content which are transmitted from a transmission apparatus side, wherein:
said reception storage apparatus stores a path name corresponding to said content and said contents ID; and
said path name is transmitted from said transmission apparatus side or generated in said reception storage apparatus side, presentable to a user of said reception storage apparatus side, and changeable in response to an instruction by said user.

The 2nd invention of the present invention (corresponding to claim 2) is a reception storage apparatus according to the 1st invention, wherein when a contents ID identical to said contents ID already stored is received newly, said content stored together with said contents ID already stored is renewed by being over written with a content received together with said newly received contents ID.

The 3rd invention of the present invention (corresponding to claim 3) is a reception storage apparatus according to the 1st invention, wherein:
said storage is carried out to a predetermined recording medium;
said path name corresponds to a hierarchical directory of said recording medium; and
the hierarchical directory of said stored content is changed when said path name is changed by an instruction from said user.

The 4th invention of the present invention (corresponding to claim 4) is a reception storage apparatus according to the 1st invention, wherein even when said path name is deleted by an instruction from said user, said content and said contents ID corresponding to said deleted path name is not deleted.

The 5th invention of the present invention (corresponding to claim 5) is a reception storage apparatus according to the 1st invention, wherein: expiration date information on the limit date when said content is to be deleted is stored; and
said stored content is deleted on the basis of said stored expiration date information.

The 6th invention of the present invention (corresponding to claim 6) is a reception storage apparatus according to any of the 1st to 5th inventions, comprising copy generating means of generating a copy of said stored content in response to an instruction from said user, wherein
said generated copy is not provided with said contents ID but provided with said corresponding path name.

The 7th invention of the present invention (corresponding to claim 7) is a reception storage apparatus according to the 6th invention, wherein said generated copy is deleted in response to an instruction from said user.

The 8th invention of the present invention (corresponding to claim 8) is a reception storage apparatus according to any of the 1st to 5th inventions, comprising path name providing means of providing to said single content said path name separately for each of a plurality of said users.

The 9th invention of the present invention (corresponding to claim 9) is a reception storage apparatus according to any of the 1st to 5th inventions, comprising path name presenting means of presenting or not presenting said path name corresponding to said content on the basis of the user preference information on the preference of said user.

The 10th inventions of the present invention (corresponding to claim 10) is a reception storage apparatus according to the 9th invention, wherein when said user preference information is changed, said path name corresponding to said already stored content is presented or not presented on the basis of the result of the change.

The 11th invention of the present invention (corresponding to claim 11) is a transmission apparatus for transmitting at least a content and a contents ID for identifying said content, wherein:
a path name corresponding to said content and said contents ID is stored on the side of a reception storage apparatus for receiving and storing said transmitted content and said transmitted contents ID; and
said path name is transmitted from said transmission apparatus side or generated in said reception storage apparatus side, presentable to a user of said reception storage apparatus side, and changeable in response to an instruction by said user.

The 12th invention of the present invention (corresponding to claim 12) is a transmission apparatus according to the 11th inveniton, wherein:
a content is newly transmitted together with a contents ID identical to said contents ID already stored in said reception storage apparatus side; and
said content stored together with said contents ID already stored is renewed by being overwritten with said content newly transmitted.

The 13th invention of the present invention (corresponding to claim 13) is a broadcast system comprising:
a transmission apparatus for transmitting at least a content and a contents ID for identifying said content; and
a reception storage apparatus for receiving and storing said transmitted content and said transmitted contents ID; wherein:
   a path name corresponding to said content and said contents ID is stored on said reception storage apparatus side; and
   said path name is transmitted from said transmission apparatus side or generated in said reception storage apparatus side, presentable to a user of said reception storage apparatus side, and changeable in response to an instruction by said user.

The 14th invention of the present invention (corresponding to claim 14) is a reception storage method comprising the steps of:
receiving and storing at least a content and a contents ID for identifying said content which are transmitted from a transmission side; and
storing a path name corresponding to said content and said contents ID; wherein
said path name is transmitted from said transmission side or generated in said reception storage side, presentable to a user of said reception storage side, and changeable in response to an instruction by said user.

The 15th invention of the present invention (corresponding to claim 15) is a transmission method comprising the step of transmitting at least a content and a contents ID for identifying said content, wherein:
a path name corresponding to said content and said contents ID is stored on a reception storage side for receiving and storing said transmitted content and said transmitted contents ID; and
said path name is transmitted from said transmission side or generated in said reception storage side, presentable to a user of said reception storage side, and changeable in response to an instruction by said user.

The 16th invention of the present invention (corresponding to claim 16) is a broadcasting method comprising the steps of:
transmitting at least a content and a contents ID for identifying said content and then receiving and storing said transmitted content and said transmitted contents ID; and
storing a path name corresponding to said content and said contents ID, on said receiving and storing side; wherein
said path name is transmitted from said transmission side or generated in said reception storage side, presentable to a user of said reception storage side, and changeable in response to an instruction by said user.

The 17th invention of the present invention (corresponding to claim 17) is a program for causing a computer to execute all or part of the steps of: receiving and storing at least a content and a contents ID for identifying said content which are transmitted from a transmission side; and storing a path name corresponding to said content and said contents ID; in the reception storage method according to the 14th invention.

The 18th invention (corresponding to claim 18) is a program for causing a computer to execute the step of transmitting at least a content and a contents ID for identifying said content, in the transmission method according to the 15th invention.

The 19th invention of the present invention (corresponding to claim 19) is a program for causing a computer to execute all or part of the steps of: transmitting at least a content and a contents ID for identifying said content and then receiving and storing said transmitted content and said transmitted contents ID; and storing a path name corresponding to said content and said contents ID, on said receiving and storing side; in the broadcasting method according to the 16th invention.

The 20th invention of the present invention (corresponding to claim 20) is a computer-processable medium carrying a program for causing a computer to execute all or part of the steps of: receiving and storing at least a content and a contents ID for identifying said content which are transmitted from a transmission side; and storing a path name corresponding to said content and said contents ID; in the reception storage method according to the 14th invention.

The 21st invention of the present invention (corresponding to claim 21) is a computer-processable medium carrying a program for causing a computer to execute the step of transmitting at least a content and a contents ID for identifying said content, in the transmission method according to the 15th invention.

The 22nd invention of the present invention is a computer-processable medium carrying a program for causing a computer to execute all or part of the steps of:
transmitting at least a content and a contents ID for identifying said content and then receiving and storing said transmitted content and said transmitted contents ID;
and storing a path name corresponding to said content and said contents ID, on said receiving and storing side; in the broadcasting method according to the 16th invention.

### BRIEF DESCRIPTION OF DRAWINGS

Figure 1 is a configuration diagram of a broadcast system according to Embodiment 1.
Figure 2 is a schematic diagram showing the data of a file system according to Embodiment 1.
Figure 3 is a diagram showing an example of the data structure of a file system according to Embodiment 1.
Figure 4 is a diagram showing an example of a transmission contents table for adding contents according to Embodiment 1.
Figure 5 is a diagram showing the data structure of a DII message.
Figure 6 is a diagram showing the data structure of a DDB message.
Figure 7 is a schematic diagram showing the data of a file system according to Embodiment 1 after contents are added.
Figure 8 is a diagram showing an example of data structure according to Embodiment 1 after contents are added.
Figure 9(a) is a process flowchart (entirety) of storage changing means according to Embodiment 1 when a contents table is received.
Figure 9(b) is a process flowchart (Steps 0940, 0950, and 0960) of storage changing means according to Embodiment 1 when a contents table is received.
Figure 9(c) is a process flowchart (Steps 0970, 0980, and 0990) of storage changing means according to Embodiment 1 when a contents table is received.
Figure 10 is a schematic diagram showing the data of a file system according to Embodiment 1 when contents are renewed.
Figure 11 is a diagram showing an example of a transmission contents table for renewing contents according to Embodiment 1.
Figure 12 is a diagram showing an example of data structure according to Embodiment 1 when contents are renewed.
Figure 13 is a schematic diagram showing the data of a file system according to Embodiment 1 when contents are deleted automatically.
Figure 14 is a diagram showing an example of data structure according to Embodiment 1 when contents are deleted automatically.
Figure 15 is a process flowchart of storage changing means according to Embodiment 1 when contents are deleted automatically.
Figure 16 is a diagram showing an example of a GUI screen for contents management according to Embodiment 2.
Figure 17 is a schematic diagram showing the data of a file system according to Embodiment 2 when a user copies a content.
Figure 18 is a diagram showing a first example of data structure according to Embodiment 2 when a user copies a content.
Figure 19(a) is a process flowchart (Steps 1900 and 1910) of storage changing means according to Embodiment 2 when a user copies a content.
Figure 19(b) is a process flowchart (Steps 1920 and 1930) of storage changing means according to Embodiment 2 when a user copies a content.
Figure 20 is a diagram showing a second example of data structure according to Embodiment 2 when a user copies a content.
Figure 21 is a diagram showing an example of a transmission contents table received when a user copies a content according to Embodiment 2.
Figure 22 is a schematic diagram showing the data of a file system according to Embodiment 2 when a user deletes a content.
Figure 23 is a diagram showing an example of data structure according to Embodiment 2 when a user deletes a content.
Figure 24 is a process flowchart of storage changing means according to Embodiment 2 when a user deletes a content.
Figure 25 is a schematic diagram showing the data of a file system according to Embodiment 2 when a user deletes a copied content.
Figure 26 is a diagram showing an example of data structure according to Embodiment 2 when a user deletes a copied content.
Figure 27 is a schematic diagram showing the data of a file system according to Embodiment 3 when a content is added.
Figure 28 is a diagram showing an example of data structure according to Embodiment 3 when a content is added.
Figure 29 is a process flowchart of storage changing means according to Embodiment 3 when a contents table is received.
Figure 30 is a schematic diagram showing the data of a file system according to Embodiment 3 when a content is renewed.
Figure 31 is a diagram showing an example of data structure according to Embodiment 3 when a content is renewed.
Figure 32 is a diagram showing an example of a transmission contents table for adding a content according to Embodiment 3.
Figure 33 is a schematic diagram showing the data of a file system according to Embodiment 3 when contents are deleted automatically.
Figure 34 is a diagram showing an example of data structure according to Embodiment 3 when contents are deleted automatically.
Figure 35 is a process flowchart of storage changing means according to Embodiment 3 when contents are deleted automatically.
Figure 36 is a schematic diagram showing the data of a file system according to Embodiment 3 when a user copies a content.
Figure 37 is a diagram showing a first example of data structure according to Embodiment 3 when a user copies a content.
Figure 38 is a schematic diagram showing the data of a file system according to Embodiment 3 when a user deletes a content.
Figure 39 is a diagram showing an example of data structure according to Embodiment 3 when a user deletes a content.
Figure 40 is a schematic diagram showing the data of a file system according to Embodiment 3 when a user deletes a copied content.
Figure 41 is a diagram showing an example of data structure according to Embodiment 3 when a user deletes a copied content.
Figure 42 is a diagram showing an example of a filter matching table according to Embodiment 4.
Figure 43 is a diagram showing an example of a transmission contents table for adding contents according to Embodiment 4.
Figure 44 is a schematic diagram showing the data of a file system according to Embodiment 4 when contents are added.
Figure 45 is a diagram showing an example of data structure according to Embodiment 4 when contents are added.
Figure 46 is a process flowchart of storage changing means according to Embodiment 4 when a contents table is received.
Figure 47 is a process flowchart of storage changing means according to Embodiment 4 when a user profile is changed.
Figure 48 is a configuration diagram of a broadcast system according to the prior art.
Figure 49 is a diagram showing an example of a GUI according to the prior art.
Figure 50 is a schematic diagram showing the data of a file system according to the prior art.
Figure 51 is a diagram showing an example of data structure according to the prior art.
Figure 52 is a diagram showing an example of transmitted data according to the prior art.

### DESCRIPTION OF THE REFERENCE NUMERALS

0110 Send-out apparatus
0111 Contents producing means
0112 Path name setting means
0113 Filter information providing means
0114 Send-out information storing means
0115 Send-out scheduler
0116 Sending-out means
0120 Transferring means
0130 Reception apparatus
0131 Receiving means
0132 User managing means
0133 Contents filter
0134 Storage changing means
0135 Storing means
0136 Presentation controlling means
0137 Inputting means
0138 Browser
0139 Outputting means

### BEST MODE FOR CARRYING OUT THE INVENTION

### (Embodiment 1)

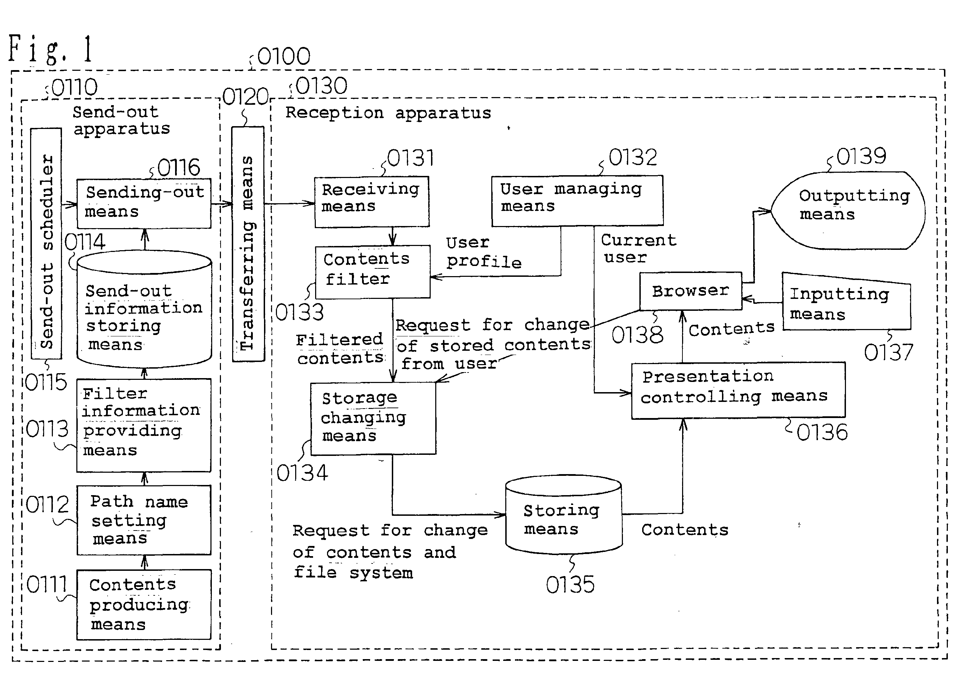

The configuration of a broadcast system according to the present embodiment is described below with reference mainly to Figure 1 which is a configuration diagram of the broadcast system according to the present embodiment.

In Figure 1, numeral 0100 indicates the entirety of the broadcast system according to Embodiment 1. The broadcast system 0100 comprises a send-out apparatus 0110, transferring means 0120, and a reception apparatus 0130.

In the broadcast system according to Embodiment 1, the reception apparatus comprises: an entity layer for storing and managing the entity of contents identified with contents IDs (identifiers) ; and a presentation layer for storing and managing presentation nodes identified with path names. When a contents ID, a path name, and an entity are received, the broadcast system comprises: Step 1 of adding the received entity to the entity layer; and Step 2 of adding to the presentation layer a presentation node having the received path name and referring to the entity added in Step 1 (here, the path name may be generated by the receiving side, however, a default value is set by the transmitting side in the present embodiment).

The send-out apparatus 0110 is described below.

The send-out apparatus 0110 sends out data of storage-type broadcasting. The send-out apparatus 0110 comprises: contents producing means 0111, path name setting means 0112, filter information providing means 0113, send-out information storing means 0114, a send-out scheduler 0115, and sending-out means 0116.

The contents producing means 0111 performs authoring of contents. Contents are described with a description language such as BML (Broadcast Markup Language) used for contents description in data broadcasting in digital broadcasting in Japan. BML is a description language based on XML (Extensible Markup Language) , and is defined in ARIB STD-B24 "Data Broadcast Encoding System and Transmission System in Digital Broadcasting," Section 2 "XML-Based Multimedia Encoding."

Each content is provided with a contents ID serving as an identifier for identifying the content uniquely. Contents having the same contents ID are identified as the same. Accordingly, contents having the same contents ID are not stored simultaneously in the reception apparatus 0130. Further, when one of the contents is already stored in the reception apparatus 0130, this one is overwritten by the other one.

The invention can be implemented regardless of the type of language for describing contents. For example, the description language used may be HTML (HyperText Markup Language) used for describing home pages in the Internet, ATVEF (Advanced Television Enhancement Forum) based on the HTML, or MHEG-5 (Multimedia Hypermedia Experts Group-5).

The path name setting means 0112 provides a path name to each content. The provided path name is a character string having a meaning to users of the reception apparatus 0130. An example of a path name is "0601 Weather," which indicates weather forecast for June 1. Path names are generally input manually.

The filter information providing means 0113 provides filter information to each content. The filter information is used for the purpose that among a large amount of contents, sole contents appropriate to each user of the reception apparatus 0130 are automatically selected and stored. The filter information may be genre information of the content, or alternatively free keywords provided to the content such as the names of persons appearing in the content. The filter information also is generally input manually.

The send-out information storing means 0114 stores contents to be sent out, and then outputs the stored contents to the sending-out means 0116 in response to read-out requests from the sending-out means 0116.

The send-out scheduler 0115 manages which data is sent out at which time of day. At the time of day when the data is to be sent out, the send-out scheduler 0115 outputs a data send-out request to the sending-out means 0116. A schedule is input to the send-out scheduler 0115 on the basis of a broadcasting schedule. When the data is linked with a schedule of ordinary television programs which contain video and audio and are broadcasted simultaneously to the data, data input for EPG (electric program guide) send out is accessed, whereby inputting the schedule is simplified.

The sending-out means 0116 may be sending-out means used in data broadcast in digital broadcasting. The sending-out means 0116 sends out the contents stored in the send-out information storing means 0114 to the transferring means 0120 in response to requests from the send-out scheduler 0115. Here, before the transmission, each content is mapped into a digital stream called MPEG2-TS (Moving Picture Experts Group 2 - Transport Stream) in a data carousel according to a digital data transmission protocol DSM-CC (Digital Storage Media Command & Control) .

The DSM-CC is described in detail in an internal standard ISO/IEC 13818-6 "Part 6: Extensions for Digital Storage Media Command and Control" as well as in ARIB STD-B24 "Data Broadcast Encoding System and Transmission System in Digital Broadcasting," Section 3 "Data Transmission System." The MPEG2-TS is defined in an internal standard ISO/IEC 13818-1 "Information technology - Coding of moving pictures and associated audio for digital storage media at up to about 1.5 Mbit/s - Part 1: Systems."

However, the invention can be implemented regardless of the type of digital data transmission standard. For example, the standard used may be HTTP (Hypertext Transfer Protocol) used for transmitting home pages in the Internet defined in RFC (Request for Comment) 1945.

The transferring means 0120 is described below.

The transferring means 0120 performs transmission of digital data. In case that the transmission is carried out by BS digital broadcasting, the transferring means 0120 comprises: uplink equipment for sending out radio waves to a satellite; a BS broadcasting satellite; a BS antenna in each home; and the like.

However, the invention can be implemented regardless of the type of transmission system by the transfer ring means. For example, the transmission may be carried out through a public telephone line or by wireless.

The reception apparatus 0130 is described below.

The reception apparatus 0130 comprises receiving means 0131, user managing means 0132, a contents filter 0133, storage changing means 0134, storing means 0135, presentation controlling means 0136, inputting means 0137, a browser 0138, and outputting means 0139.

The receiving means 0131 receives a signal transferred from the transferring means 0120, and thereby reconstructs a content from the signal. For example, the receiving means 0131 may be composed of: a tuner module for treating high frequency waves and then outputting a digital stream; and a hardware/software module for decoding data (contents) transmitted in a data carousel multiplexed in an MPEG2-TS; each used in an ordinary digital broadcasting receiver.

The user managing means 0132 performs registration and management of users of the reception apparatus 0130. When a user registers oneself as a user, the preference of the user is registered as a user profile. The user profile has a correspondence to filter information provided by the filter information providing means 0113 . For example, when filter information is the genre of contents, the user profile is also the genre of information of the specific user's interest. Alternatively, when filter information is composed of free keywords, the user profile is also composed of free keywords.

In the contents filter 0133 described later in detail, in case that a synonyms dictionary is used, or alternatively that a natural language processing is used, filtering can be carried out even when the user profile does not directly correspond to the filter information.

Here, the reception apparatus 0130 is assumed to be used by a plurality of users alternately. A different user profile can be registered for each user.

The user managing means 0132 manages a user currently using the reception apparatus 0130, as a current user. The current user is changed when a user selects a user name.

The contents filter 0133 compares the filter information provided to each content output from the receiving means 0131 with the user profile stored in the user managing means 0132, and thereby determines the matching thereof. Then, matched contents are solely output to the storage changing means 0134.

The storage changing means 0134 changes the stored data in the storing means 0135. Detailed processing by the storage changing means 0134 is described later for the case of an example of specific data structure. Thus, an outline alone of the processing is described below.

The storage changing means 0134 carries out the following three processes:
(1) Contents from the contents filter 0133 are incorporated into the storage.
   When a content sent from the contents filter 0133 is not yet stored in the storing means 0135, the content is added to the storing means 0135. When the content exists but is of a new version, the content is renewed.
(2) Data change requests from the browser 0138 to the storing means 0135 are processed.
   For example, when a user explicitly requests the deletion of a content, the content is deleted for the user. When a user requests the change of the path name of a content, the path name of the content is changed for the user.
(3) Stored contents having an exceeded expiration date are deleted (trashed) automatically.
   Each transmitted content is provided with a date of limit called an expiration date. Among the contents stored in the storing means 0135, expired contents are searched for and deleted automatically.

The storing means 0135 stores contents for broadcasting. The storing means 0135 may be a passive device. That is, the storing means 0135 may be a hard disk, an optical disk such as DVD (digital versatile disk), a semiconductor memory card such as SD card, or a non-removable semiconductor memory built in the reception apparatus 0130.

The presentation controlling means 0136 causes the contents existing for the current user among the contents stored in the storing means 0135 to be accessible from the browser 0138. When accessing the storing means 0135 via the presentation controlling means 0136, the browser 0138 observes the situation as if the storing means 0135 stores only the contents existing for the current user, whereby processing is carried out.

A method in which only the contents existing for the current user are observed and processed is described later with reference to detailed data structure.

The inputting means 0137 is a device for inputting physical operations by a user of the reception apparatus 0130. The inputting means 0137 may be: a combination of an infrared remote controller and a light receiving section; a keyboard; or a pointing device such as a mouse.

The browser 0138 reproduces the contents and changes the stored data in response to the input from the user. The browser 0138 outputs a GUI (graphic user interface) screen, and thereby displays the screen on the outputting means 0139.

When the user operates the inputting means 0137, a content is selected and reproduced. A selection menu itself displayed on the GUI is also a content. When hyperlinks provided in the content are tracked sequentially, contents are browsed. The browsing of contents may be carried out by the same function as that of an ordinary BML browser.

In addition to the function of ordinary browsing, the browser 0138 can change the stored contents. That is, the state of storage of the contents is displayed on the GUI screen in a manner similar to file browsing in a personal computer, whereby contents can be deleted, and the names of contents can be changed. Here, the display of the GUI may be based on tree structure of nodes each composed of a content (a file) , similarly in Explorer or File Manager on Windows OS (operating system) available from Microsoft Corporation. The process of changing the stored contents is described later in detail with reference to detailed data structure.

The outputting means 0139 presents the output of the browser 0138. The browser 0138 comprises: a CRT (cathode ray tube) display serving as outputting means for the video part of the output of the browser 0138; and a speaker or the like serving as outputting means for the audio part.

The operation of the broadcast system according to the present embodiment is described below. Simultaneously to this description of the operation of the broadcast system according to the present embodiment, an embodiment of a broadcast method (reception storage method and transmission method) according to the invention is described (this situation is the same also in the subsequent embodiments).

The operation of the reception apparatus 0130 according to Embodiment 1 is described below with reference to detailed data structure.

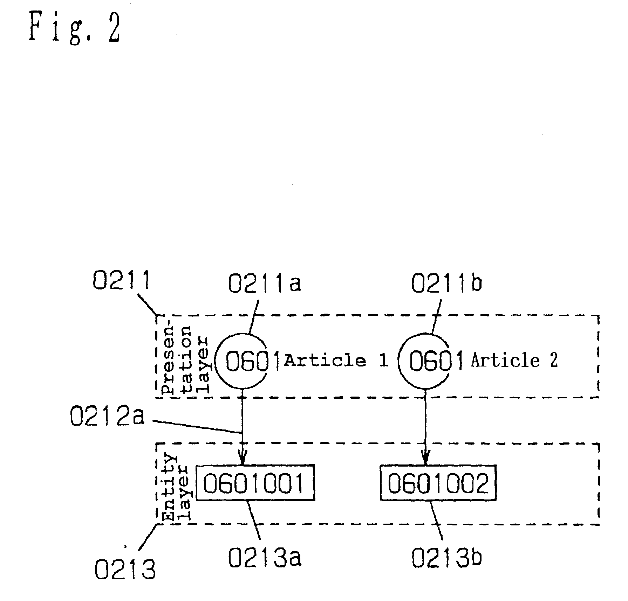

Figure 2 is a schematic diagram showing the data of a file system according to Embodiment 1. The file system comprises the following two layers:
(1) Entity layer: Entities of the byte strings of contents (files) are stored and managed. The control, such as addition, renewal, and automatic deletion, by the contents broadcasting is applied to this layer. Even in case that the reception apparatus has a plurality of users, only one entity exists for each content stored in the entity layer.
(2) Presentation layer: This layer reflects user's operation. That is, this layer implements: contents deletion by each user; difference in the stored data depending on the difference in the user profile of each user; and the like. A presentation layer exists for each user. Each presentation layer has zero or a positive integer number of presentation nodes each for pointing at an entity, while each presentation node corresponds to each entity of content stored in the entity layer.

Detailed examples of these two layers are described below with reference to Figure 2. The file system shown in Figure 2 comprises an entity layer 0213 and a presentation layer 0211. A single user is assumed for simplicity.

The entity layer 0213 stores two entities 0213a and 0213b of contents. Each number on each entity of content shown by a rectangle indicates a contents ID for identifying the content in the entity layer uniquely. The contents ID is provided in advance by the contents producing means 0111 of the send-out apparatus 0110, and is not changed by user's operation.

The presentation layer 0211 stores presentation nodes 0211a and 0211b. Each character string on each presentation node shown by a circle indicates the path name of the content. The path name is set to be a default value by the path name setting means 0112 of the send-out apparatus 0110.

Correspondence from the presentation nodes in the presentation layer to the entities in the entity layer is established. For example, an arrow 0212a in the figure indicates that the presentation node 0211a corresponds to the entity 0213a of content.

Data structure for implementing the schematic diagram of Figure 2 of the data of the file system shown is described below in detail with reference to an example.

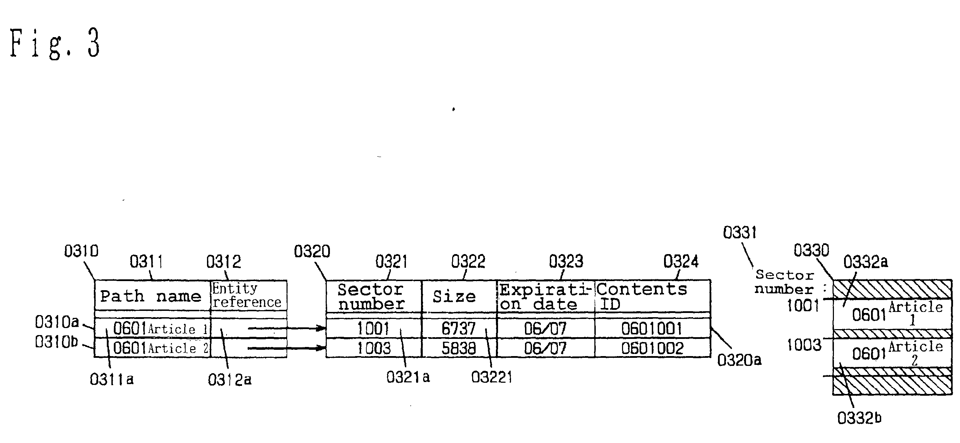

Figure 3 shows an example of the data structure of the file system for implementing the state of storage shown in Figure 2 according to Embodiment 1. The data structure comprises: a presentation table 0310 corresponding to the presentation layer; an entity table 0320 representing the structure of the entity layer; and a storage heap 0330 serving as physical storage of the byte strings of contents (files) into the storing means 0135.

The presentation table is described below. The presentation table 0310 has a data structure in the form of a table composed of no or one or more lines. Each line has one-to-one correspondence to each presentation node in the presentation layer. The presentation table 0310 comprises: a line 0310a representing the presentation node 0211a in Figure 2; and a line 0310b representing the presentation node 0211b. The presentation table 0310 further comprises : a "path name" column 0311; and an "entity reference" column 0312. In other words, each line of the presentation table 0310 comprises two items of "path name" and "entity reference."

The "path name" column 0311 stores the character string of the path name provided to each content by the path name setting means shown in Figure 1. For example, the character string within the circle representing the presentation node 0211a in the presentation layer shown in Figure 2 indicates the character string stored in the item 0311a in the line 0310a at the column 0311. The "entity reference" column 0312 stores information for corresponding each line of the presentation table 0310 to each line of the entity table 0320 representing each entity in the entity layer. For example, the arrow 0212a in Figure 2 indicates the item 0312a.

The entity table is described below. The entity table 0320 has the data structure in the form of a table composed of no or one or more lines. Each line has one-to-one correspondence to each entity of content in the entity layer. The entity table 0310 comprises: a line 0320a representing the entity 0211a in Figure 2; and a line 0320b representing the entity 0211b. The entity table 0320 further comprises: a "sector number" column 0321; a "size" column 0322; an "expiration date" column 0323; and a "contents ID" column 0324. The expiration date "06/07" indicates the date June 7.

The entity table 0320 stores two lines 0320a and 0320b corresponding to two entities. The line 0320a corresponds to the entity 0213b in Figure 2. The number within the rectangle representing each entity shown in Figure 2 indicates each item in the "contents ID" column 0324.

Each item in the "sector number" column 0321 indicates the position where the byte string of each entity is stored within the storage heap 0330. The storage heap is managed in the unit of fixed-length block called a sector, for efficiency. A sector is assumed to be in the size of 4096 bytes, here. For simplicity in the present specification, in the strategy of allocation in the storage heap, a content exceeding 4096 bytes is stored in a plurality of successive sectors. When an increase occurs in the number of required sectors for a stored content, and when the necessary subsequent sectors are not available, the "sector number" item is changed, whereby the content is stored at another position.

The storage heap 0330 stores the byte strings of the entities of contents in two regions 0332a and 0332b.

The region 0332a stores a byte string, starting at sector number 1001 and ending immediately before sector number 1003, that is, in the sector numbers 1001 and 1002. The sector 1001 corresponds to the value "1001" stored in the item 0321a in the entity table 0320. The length of the region 0332a corresponds to the value "6737" stored in the item 0322a in the entity table 0320.

In the figure, a character string "0601 Article 1" corresponding to the path name of a presentation node in the presentation layer is shown in the region 0332a. This character string is only for simplicity and convenience in description. That is, the character string "0601 Article 1" is not necessarily included in the region 0332a.

The present embodiment can be implemented regardless of the type of strategy of allocation in the storage heap.

The process in which new contents arrive and thereby the number of stored contents increases is described below with reference to detailed data structure.

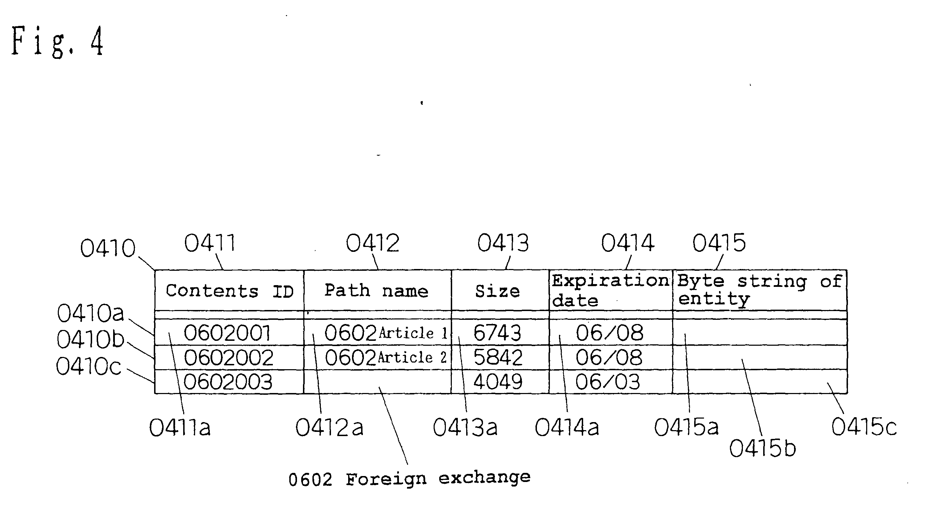

Figure 4 is a diagram showing an example of a transmission contents table transmitted for adding contents according to Embodiment 1. Numeral 0410 indicates a transmission contents table. The transmission contents table has the data structure in the form of a table generally composed of a content or contents, and thereby used for transmitting the contents.

Each line of the transmission contents table has one-to-one correspondence to each transmitted content. The transmission contents table comprises a "contents ID" column, a "path name" column, a "size" column, an "expiration date" column, and a "byte string of entity" column. Among these five columns, the "contents ID" column, the "size" column, and the "expiration date" column are identical to those in the description of the presentation table 0310 and the entity table 0320 shown in Figure 3. The "byte string of entity" column contains a byte string itself of a content to be stored in a storage region of the storage heap 0330.

An example of a method of transmitting the transmission contents table is that a byte string representing data in the form of a table by itself is mapped into data structure called a module which is a transmission unit of a DSM-CC data carousel.

Another possible method is to use a field prepared in the data carousel as described below.

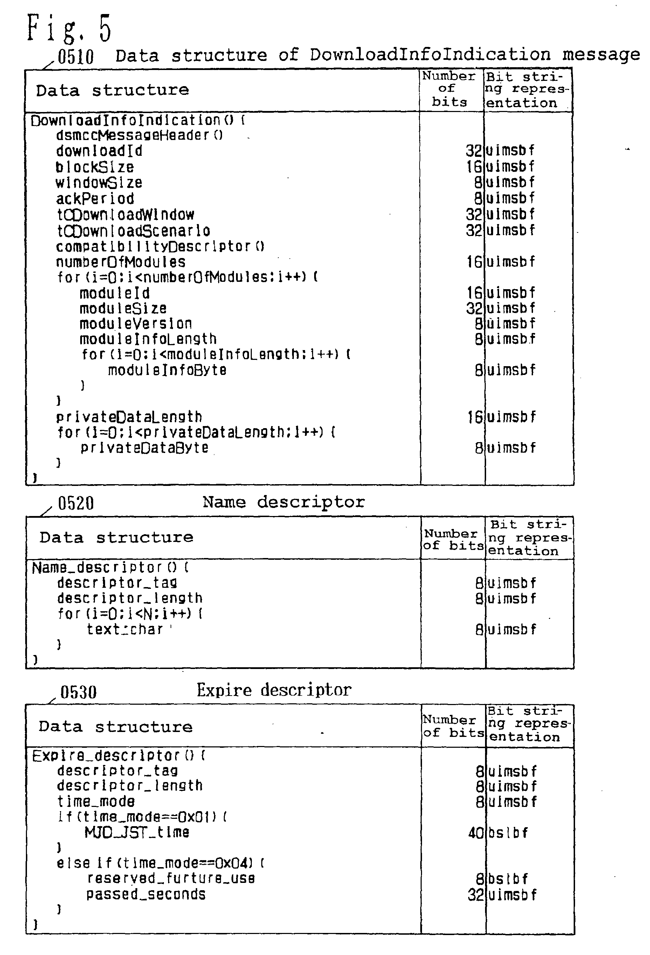

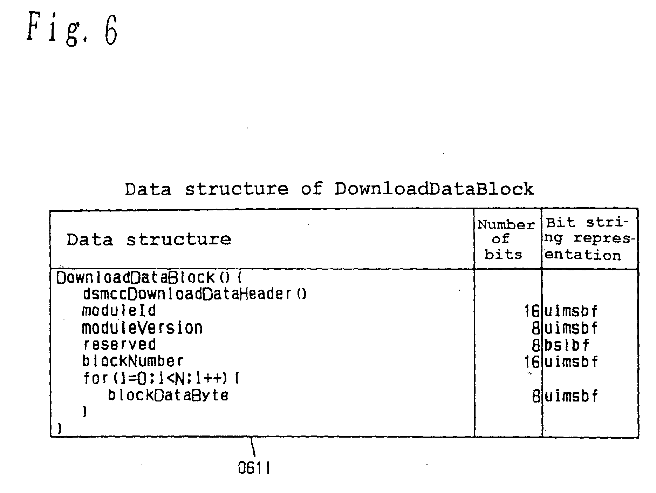

A part of the data structure used in the data carousel is described below with reference to Figures 5 and 6. Figure 5 is a diagram showing the data structure of a DII (download information indication) message. Numerals 0510, 0520, and 0530 indicate the data structure of a DII message, a name descriptor (Name_descriptor()), and an expire descriptor (Expire_descriptor()), respectively. Figure 6 is a diagram showing the data structure of a DDB (download data block) message. The DDB message contains and thereby transmits the byte string of a module.

Among the fields included in the data structure of the DII message 0510, a field 0511 named module ID stores the contents ID, while a field 0512 named module Size stores the size. A field 0513 named module Info Byte stores. In the name descriptor 0520, a field 0521 named text_char stores the file name. In the expire descriptor 0530, a field 0531 named MJD_JST_time stores the expiration date. The byte string of entity of a content is mapped into a single module. That is, in Figure 6, each field 0611 named blockDataByte in the DDB stores the byte string of entity of a single content.

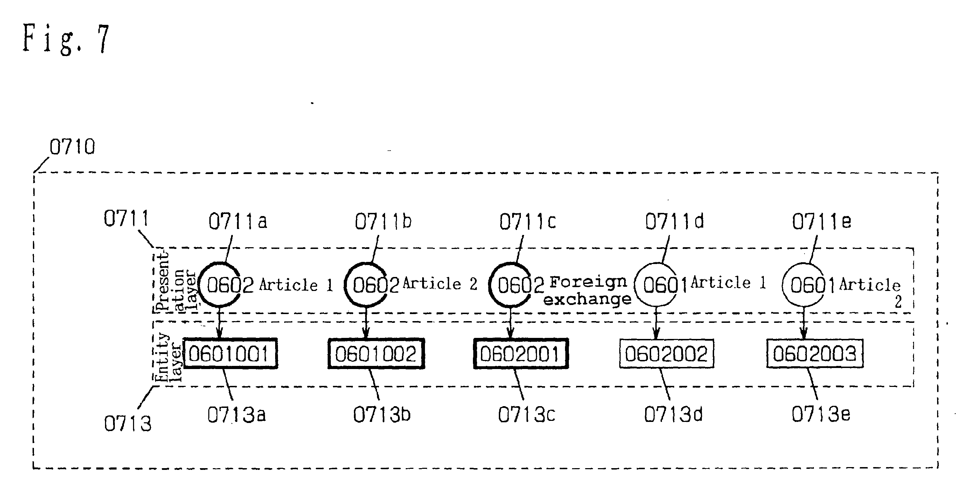

Figure 7 is a schematic diagram showing the data of the file system according to Embodiment 1 after contents are added. When the transmission contents table shown in Figure 4 is received, the schematic diagram representing the data of the file system shown in Figure 2 changes as shown in Figure 7, whereby the contents are added. In the figure, rectangles of changed portions are surrounded by thick lines for convenience.

In Figure 7, three contents corresponding to lines 0410a, 0410b, and 0410c representing the contents transmitted by the transmission contents table 0410 are added as presentation nodes 0711a, 0711b, and 0711c, respectively, in the presentation layer 0711. The presentation nodes 0211a and 0211b having existed in the original Figure 2 remain as presentation nodes 0711d and 0711e, respectively.

Further, three contents corresponding to lines 0410a, 0410b, and 0410c representing the contents transmitted by the transmission contents table 0410 are added as entities 0713a, 0713b, and 0713c, respectively, of contents in the entity layer 0713. The entities 0213a and 0213b of contents having existed in the original Figure 2 remain as entities 0713d and 0713e, respectively.

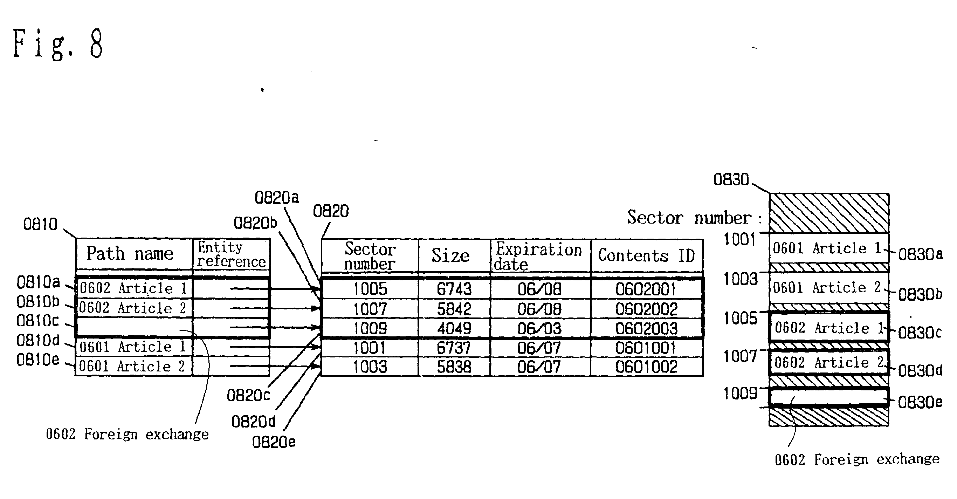

Figure 8 is a diagram showing an example of data structure according to Embodiment 1 after contents are added. When the transmission contents table shown in Figure 4 is received, the data structure shown in Figure 3 changes as shown in Figure 8, whereby contents are added. In the figure, rectangles of changed portions are surrounded by thick lines for convenience.

Numerals 0810, 0820, and 0830 indicate a presentation table, an entity table, and a storage heap, respectively, after contents are added. In the presentation table 0810, contents corresponding to the lines 0410a, 0410b, and 0410c in the transmission contents table 0410 are added into lines 0810a, 0810b, and 0810c, respectively. The lines 0310a and 0310b having existed in the original presentation table 0310 shown in Figure 3 remain as lines 0810d and 0810e, respectively, in the presentation table 0810.

Similarly, in the storage table 0820, lines 0820a, 0820b, and 0820c are added, while lines 0820d and 0820e are remained.

In the storage heap 0830, the entities of contents are added. The data of the items 0415a, 0415b, and 0415c containing the byte strings of entities of the three contents in the transmission contents table 0410 are stored into regions 0830a, 0830b, and 0830c, respectively, of the storage heap 0830. The data in the regions 0332a and 0332b in the storage heap 0330 shown in Figure 3 remain in regions 0830d and 0830e, respectively, in the storage heap 0830.

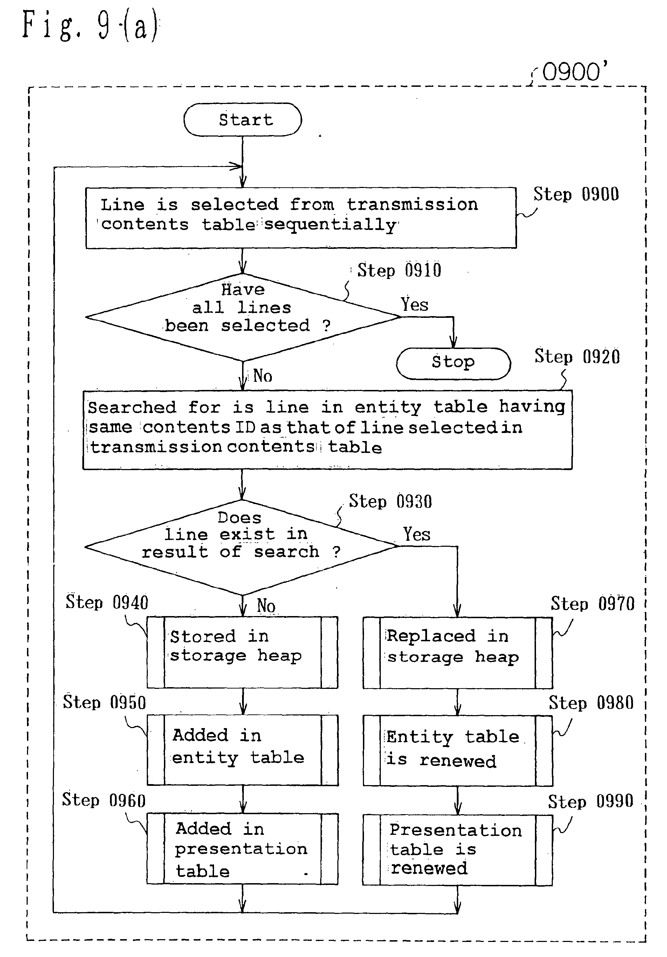

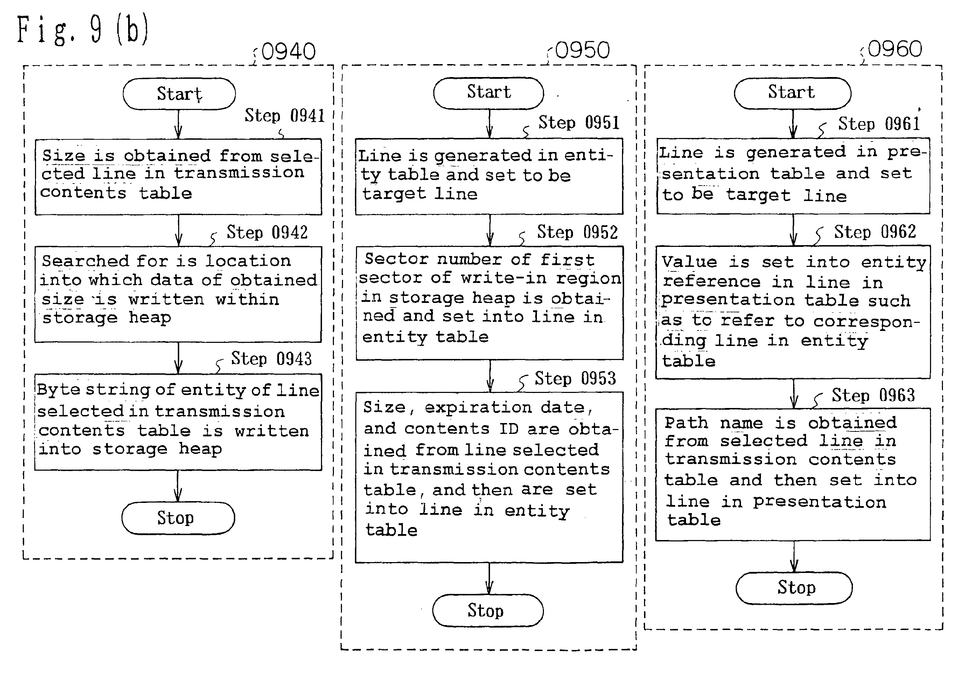

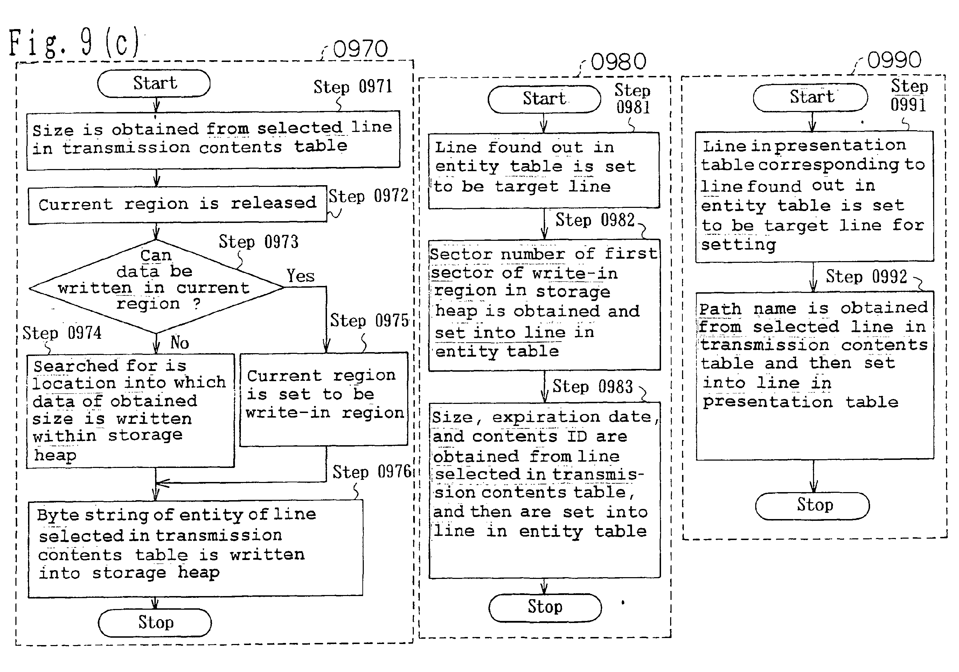

Figures 9(a)-9(c) are process flowcharts of the storage changing means according to Embodiment 1 when a transmission contents table is received.

(Step 0900) A line is selected from the transmission contents table sequentially.

(Step 0910) When all lines have been selected already in Step 0900, and hence no line remains to be selected, the process carried out in response to the reception of the transmission contents table is terminated. When a line remains to be selected, the process goes to the following Step 0920.

(Step 0920) A line having the same contents ID as that of the line selected in the transmission contents table in Step 0900 is searched for in the entity table.

(Step 0930) As the result of search in Step 0920, when a line is found out, the process goes to Step 0970. Otherwise, the process goes to the following Step 0940.

(Step 0940) The "byte string of entity" included in the line selected in the transmission contents table in Step 0900 is written into a new region in the storage heap.

The Step 0940 is described below in detail with reference to Flowchart 0940.

(Step 0941) The "size" item is obtained from the line selected in the transmission contents table in Step 0900.

(Step 0942) A location where the data of the size obtained in Step 0941 can be written in a continuous region in the storage heap is searched for, whereby the region is set to be a write-in region.

(Step 0943) The "byte string of entity" included in the line selected in the transmission contents table in Step 0900 is written into the write-in region found out in Step 0942. Then, the process of Step 0940 is completed.

(Step 0950) A new line is added to the entity table, and then each item is set.

The Step 0950 is described below in detail with reference to Flowchart 0950.

(Step 0951) Anew line is generated in the entity table. Each item of this line is set in the following steps.

(Step 0952) Obtained is the sector number of the first sector of the write-in region of the storage heap used in Step 0940 (more specifically, Step 0943). The obtained sector number is set into the "sector number" item in the line generated in the entity table in Step 0951.

(Step 0953) The "size" item, the "expiration date" item, and the "contents ID" item are obtained from the line selected in the transmission contents table in Step 0900, and then set into the corresponding items in the line generated in the entity table in Step 0951. Then, the process of Step 0950 is completed.

(Step 0960) A new line is added to the presentation table, and then each item is set. Then, the process returns to Step 0900.

The Step 0960 is described below in detail with reference to Flowchart 0960.

(Step 0961) Anew line is generated in the presentation table. Each item of this line is set in the following steps.

(Step 0962) A value is set into the "entity reference" item in the line generated in the presentation table in Step 0961 so as to refer to the new line generated in the entity table in Step 0950 (more specifically, Step 0951).

(Step 0963) The path name is obtained from the line selected in the transmission contents table in Step 0900. The obtained path name is set into the "path name" item in the line generated in the presentation table in Step 0961. Then, the process of Step 0960 is completed.

(Step 0970) The "byte string of entity" included in the line selected in the transmission contents table in Step 0900 is written into a region in the storage heap, after the region containing the already stored byte string of entity is released temporarily. When the sector number is neglected, the byte string of entity is considered to have been overwritten.

The Step 0970 is described below in detail with reference to Flowchart 0970.

(Step 0971) The "size" item is obtained from the line selected in the transmission contents table in Step 0900.

(Step 0972) The present region is released. That is, the region of storage heap starting at the "sector number" item in the line found out in the entity table in Step 0920 is released from the storage heap.

(Step 0973) It is determined whether the byte string of entity can be written in starting at the same position of the present region. That is, it is determined whether a region of the size obtained in Step 0971 is available starting at the "sector number" item in the line found out in the entity table in Step 0920. When available, the process goes to Step 0975. When unavailable, the process goes to Step 0974.

(Step 0974) A location of storage heap where the data of the size obtained in Step 0971 can be written in is searched for. Then, the process goes to Step 0976.

(Step 0975) The present region of the storage heap is set to be the write-in region. That is, this region is set to be the region into which the data of the size obtained in Step 0971 is written starting at the "sector number" item in the line found out in the entity table in Step 0920.

(Step 0976) The "byte string of entity" in the line selected in the transmission contents table in Step 0900 is written into the location (determined in Step 0974 or 0975) in the storage heap. Then, the process of Step 0970 is completed.

(Step 0980) Each item is set to be a new value, in the line found out in the entity table in Step 0920 and corresponds to the stored content.

The Step 0980 is described below in detail with reference to Flowchart 0980.

(Step 0981) The line found out in the entity table in Step 0920 is considered as the line in which various setting is to be carried out in the following steps.

(Step 0982) The sector number of the first sector of the write-in region of the storage heap used in Step 0976 the set into the "sector number" item in the line specified in the entity table in Step 0981.

(Step 0983) The size, the expiration date, and the contents ID are obtained from the line selected in the transmission contents table in Step 0900, and then set into the corresponding items in the line specified in the entity table in Step 0981. Then, the process of Step 0980 is completed.

(Step 0990) In the presentation table, each item in the line corresponding to the stored content is set to be a new value. Then, the process returns to Step 0900.

The Step 0990 is described below in detail with reference to Flowchart 0990.

(Step 0991) The line of presentation table corresponding to the line found out in the entity table in Step 0920 is considered as the line in which setting is to be carried out in the following step.

(Step 0992) The path name is obtained from the line selected in the transmission contents table in Step 0900, and then set into the item in the line specified in the presentation table in Step 0991. Then, the process of Step 0990 is completed.

The change in the data structure from Figure 3 into Figure 8 occurring when the transmission contents table 0410 shown in Figure 4 is received is described below again with reference to the flowcharts shown in Figures 9(a)-9(c).

In Step 0900, the line 0410a in the transmission contents table 0410 is selected. Then, the process goes through Step 0910 to Step 0920.

In Step 0920, searched for is a line in the entity table 0320 having the value "0602001" which is stored in the item 0411a of the "content 0409d" in the line 0410a of the transmission contents table 0410. Nevertheless, a line having the same content 0409d is not found out among the lines 0320a and 0320b. Thus, the process goes to Step 0940.

In Step 0941, obtained is the value "6743" in the "size" item 0413a in the line 0410a of the transmission contents table 0410.

In Step 0942, a region where the data of 6743 bytes can be written in a continuous region in the storage heap 0330 is searched for, whereby the region starting at the sector number "1005" and following the region 0330b is found out.

In Step 0943, the data of the "byte string of entity" item 0415a in the transmission contents table is written into the region starting at the sector number "1005" in the storage heap 0330.

In Step 0951, a new line is generated in the entity table 0320.

In Step 0952, the sector number "1005" of the write-in region used in Step 0943 is set into the "sector number" item in the line generated in Step 0951.

In Step 0953, the values of the items 0413a, 0413b, and 0413c of the line 0410a of the transmission contents table 0410 are set into the "size" item, the "expiration date" item, and the "contents ID" item in the line generated in Step 0951.

In Step 0961, a new line is generated in the presentation table 0310.

In Step 0962, a value referring to the new line generated in the entity table in Step 0951 is, set into the "entity reference" item in the line generated in Step 0961.

In Step 0963, the value of the item 0412a of the line 0410a of the transmission contents table 0410 is set into the "path name" item in the line generated in Step 0961.

Then, the process returns to Step 0900, whereby the lines 0410b and 0410c in the transmission contents table 0410 are processed similarly.

At last, in Step 0910, there is no line to be selected. Then, the process shown in Flowchart 0900' is terminated.

Described below is contents renewal in which stored contents are overwritten for the purpose of the version-up and the like of the contents.

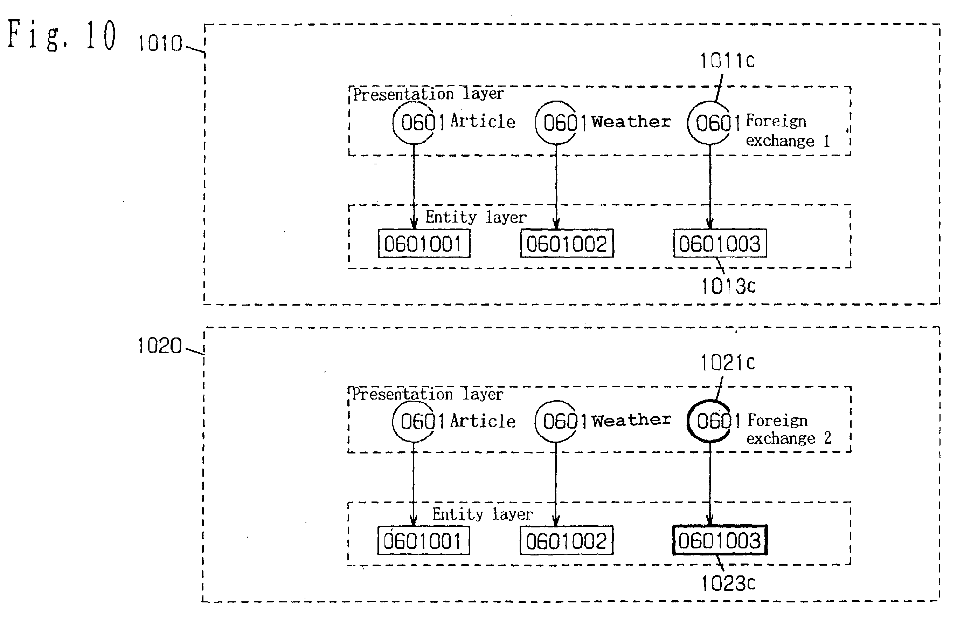

Figure 10 is a schematic diagram showing the data of the file system according to Embodiment 1 when contents are renewed.

Numeral 1010 indicates a schematic diagram of the data of the file system before contents renewal. The file system stores three contents.

Numeral 1020 indicates a schematic diagram of the data of the file system after contents renewal is applied to the Diagram 1010.

As the result of contents renewal, in the entity layer, the byte string of an entity 1013c in Diagram 1010 is overwritten and changed into an entity 1023c in Diagram 1020. However, the detailed byte strings of the entities are not shown in the figure, and hence the difference is not shown visually.

In the presentation layer, a presentation node 1011c in Diagram 1010 is changed into a presentation node 1021c in Diagram 1020. The character string written on the circle representing each presentation node indicates a path name. The path name "0601 Foreign exchange 1" is rewritten into "0601 Foreign exchange 2."

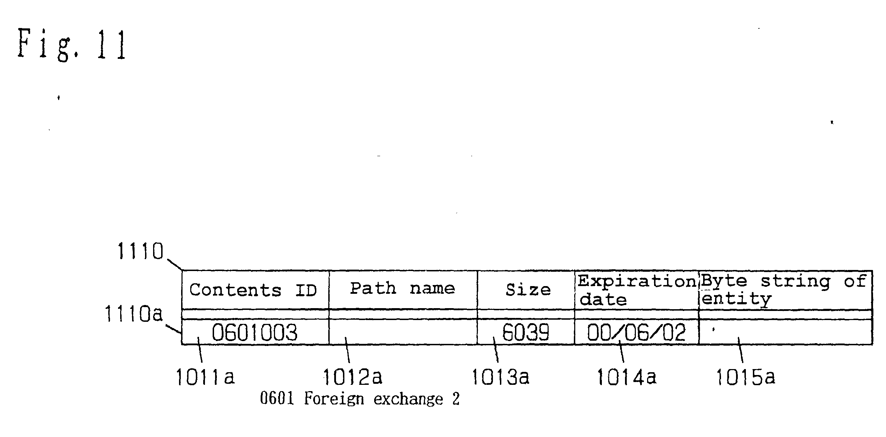

Figure 11 is a diagram showing an example of a transmission contents table for renewing contents according to Embodiment 1. When a contents table 1110 is received, the data of the file system shown in Diagram 1010 is changed into the state shown in Diagram 1020.

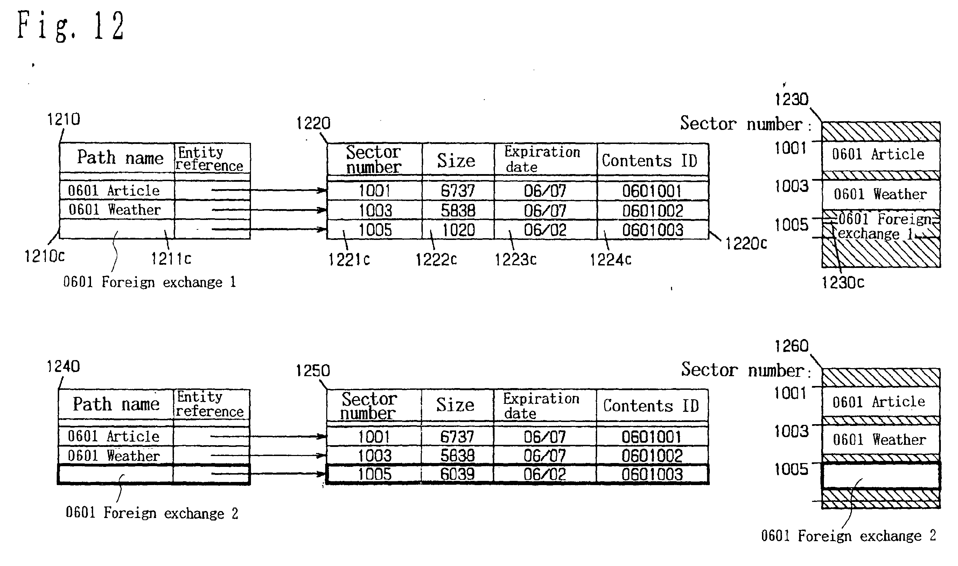

Figure 12 is a diagram showing an example of data structure according to Embodiment 1 when contents are renewed. Described below in detail are the process detail and the change in data structure during contents renewal with reference to a flowchart. The flowchart to be used here is the Flowchart 0900' for the storage changing means 0134 when a transmission contents table is received. Substantial steps alone in the flowchart are described here.

In Step 0920, searched for is a line in the entity table 1220 having the contents ID "0601003" obtained from the item 1111a in the line 1110a of the transmission contents table 1110. As a result, a line 1220c is found out in the entity table 1210.

In Step 0930, since a line having the same contents ID has been found out, the process goes to Step 0970 (that is, Steps 0970-0976).

In Step 0971, the size "6039" is obtained from the item 1113a in the line 1110a of the transmission contents table 1110.

In Step 0972, a region 1230c of the storage heap 1230 having the sector number "1005" stored in the line 1110a of the transmission contents table 1110 is released.

In Step 0973, it is determined that the data of the size "6039" can be written into the region starting at the sector number "1005." That is, since the size is "6039," two 4096-byte sectors are necessary, and hence sector numbers "1005" and "1006" need to be available. However, these two sectors are not occupied as a already stored region. Accordingly, these sectors are vacant and available. Then, the process goes to Step 0975.

In Step 0975, the position of the first sector of the write-in region in the storage heap is set to be the sector number "1005."

In Step 0976, the item 1115a in the line 1110a storing the byte string of entity in the transmission contents table is written into the storage heap starting at the sector number "1005."

In Step 0981, the line 1220c in the entity table 1220 is considered as the line in which various setting is to be carried out in the following Steps 0982 and 0983.

In Step 0982, the sector number "1005" of the first sector of the write-in region of used in Step 0976 is set into the item 1221c in the line 1220c of the entity table 1220. Here, since the sector number "1005" has been set already, this overwrite operation of the same value causes no change.

In Step 0983, the size, the expiration date, and the contents ID are obtained from the items 1113a, 1114a, and 1111a, respectively, of the transmission contents table 1110, and then set into the items 1222c, 1223c, and 1224c, respectively, in the line 1220c of the entity table 1220.

In Step 0991, the line 1210c of the presentation table 1210 corresponding to the line 1220c of the entity table 1220 is considered as the target line in which setting is to be carried out in the following Step 0992.

In Step 0992, the path name "0601 Foreign exchange 2" obtained from the item 1112a in the line 1110a of the transmission contents table 1110, and then set into the item 1211c in the line 1210c specified as the target in the presentation table 1210 in Step 0991.

The process of the change of data structure at contents renewal is completed. That is, the presentation table is change from 1210 into 1240. The entity table is change from 1220 into 1250. The storage heap is change from 1230 into 1260.

Described below is automatic contents deletion in which stored contents having a exceeded expiration date are deleted automatically.

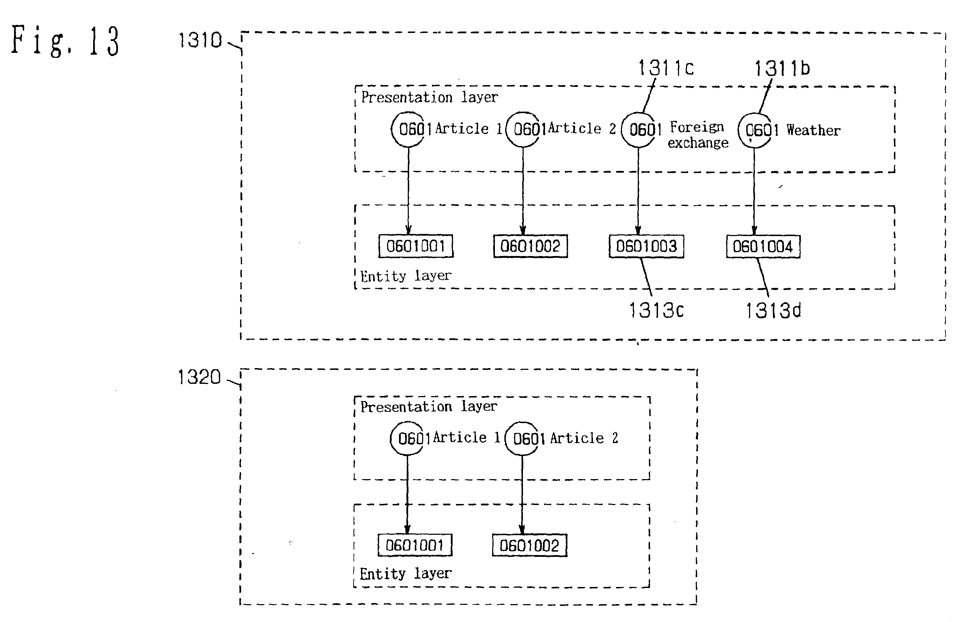

Figure 13 is a schematic diagram showing the data of the file system according to Embodiment 1 when contents are deleted automatically.

Numeral 1310 indicates a schematic diagram of the data of the file system before automatic contents deletion. The file system stores three contents.

Numeral 1320 indicates a schematic diagram of the data of the file system after automatic contents deletion is applied to the Diagram 1310.

As the result of automatic contents deletion, in the entity layer, entities 1313c and 1313d in Diagram 1310 have been deleted in Diagram 1320.

In the presentation layer, presentation nodes 1311c and 1311d in Diagram 1310 have been deleted in Diagram 1320.

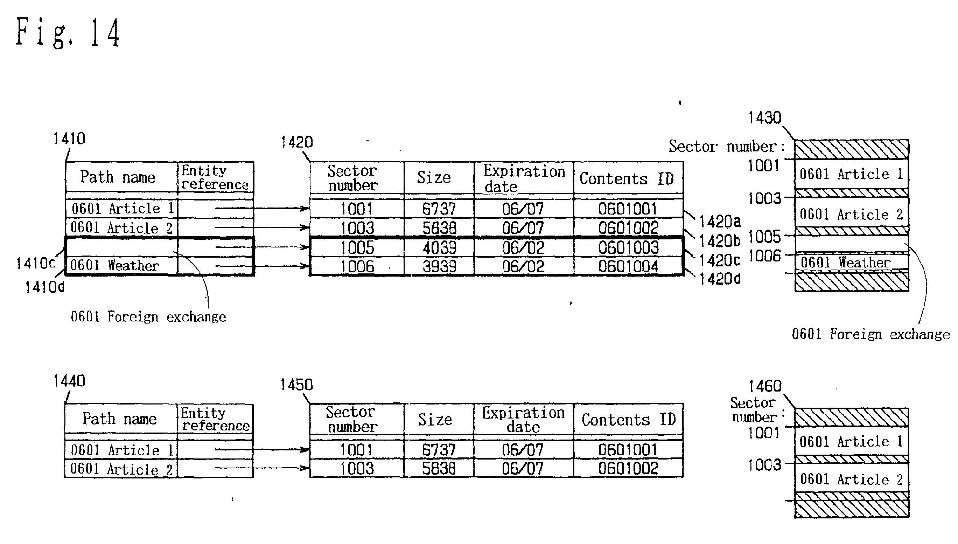

Figure 14 is a diagram showing an example of data structure according to Embodiment 1 when contents are deleted automatically. Described below in detail are the process detail and the change in data structure during automatic contents deletion with reference to a flowchart.

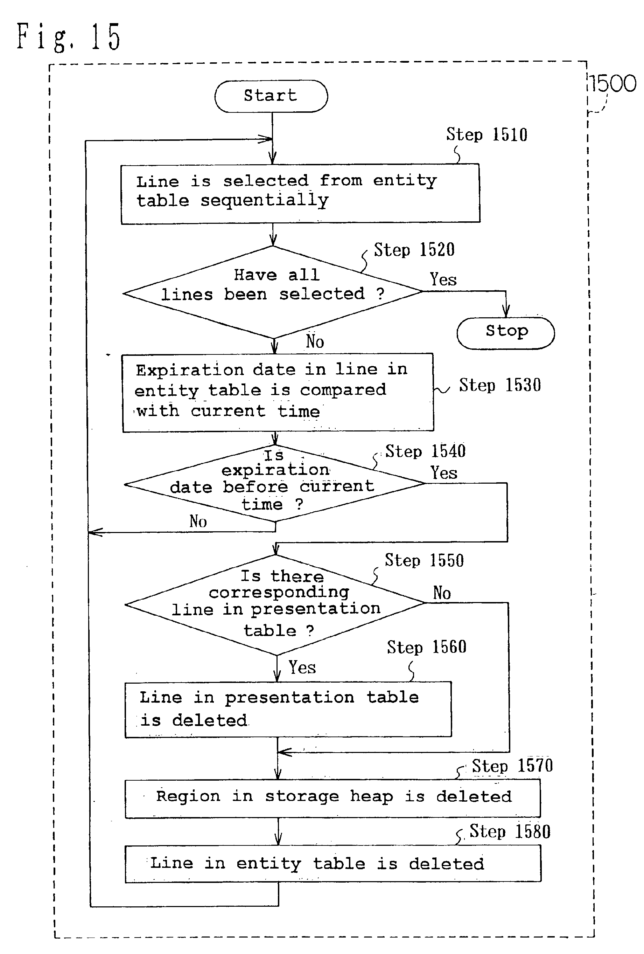

Figure 15 shows a flowchart for automatic contents deletion according to Embodiment 1. Numeral 1500 indicates a process flowchart of the storage changing means 0134 of carrying out the automatic contents deletion. The process shown in Flowchart 1500 is invoked at a frequency suitable for a desired accuracy in the date of automatic deletion (expiration date). For example, when the desired accuracy in the date of automatic deletion is one day, the above-mentioned process needs to be invoked at least once a day. Each step in Flowchart 1500 is described below.

(Step 1510) A line is selected from the entity table sequentially.

(Step 1520) When all lines have been selected already in Step 1510, and hence no line remains to be selected, the process of automatic contents deletion is terminated. When a line remains to be selected, the process goes to the following Step 1530.

(Step 1530) The value of the expiration date item in the line selected in the entity table in Step 1510 is compared with the current time.

(Step 1540) When it is determined in Step 1530 that the value of the expiration date item is before the current time, the process returns to Step 1510. Otherwise, the process goes to Step 1550.

(Step 1550) A corresponding line is searched for in the presentation table. When no line exists, the process goes to Step 1570. When a line exists, the process goes to the following Step 1560. That is, searched for in the presentation table is a line the entity reference item of which points at the line selected in Step 1510.

(Step 1560) The line found out in the presentation table in Step 1550 is deleted.

(Step 1570) In the storage heap, deleted is the region starting at the value of the sector number item in the line selected in the presentation table in Step 1510.

(Step 1580) The line selected from the entity table in Step 1510 is deleted. Then, the process returns to Step 1510.

The process shown in Flowchart 1500 is described below with reference to a specific example of the data structure shown in Figure 14.

The current time is assumed to be June 3. Then, the process shown in Flowchart 1500 is assumed to start from the state of the presentation table 1410, the entity table 1420, and the storage heap 1430.

In Step 1510, a line 1420a of the entity table 1420 is selected.

Step 1520 is skipped.

In Step 1530, the value "06/07" (indicating the date June 7) of the expiration date item in the line 1420a selected in the entity table 1420 in Step 1510 is compared with the current time June 3.

In Step 1540, since the value of the expiration date item is not before the current time, the process returns to Step 1510.

Then, in Step 1510, a line 1420b of the entity table 1420 is selected. The expiration date is "06/07" similarly to the preceding case. Thus, Steps 1510-1540 are carried out, and then the process returns to Step 1510.

In Step 1510, a line 1420c of the entity table 1420 is selected.

Step 1520 is skipped.

In Step 1530, the value "06/02" of the expiration date item in the line 1420c in the entity table 1420 is compared with the current time.

In Step 1540, since the value of the expiration date item is before the current time, the process goes to Step 1550.

In Step 1550, a line 1410c in the presentation table 1410 is found to correspond to the line 1420c in the entity table 1420. Thus, the process goes to Step 1560.

In Step 1560, the line 1410c in the presentation table 1410 is deleted.

In Step 1570, in the storage heap 1430, deleted is the region 1430c starting at the value "1005" of the sector number item in the line 1420c in the presentation table 1420.

In Step 1580, the line 1420c in the presentation table 1420 is deleted. Then, the process returns to Step 1510.

Then, in Step 1510, a line 1420d of the entity table 1420 is selected. The expiration date is "06/02" similarly in the line 1420c. Thus, the line 1420d is automatically deleted similarly.

As a result, the lines 1410c and 1411d are deleted, whereby the presentation table 1410 is changed into the presentation table 1440. The lines 1420c and 1420d are deleted, whereby the entity table is changed into the entity table 1450. The regions 1430c and 1430d are deleted, whereby the storage heap is changed into the storage heap 1460.

Although description using a flowchart has been omitted, when a path name in the presentation layer is changed, the name of the content is changed arbitrarily. Even after the change of path names, the processes of addition, renewal, and automatic deletion of contents can be carried out. This is because the entity layer which is the processing target of broadcasting is managed using, as identifiers, contents IDs instead of path names.

Stored path names may be character strings indicating hierarchical directories. In this case, from the viewpoint of a user, each content exists in any directory among the hierarchical directories.

For example, when a path name corresponding to a hierarchical directory is changed, the directory to which a content belongs is changed. In other words, the content is moved from a directory to another directory. Also in this case, the processes of addition, renewal, and automatic deletion of contents do not affect the process in the entity layer where the contents are identified with contents IDs. That is, even when a user has moved a content from a directory to another directory, the processes of addition, renewal, and automatic deletion of contents can be carried out normally without suffering from any influence.

As such, according to Embodiment 1, the invention comprises: an entity layer where contents for'the control of stored data by broadcasting are identified with contents IDs; and a presentation layer where the contents are identified with path names and where a user can access the contents arbitrarily. By virtue of this, despite that the invention is based on a file system in which the stored contents are controlled by broadcasting, the name change and the move of the contents can be carried out arbitrarily in a manner similar in the file systems of UNIX OS and Windows OS. Further, the contents can be duplicated for backup and the like, and files can be created by a user. When a path name is changed, a content, for example, controlled by broadcasting is moved into another directory arbitrarily. Even after the move, the control, such as renewal and automatic deletion, carried out by broadcasting is carried out regularly.

### (Embodiment 2)

In addition to the functions of the broadcast system according to Embodiment 1, a broadcast system according to Embodiment 2 has the functions of arbitrarily deleting, copying (reproducing), and moving the contents stored in the file system in the reception apparatus, similarly to the case of files in a personal computer.

In addition to the features of the broadcast system according to Embodiment 1, the broadcast system according to Embodiment 2 comprises: Step 1 in which a user specifies a path name; Step 2 of searching a presentation layer for a presentation node having the path name specified in Step 1; Step 3 of copying an entity referred to by the presentation node found out in Step 2; Step 4 of setting the contents ID of the entity copied in Step 3, into an invalid value; Step 5 of copying the presentation node found out in Step 2; and Step 6 of setting the presentation node copied in Step 5 such as to refer to the entity copied in Step 3.

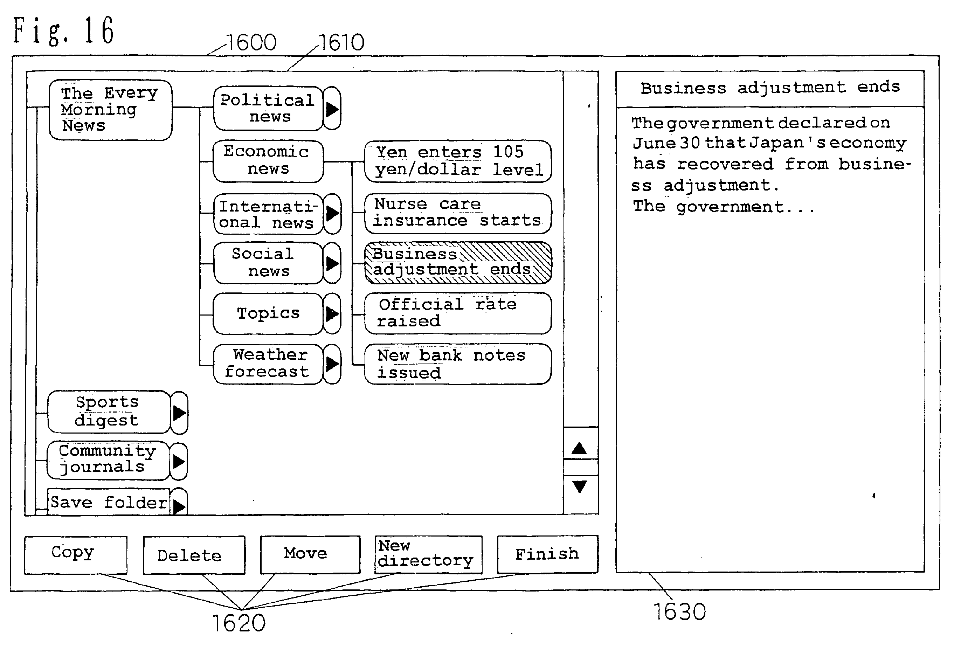

Figure 16 is a diagram showing an example of a GUI screen according to Embodiment 2. Numeral 1600 indicates the entirety of the GUI screen. The GUI screen 1610 is output by a browser 0138, and thereby displayed on outputting means 0139.

Numeral 1610 indicates a window for displaying the hierarchical structure of the contents stored in a reception apparatus, in the form of a tree. Each rectangle having round corners within the window indicates a folder or a content

Numeral 1620 indicates the group of operation buttons for the hierarchical structure of the contents. For example, when a user specifies a content and then pushes a "delete" button, this operation causes a request for deleting the specified content. Alternatively, when the user specifies a content and then pushes a "copy" button, this operation causes a request for copying the specified content.

Numeral 1630 indicates a window for browsing the contents stored in the reception apparatus. The window 1630 displays the browsing screen for a content selected in the window 1610 for displaying the hierarchical structure of the contents.

The copying of a content in response to user's operation is described below. When a user operates the GUI screen 1610 and thereby specifies explicitly a content to be copied, the copying of the content is invoked in response to the user's operation. That is, when the user operates inputting means 0137 and thereby provides an instruction to the browser 0138, the instruction goes through the browser 0138 to storage changing means 0134, whereby a process in the storage changing means 0134 is invoked.

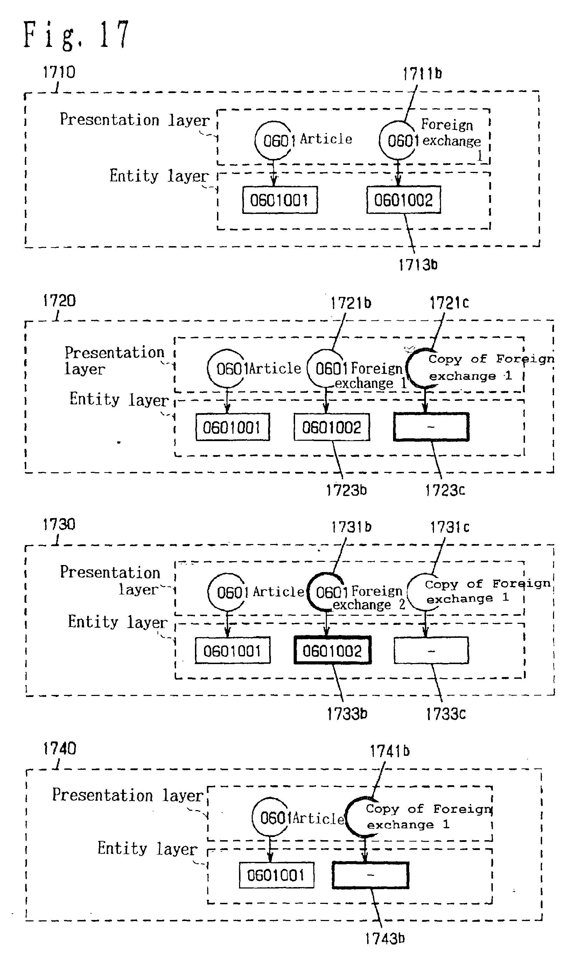

Figure 17 is a schematic diagram showing the data of the file system according to Embodiment 2 when a user copies a content.

Diagram 1710 shows the state before a user copies a content. Diagram 1720 shows the state that a copying instruction for a content corresponding to a presentation node 1711b and an entity 1713b has been issued in Diagram 1710, and that the instruction has been processed.

A presentation node 1721c is generated by copying the presentation node 1721b (that is, 1711b). At the same time, an entity 1723c is generated by copying the entity 1723b (that is, 1713b). The entity 1723c generated by the copying is not provided with a contents ID, and accordingly is an entity independent of the original entity 1723b.

Diagram 1730 shows the state that the content corresponding to the original presentation node 1721b (that is, 1731b) and entity 1723b (that is, 1733b) has been renewed.

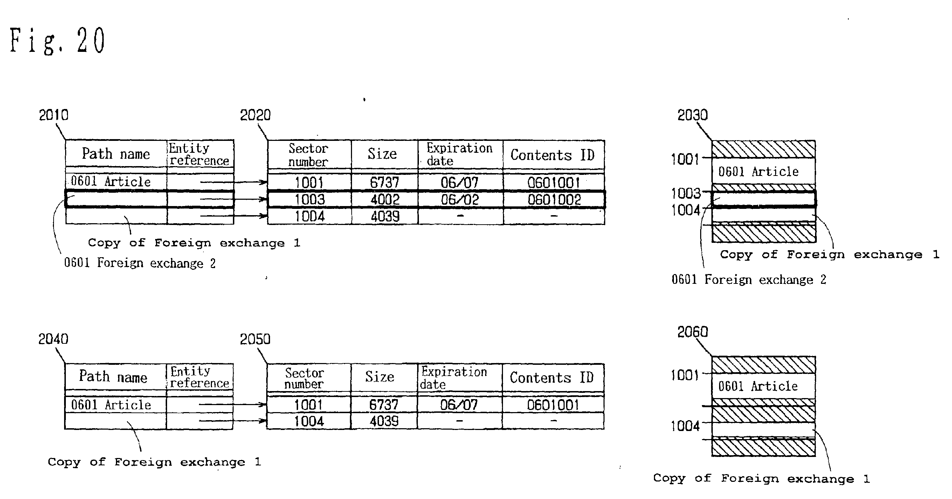

This process is described below with reference to a transmission contents table having caused this renewal. Figure 20 shows the transmission contents table having caused this change from Diagram 1720 to Diagram 1730. Numeral 2010 indicates the transmission contents table.

The process for the case that the transmission contents table 2010 is received is carried out according to the Flowchart 0900' described above. The value of the contents ID in the line of the transmission contents table is "0601002," which is identical to that in the line 1750b of the entity table 1750. Accordingly, the stored content corresponding to the line 1750b is renewed. At the same time, the path name "0601 Foreign exchange 1" is overwritten and changed into "0601 Foreign exchange 2."

At this time, as for the copied content, neither the entity 1731c nor the presentation node 1733c is changed. As such, the entity of the copied content is independent of the original entity. Accordingly, renewal operation does not affect the copied content.

Diagram 1730 shows the state that the original content 1731b has been deleted automatically at a time later.

Also in this case, the entity of the copied content is independent of the original entity, and accordingly still remains without suffering from an influence of the automatic deletion of the original.

As such, in the file system according to Embodiment 2, when a user copies a content, the content is copied into an independent entity. Accordingly, the copied content is advantageously not affected by a content changed in the reception of a transmission contents table or in automatic deletion.

In a method different from the invention in which no entity is copied when a user copies a content, it is necessary for a reception apparatus to "rush" to prepare an entity for the user copy in case of automatic deletion or renewal. The process of copying an entity composed of a byte string of a large size causes a load to the reception apparatus, and in some cases, the load is observed by the user. Nevertheless, the timing that the process of entity copying is invoked is not obviously predictable to the user.

In contrast, in the invention, when a user issues a copying instruction, the entity is copied, including the physical copying of the byte string. In this case, even when the load in the reception apparatus is observed by the user, the user can obviously understand the causality.

The process of copying a content in response to user's operation shown in Figure 17 is described below in detail with reference to an example of data structure.

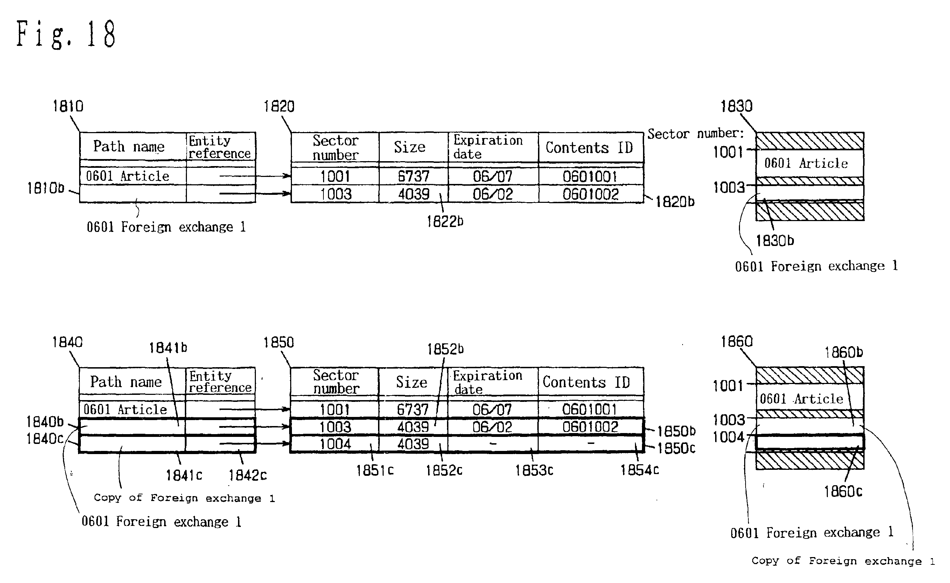

Figure 18 is a diagram showing an example of data structure according to Embodiment 2 when a user copies a content.

A presentation table 1810, an entity table 1820, and a storage heap 1830 show the state before a user copies a content. Apresentation table 1840, an entity table 1850, and a storage heap 1860 show the state after the user copies a content. Here, the copying operation is assumed to be applied to a content corresponding to a line 1810b in the transmission contents table 1810.

When the user copies the content, in the presentation table 40, a line 1840c is generated by copying the line 1840b (that is, the line 1810b). In the entity table, a line 1850c is generated by copying the line 1850b (that is, the line 1820b). In the storage heap, a region 1860c is generated by copying the region 1860b (that is, the region 1830b).

This process of copying is described below with reference to flowcharts.

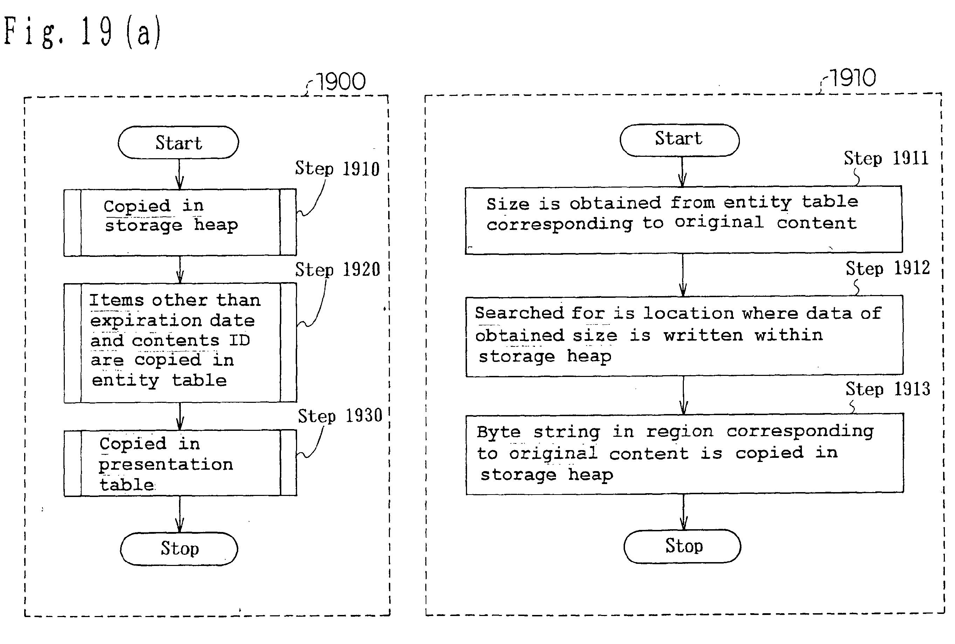

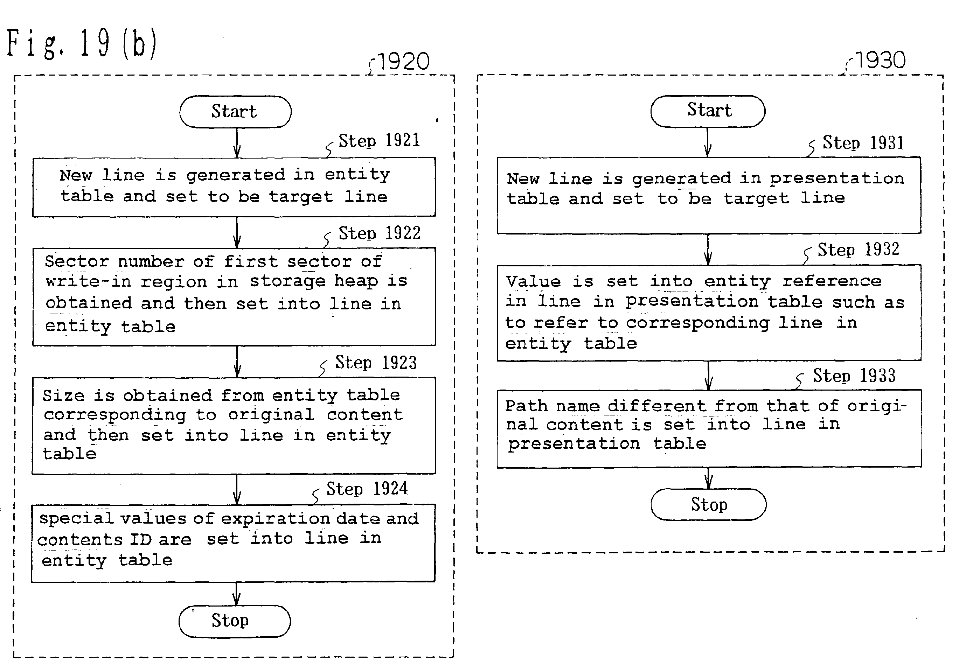

Figures 19 (a) and 19 (b) are process flowcharts of the storage changing means according to Embodiment 2 when a user copies a content.

(Step 1910) The byte string in the storage heap corresponding to the original content is written into a new region in the storage heap.

The Step 1910 is described below in detail with reference to Flowchart 1910.

(Step 1911) The "size" item is obtained from the line of the entity table corresponding to the original content.

(Step 1912) A location where the data of the size obtained in Step 1911 can be written in a continuous region in the storage heap is searched for, whereby the region is set to be a write-in region.

(Step 1913) The byte string in the storage heap corresponding to the original content is written into the write-in region found out in Step 1912, whereby the process of copying is carried out.

Then, the process of Step 1910 is completed.

(Step 1920) A new line is added to the entity table, and then each item other than the expiration date and the contents ID is set by copying or the like.

The Step 1920 is described below in detail with reference to Flowchart 1920.

(Step 1921) A new line is generated in the entity table. Each item of this line is set in the following Steps 1922 and 1923.

(Step 1922) Obtained is the sector number of the first sector of the write-in region of the storage heap used in Step 1910 (more specifically, Step 1913). The obtained sector number is set into the "sector number" item in the line generated in the entity table in Step 1921.

(Step 1923) The "size" is obtained from the line of the entity table corresponding to the original content, and then set into the corresponding item in the line generated in the entity table in Step 1921.

(Step 1924) In the line generated in the entity table in Step 1921, each of the expiration date and the contents ID is set to be a special value outside the range of an ordinary value. Each special value indicates that each of these items stores no meaningful value.

Then, the process of Step 1920 is completed.

(Step 1930) A new line is added to the presentation table, and then each item is set by copying or the like. Then, the process returns to Step 1900.

The Step 1930 is described below in detail with reference to Flowchart 1930.

(Step 1931) Anew line is generated in the presentation table. Each item of this line is set in the following steps.

(Step 1932) A value is set into the "entity reference" item in the line generated in the presentation table in Step 1931 so as to refer to the new line generated in the entity table in Step 1920 (more specifically, Step 1921).

(Step 1933) The path name is obtained from the line of the presentation table corresponding to the original content. The obtained path name is set into the "path name" item in the line generated in the presentation table in Step 1931.

Then, the process of Step 1960 is completed.

The change in the data structure when a user copies a content as shown in Figure 18 is described below again with reference to the flowcharts shown in Figures 19(a) and 19(b).

In Step 1911, the size "4039 bytes" is obtained from the size item 1822b in the line 1820b of the entity table 1820 corresponding to the original content.

In Step 1912, a location for a new region of 4039 bytes is searched for in the storage heap 1830. Then, it is found that the data can be stored starting at a sector number "1004."

In Step 1913, the byte string in the region 1830b in the storage heap 1840 is copied starting at the sector number "1004," whereby a region 1860c is generated.

In Step 1921, a new line 1850c is generated in the entity table 1850.

In Step 1922, the sector number "1004" used in Step 1913 is stored into the sector number item 1851c in the line 1850c generated newly in the entity table 1850.

In Step 1923, the size is obtained from the item 1852b, and then written into the item 1852c.

In Step 1924, each of the expiration date item 1853c and the contents ID item 1854c is set to be a special value.

In Step 1931, a new line 1840c is generated in the presentation table 1840.

In Step 1932, a value is set into the entity reference item 1842c in the presentation table 1840 so as to refer to the new line 1850c in the entity table 1850.

In Step 1933, on the basis of the item 1840b, the path name item 1840c in the new line 1840c in the presentation table 1840 is set to be another name. For the purpose of this, a user may input an appropriate character string. Alternatively, a character string "(copy)" may be automatically appended at the end of the character string in the item 1840b. In the figure, a user inputs a character string "Copy of Foreign exchange 1."

Figure 20 is a diagram showing a second example of data structure according to Embodiment 2 when a user copies a content.

A presentation table 2010, an entity table 2020, and a storage heap 2030 show the state that the original content has been renewed starting from the presentation table 1840, the entity table 1850, and the storage heap 1860 shown in Figure 18.

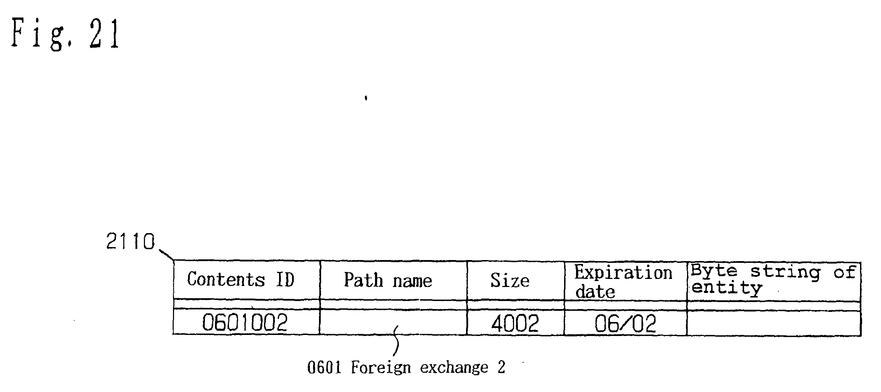

A transmission contents table having caused this renewal is described below. Figure 21 is a diagram showing an example of a transmission contents table received when a user copies a content according to Embodiment 2. A content having a contents ID "0601002" exists in the line 1850b of the entity table 1850. Accordingly, the content corresponding to this line is to be renewed. The process of the content renewal is carried out according to the above-mentioned Flowchart 0900' shown in Figure 9(a), and hence detailed description is omitted.

A presentation table 2040, an entity table 2050, and a storage heap 2060 show the state that the original content has been deleted by automatic deletion. The process of the automatic deletion of the content is carried out according to the above-mentioned Flowchart 1500 shown in Figure 15, and hence detailed description is omitted.

The process of deleting a content in response to user's operation is described below. A target content in this case is not one copied by user's operation, but one generated in response to a transmission contents table or the like. The user-operated deletion of a content copied by user's operation is described later.

Contents deletion by user's operation is invoked when a user operates the GUI screen 1610 and thereby explicitly specifies a content to be deleted. That is, when the user operates the inputting means 0137 and thereby provides an instruction to the browser 0138, the instruction goes through the browser 0138 to the storage changing means 0134, whereby a process in the storage changing means 0134 is invoked.

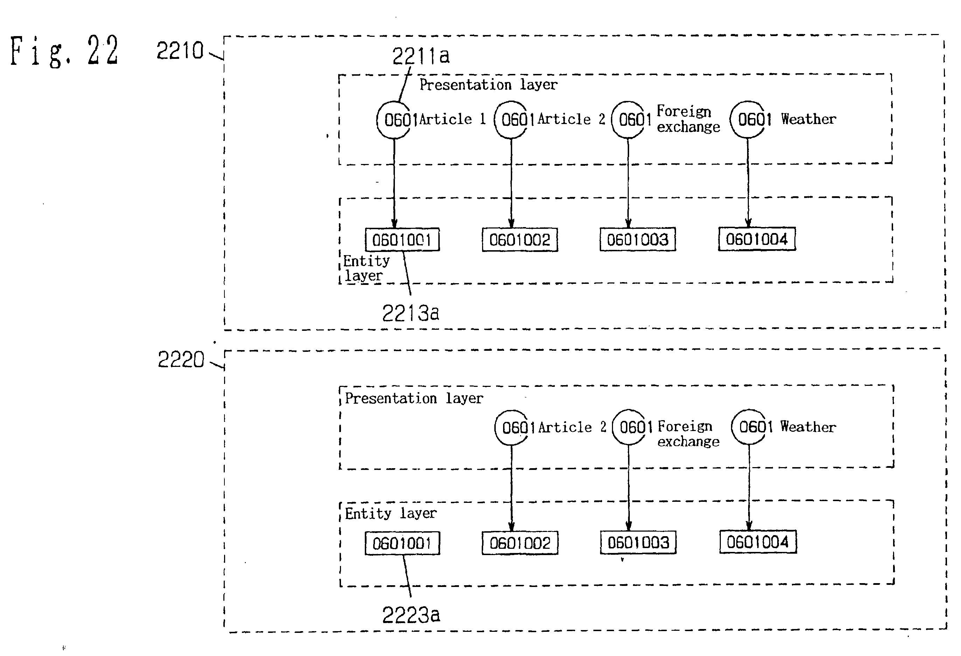

Figure 22 is a schematic diagram showing the data of the file system according to Embodiment 2 when a user deletes a content.

Diagram 2210 shows the state before a user deletes a content, while Diagram 2220 shows the state after the user deletes a content. In Diagram 2210, the user requests the deletion of a content corresponding to a presentation node 2211a and an entity 2213a.

As a result, in Diagram 2220, the presentation node is deleted. However, even after the user has deleted the content, the entity 2223a is not deleted and still remains.

As such, the file system according to Embodiment 2 is characterized in that when a user deletes a content, the presentation node in the presentation layer is solely deleted, but that the entity in the entity layer is not deleted.

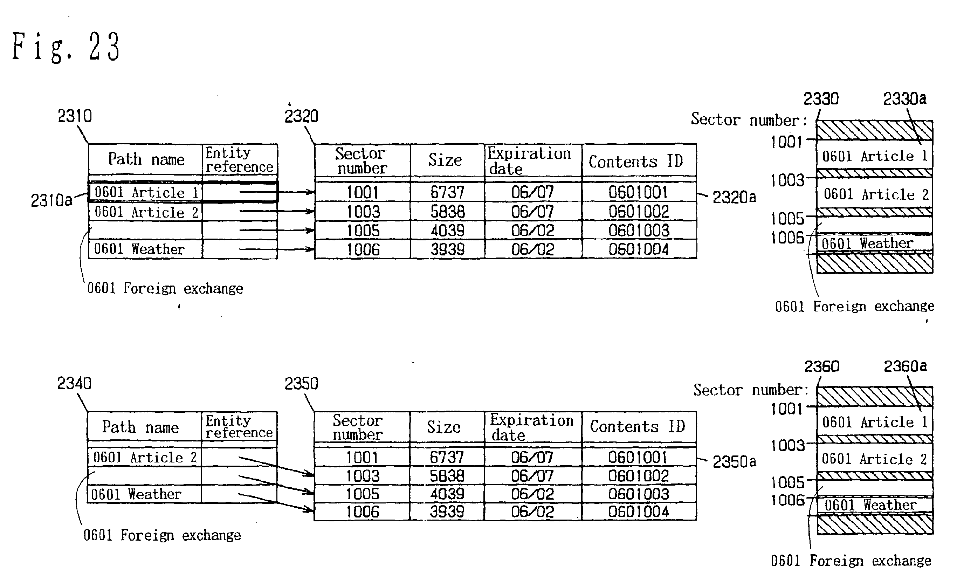

Figure 23 is a diagram showing an example of data structure according to Embodiment 2 when a user deletes a content.

A presentation table 2310, an entity table 2320, and a storage heap 2330 show the state before the user deletes a content. A presentation table 2340, an entity table 2350, and a storage heap 2360 show the state after the user deletes a content.

When the user deletes a content, the line 2310a in the presentation table 2310 is solely deleted. That is, the corresponding entity line 2320a in the entity table 2320 is not deleted and still remains as a line 2350a in the entity table 2350. Similarly, the corresponding region 2330a in the storage heap 2330 is not deleted and still remains as a region 2360a in the storage heap 2360.

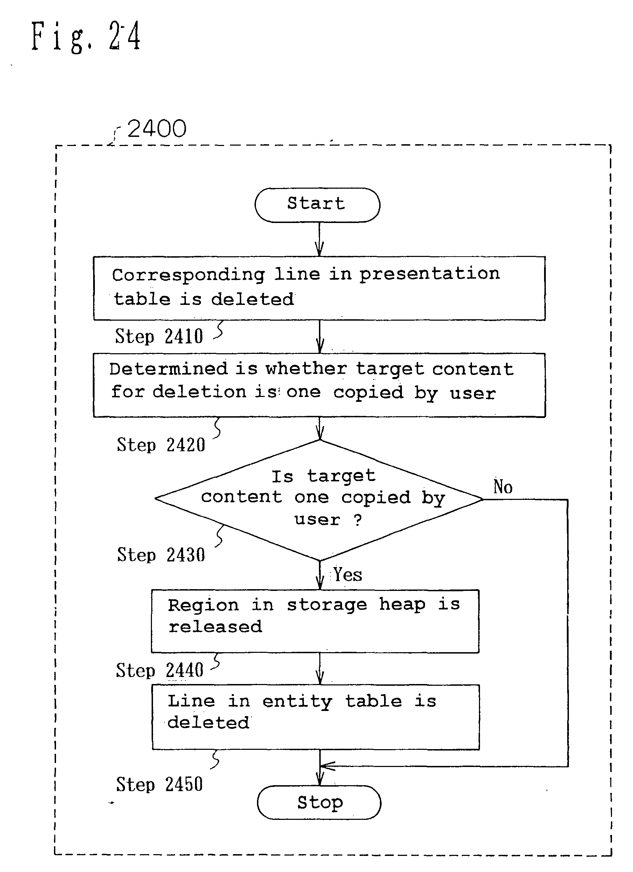

Described below is a process flowchart of the storage changing means 0134 when a user deletes a content copied by user's operation. Figure 24 is a diagram used for the description of the process flowchart when a user deletes a content copied by user's operation. Numeral 2400 indicates the process flowchart of the storage changing means 0134 of deleting a user's content.

(Step 2410) Deleted is a line in the presentation table corresponding to the target content for deletion.

(Step 2420) It is determined whether the target content for deletion is one copied by user's operation or not. Contents copied by user's operation have a special value in the contents ID. This permits the determination.

(Step 2430) When it is determined in Step 2420 that the target content for deletion is not one copied by user's operation, the process of contents deletion by the user is terminated. Otherwise, the process goes to Step 2440.

(Step 2440) In the storage heap, a region corresponding to the target content for deletion is released.

(Step 2450) In the entity table, a line corresponding to the target content for deletion is deleted.

In Figures 22 and 23, the target content for deletion is not one copied by user's operation. Accordingly, in Flowchart 2400, the process stops at Step 2430, and hence Step 2410 is solely executed on a substantial basis. Accordingly, in terms of data structure, a line in the presentation table is solely deleted, whereas the entity table and the storage heap are unchanged. In terms of the diagrams of the file system, a presentation node is solely deleted, whereas the entity is not deleted.

The user-operated deletion of a content copied by user's operation is described below.

The process by the storage changing means is carried out according to the above-mentioned Flowchart 2400 similarly to the process for a content not copied by user's operation. Thus, the fact whether the target content for deletion is one copied by user's operation or not is determined at Step 2430 in Flowchart 2400. Accordingly, the operation on the GUI screen 1610 is common to these cases.

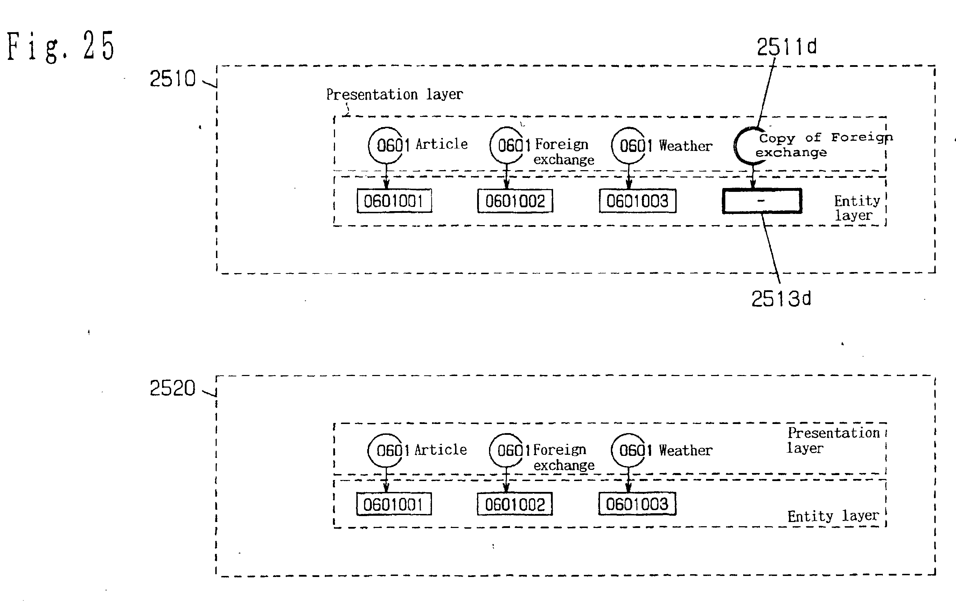

Figure 25 is a schematic diagram showing the data of the file system according to Embodiment 2 when a user deletes a copied content.

Diagram 2510 shows the state before a user deletes a copied content, while Diagram 2520 shows the state after the user deletes a copied content.

In Diagram 2510, a user requests the deletion of a content corresponding to a presentation node 2511d and an entity 2513d.

As a result, the presentation node 2511d and the entity 2513d are deleted, whereby the situation becomes as shown in Diagram 2520. The difference from the case of deletion of a content not copied by user's operation shown in Figures 22 and 23 is that the entity 2513d is also deleted at the same time.

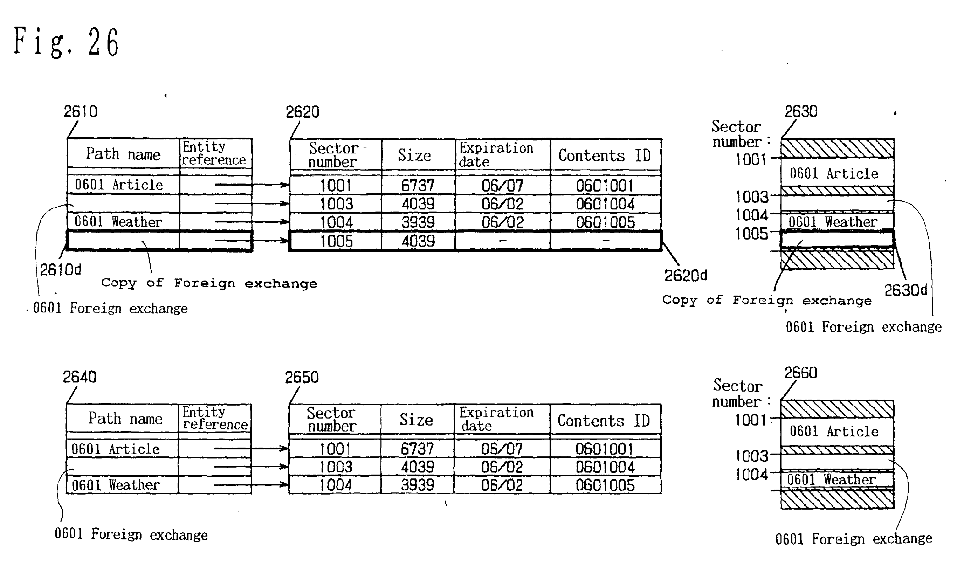

Figure 26 is a diagram showing an example of data structure according to Embodiment 2 when a user deletes a copied content.

The change in data structure is described below with reference to Flowchart 2400.

In Step 2410, a line 2610d in the presentation table 2610 id deleted.

In Step 2420, since the contents ID in the entity table 2620 has a special value (themark "-" in the figure indicates the special value), it is determined that the target content is one copied by user's operation.

In Step 2430, since the target content is one copied by user's operation, the process goes to Step 2440.

In Step 2440, in the storage heap 2630, a region 2630d is released.

In Step 2450, in the entity table 2620, a line 2620d is deleted.

Then, the process is terminated.

Thus, according to Embodiment 2, in addition to the effects achieved by Embodiment 1, a user can delete and/or copy the stored contents arbitrarily. Further, contents controlled by broadcasting and data generated by user's copy operation and the like can be managed simultaneously within the same list. The data (contents) copied by the user can remain regardless of the expiration date of the original contents.

### (Embodiment 3)

In addition to the functions of the broadcast system according to Embodiment 2, a broadcast system according to Embodiment 3 has the functions that a plurality of users can be registered to reception apparatus, that contents different for each user can be stored, and that operation, such as copy and deletion, different for each user can be carried out.

In addition to the features of the broadcast system according to Embodiments 1 and 2, the broadcast system according to Embodiment 3 can store contents different for each of a plurality of users registered to a reception apparatus (the same or a different path name can be used for each user). That is, the broadcast system comprises: Step 1 in which when a contents ID, a path name, and an entity are received, the received entity is added to an entity layer; Step 2 of considering each of all the users sequentially; and Step 3 of adding a presentation node having the received path name and referring to the entity added in Step 1, in a presentation layer corresponding to the user considered in Step 2, and after that, of returning to Step 2.

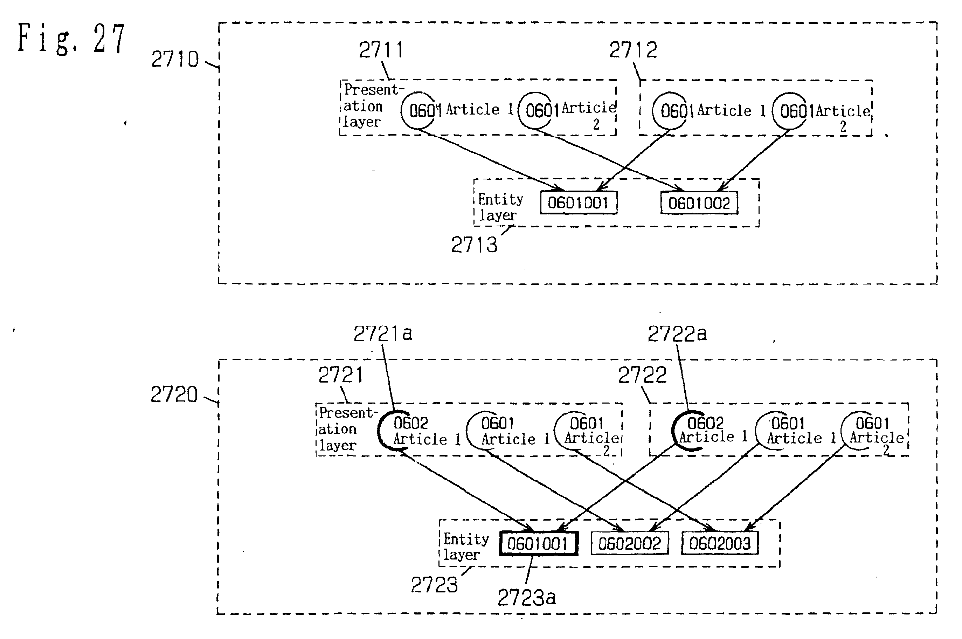

Figure 27 is a schematic diagram showing the data of the file system according to Embodiment 3 capable of treating a plurality of users, when a content is added.

Numeral 2710 indicates a diagram before a content is added.

In Diagram 2710, an entity layer 2713 corresponds to two presentation layers 2711 and 2712. Each presentation layer corresponds to a separate user. When and only when a presentation node exists in one's own presentation layer, the user observes that the content exists in the storing means 0135. That is, even in case that an entity exists in the entity layer, when a corresponding presentation node does not exist in a user's presentation layer, the user observes as if the content does not exist. This situation is independent of the fact that a presentation node corresponding to the entity exists in another user's presentation layer.

The presentation layers can be provided in the number of the users, and the process can be carried out in a similar data structure and a processing flowchart. However, two users are assumed in the following description for simplicity. Each of Embodiments 1 and 2 is a special case of Embodiment 3 for a single user. Accordingly, the data structure and the processing flowchart in the special case of Embodiment 3 for a single user are identical to those in Embodiments 1 and 2.

Numeral 2720 indicates a diagram after a content is added to the state shown in Diagram 2710. An entity 2723a is added in an entity layer 2323, while two presentation nodes 2721a and 2722a are added in presentation layers 2721 and 2722, respectively.

The entity storing the byte string is single regardless of the number of users (that is, the number of presentation layers). This avoids the duplication of the process by the number of users. Accordingly, the capacity of the storing means 0135 is used efficiently, and the processing time of write-in remains constant even when the number of users increases.

Described below is an example of data structure according to Embodiment 3 capable of treating a plurality of users, when a content is added.

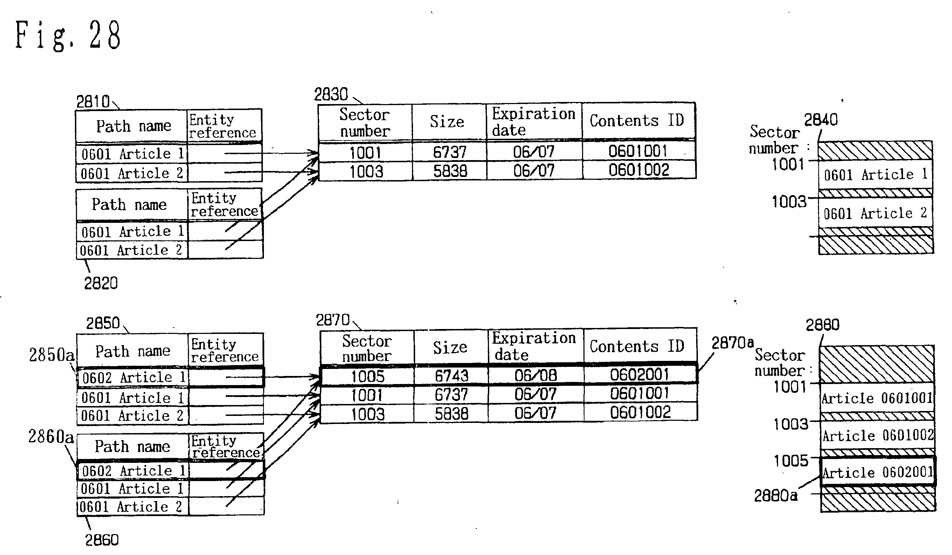

Figure 28 is a diagram showing an example of data structure according to Embodiment 3 when a content is added. Figure 28 is an example of data structure for implementing the diagrams shown in Figure 27.

Presentation tables 2810 and 2820, an entity table 2830, and a storage heap 2840 correspond to those shown in Diagram 2710 of Figure 27. Presentation tables 2850 and 2860, an entity table 2870, and a storage heap 2880 correspond to those shown in Diagram 2720 of Figure 27.

When a content is added, a line 2850a is added in the presentation table 2850, while a line 2860a is added in the presentation table 2860. A line 2870a is added in the entity table 2870, while a region 2880a is added in the storage heap 2880.

The operation when a transmission contents table is received in Embodiment 3 is described below in detail with reference to a flowchart.

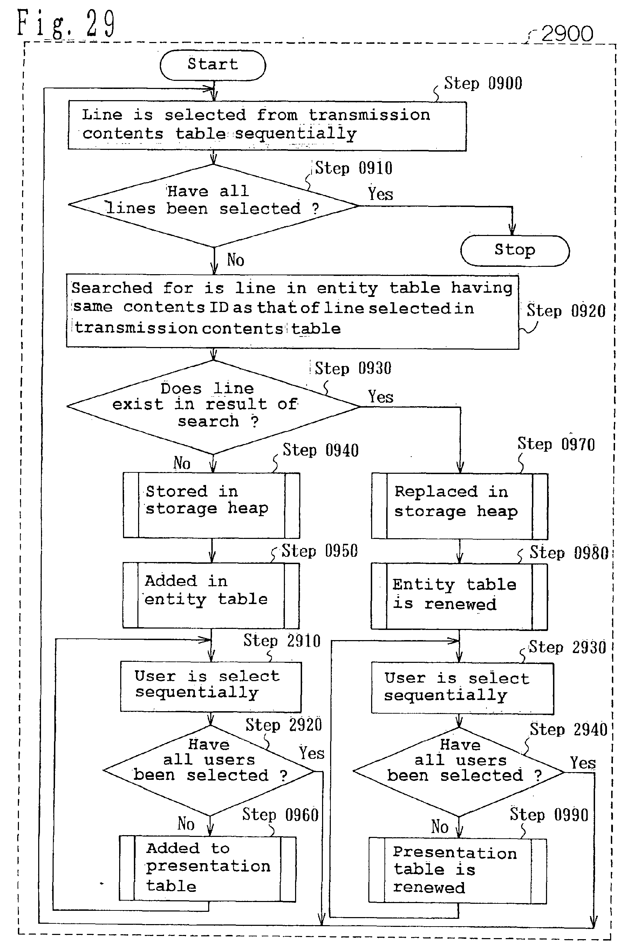

Figure 29 a diagram used for the description of a process flowchart according to Embodiment 3 when a transmission contents table is received. Numeral 2900 indicates the process flowchart of the storage changing means 0134 when a contents table is received. Figure 29 is similar to the above-mentioned Flowchart 0900' showing the process when a transmission contents table is received in Embodiment 1. Thus, in Flowchart 2900, like steps to Flowchart 0900' are designated by like numerals.

The difference of Flowchart 2900 from Flowchart 0900' is that Steps 0960 and 0990 are carried out for all users. More specifically, Steps 2910 and 2920 are added to the part of Step 0960, while Steps 2930 and 2940 are added to the part of Step 0990. By virtue of this, Steps 0960 and 0990 are repeated by the number of users. Here, the presentation table used in Steps 0960 and 0990 is that of the current user selected in Step 2910 or 2930.

In Flowchart 0900', the process on the presentation table is carried out only in Steps 0960 and 0990. The process in these steps does not affect the other steps. Accordingly, the original process has been expanded such as to be carried out for all the presentation tables existing by the number of users.

Described below is contents renewal according to Embodiment 3 capable of treating a plurality of users.

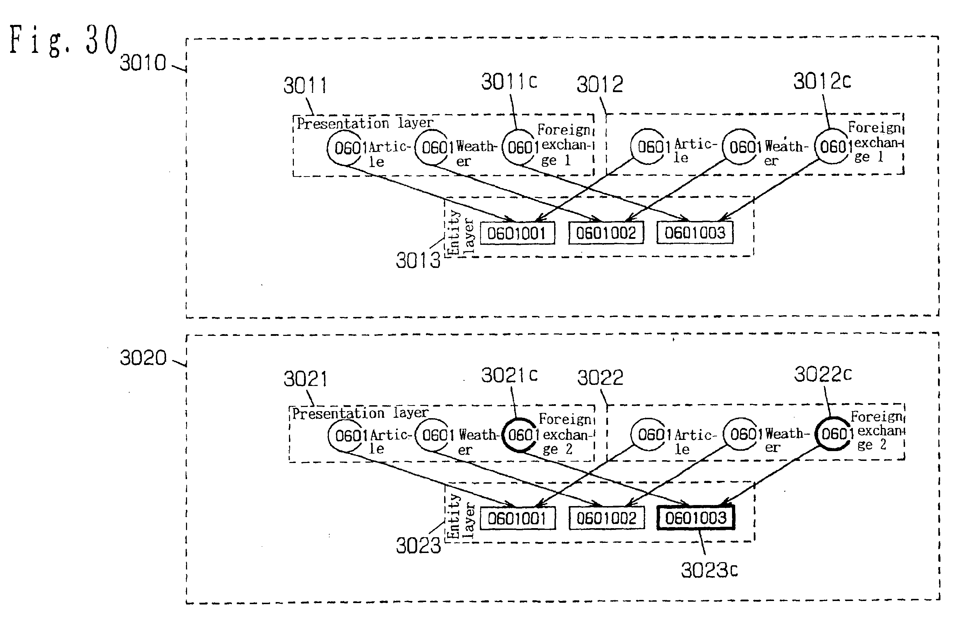

Figure 30 is a schematic diagram showing the data of the file system according to Embodiment 3 when a content is renewed.

Numeral 3010 indicates a diagram before contents renewal, while numeral 3020 indicates a diagram after contents renewal. In Diagram 3020, a presentation node 3021c is renewed in a presentation layer 3021, while a presentation node 3022c is renewed in a presentation layer 3022, and an entity 3023c is renewed in an entity layer 3023.

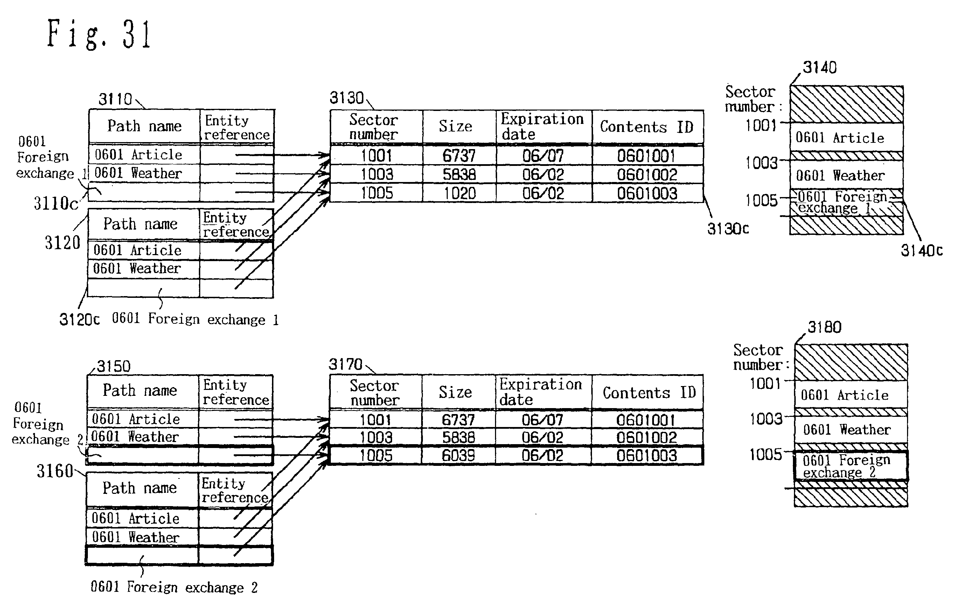

Figure 31 is a diagram showing an example of data structure according to Embodiment 3 when a content is renewed.

Presentation tables 3110 and 3120, an entity table 3130, and a storage heap 3140 correspond to those shown in Diagram 3010 of Figure 30. Presentation tables 3150 and 3160, an entity table 3170, and a storage heap 3180 correspond to those shown in Diagram 3020 of Figure 30.

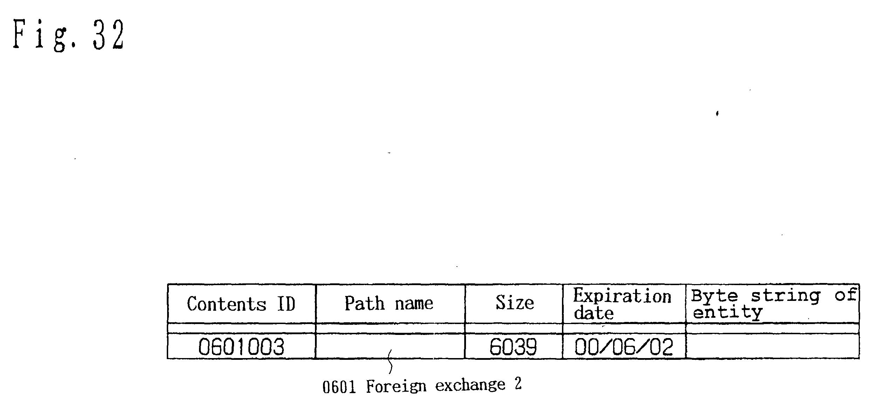

Figure 32 is a diagram showing an example of a transmission contents table for adding a content according to Embodiment 3. The value of the contents ID transmitted is "060103," which is identical to that in a line 3130c in the entity table 3130. Accordingly, the line 3130c in the entity table 3130 is changed. At the same time, the corresponding region 3140c in the storage heap 3140 is changed, while two corresponding lines 3110c and 3120c in the presentation tables are changed.

The process of contents renewal is carried out according to the above-mentioned Flowchart 2900 shown in Figure 29. Similarly, the difference from Flowchart 0900' is only that the process on the presentation layers is repeated by the number of users. Thus, the process is carried out similarly.

Described below is automatic contents deletion according to Embodiment 3 capable of treating a plurality of users.

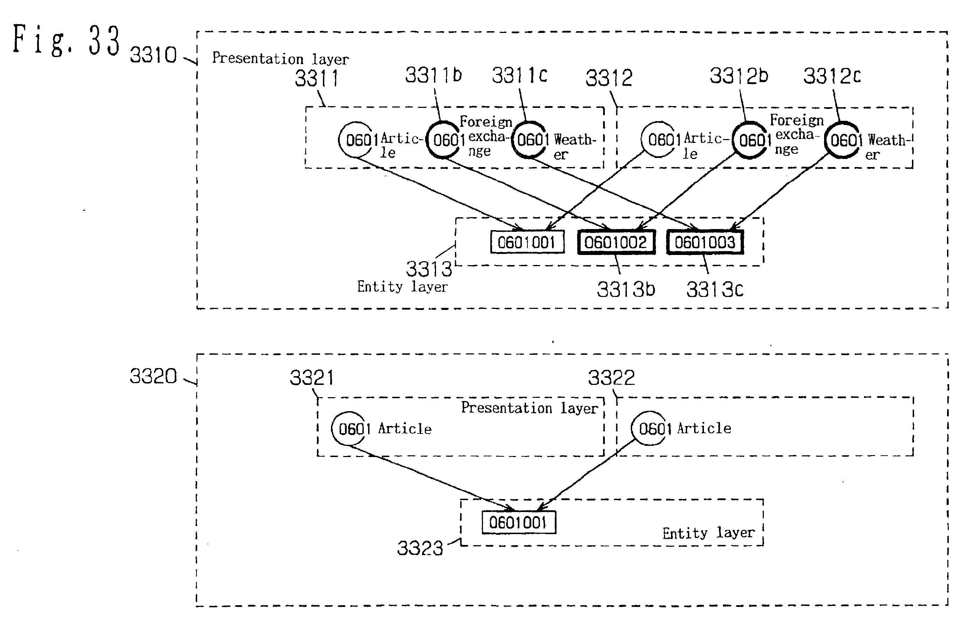

Figure 33 is a schematic diagram showing the data of the file system according to Embodiment 3 when contents are deleted automatically.

Numeral 3310 indicates a diagram before automatic contents deletion, while numeral 3320 indicates a diagram after automatic contents deletion. In presentation layers 3311 and 3312, presentation nodes 3311b and 3311c and 3312b and 3312c are deleted, respectively. In the only entity layer 3313, entities 3313b and 3313c are deleted.

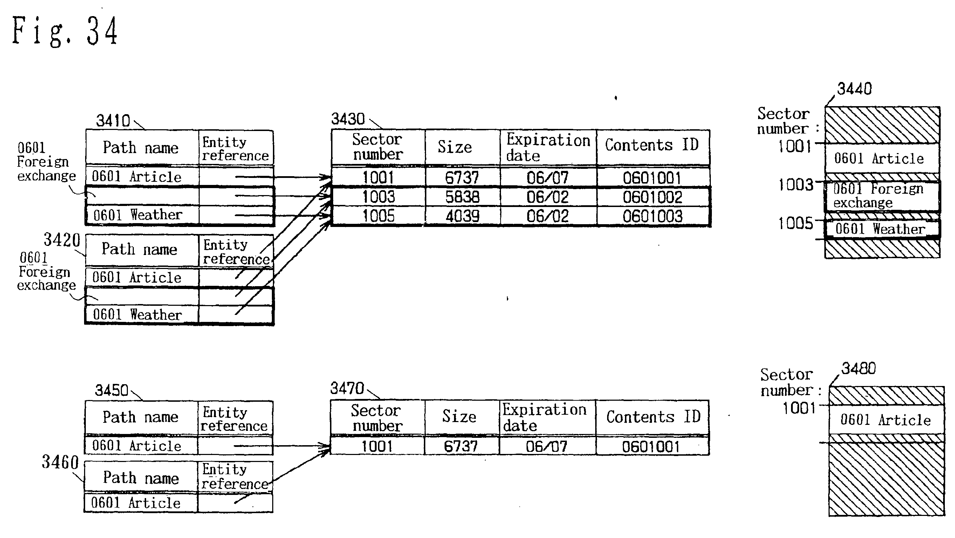

Figure 34 is a diagram showing an example of data structure according to Embodiment 3 when contents are deleted automatically.

Presentation tables 3410 and 3420, an entity table 3430, and a storage heap 3440 correspond to those shown in Diagram 3310 of Figure 33. Presentation tables 3450 and 3460, an entity table 3470, and a storage heap 3480 correspond to those shown in Diagram 3320 of Figure 33.

The process of automatic contents deletion according to Embodiment 3 is described below with reference to a flowchart.

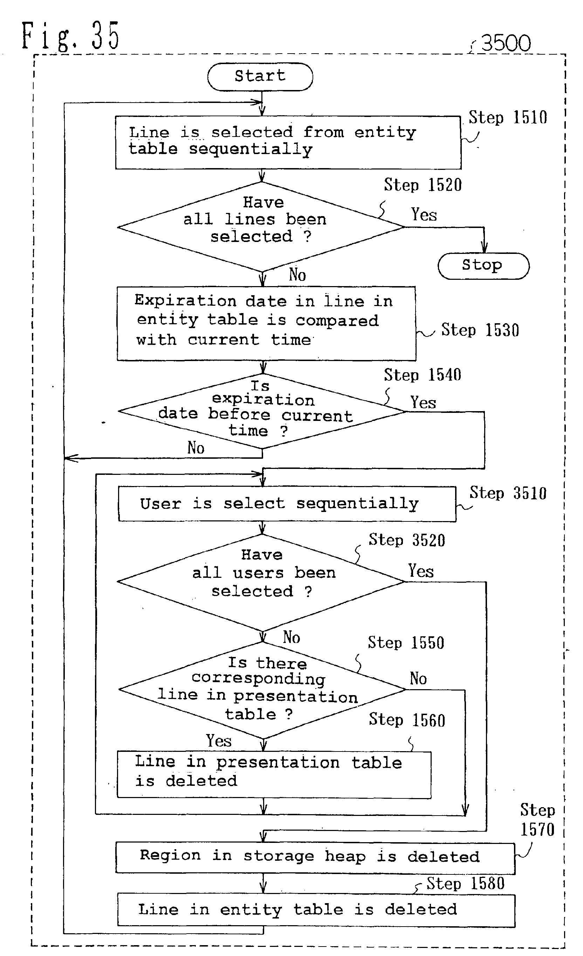

Figure 35 is a diagram used for the description of a process flowchart according to Embodiment 3 when contents are deleted automatically. Numeral 3500 indicates the process flowchart of the storage changing means according to Embodiment 3 when contents are deleted automatically.

Flowchart 3500 is similar to the above-mentioned Flowchart 1500 showing the process of automatic contents deletion in Embodiment 1. Thus, in Flowchart 3500, like steps to Flowchart 1500 are designated by like numerals.

The difference of Flowchart 3500 from Flowchart 1500 is that Step 1560 is carried out for all users. More specifically, Steps 3510 and 3520 are added so that Step 1560 is repeated by the number of users. Here, the presentation table used in Step 1560 is that of the current user selected in Step 3510.

In Flowchart 1500, the process on the presentation table is only the Step 1560. This process does not affect the other steps. Accordingly, the original process has been expanded such as to be carried out for all the presentation tables existing by the number of users.

Described below is the process of copying a content by user's operation according to Embodiment 3 capable of treating a plurality of users.

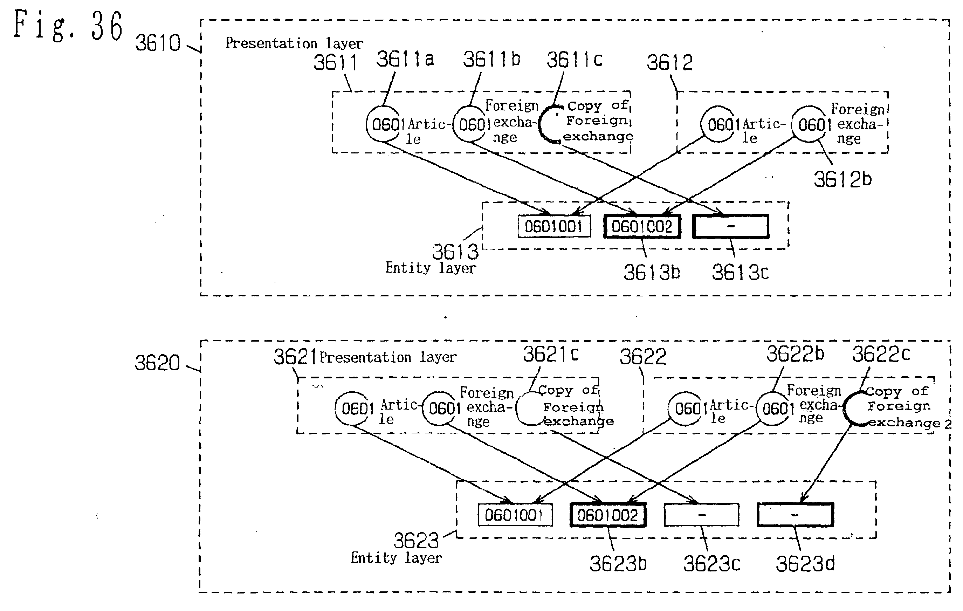

Figure 36 is a schematic diagram showing the data of the file system according to Embodiment 3 when a user copies a content.

Numeral 3610 indicates a diagram showing the state before a user copies a content. Numeral 3620 indicates a diagram showing the state after the user copies a content.

In Diagram 3610, in the presentation layer 3611 corresponding to a first user, a presentation node 3611c is generated by copying a presentation node 3611b. In the entity layer 3613, an entity 3613c is generated by copying the entity 3613b. Here, in the presentation layer 3612 corresponding to a second user, the presentation node 3612b is not copied. That is, the copying operation by the first user does not affect the presentation layer of the second user.

In Diagram 3620, in the presentation layer 3622 corresponding to the second user, a presentation node 3622c is generated by copying a presentation node 3622b. In the entity layer 3623, an entity 3623d is generated by copying the entity 3623b.

Here, the entity 3623c generated by the copying operation by the first user and the entity 3623d generated by the copying operation by the second user have been copied from a common entity 3623b, but separate entities from each other. In other words, a plurality of copies of an entity 3623b can be present in a single entity layer 3623.

The presence of a plurality of copies of an entity in an entity layer might be considered as the inefficient use of the storage capacity. However, there are advantages that the process is simplified, and that each user can edit arbitrarily the data of the content after copying.

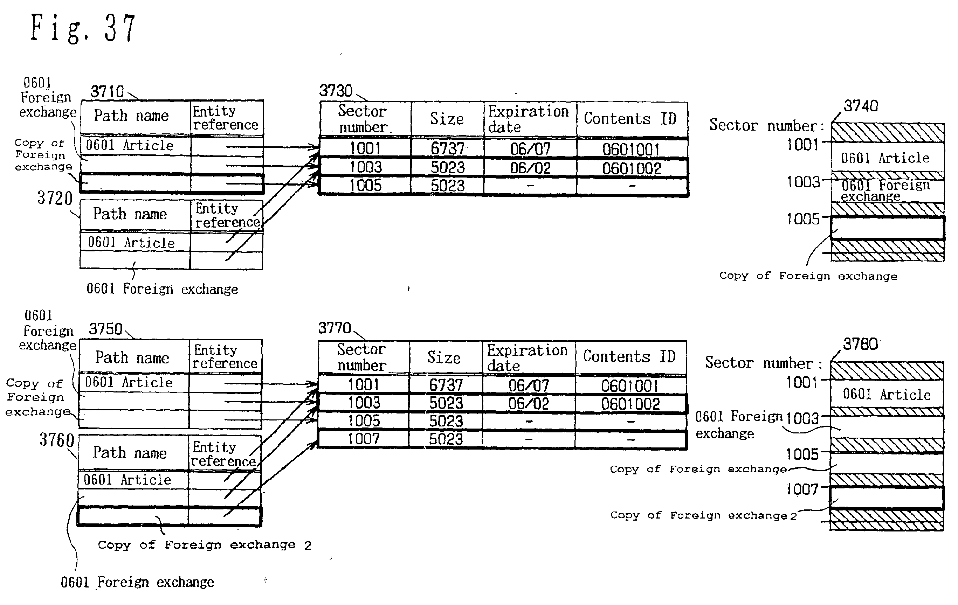

Figure 37 is a diagram showing an example of data structure according to Embodiment 3 when a user copies a content. Presentation tables 3710 and 3720, an entity table 3730, and a storage heap 3740 correspond to those shown in Diagram 3610 of Figure 36. Presentation tables 3750 and 3760, an entity table 3770, and a storage heap 3780 correspond to those shown in Diagram 3620 of Figure 36.

The process on this data structure is carried out according to Flowchart 1900 shown in Figure 19(a) in Embodiment 2.

The addition, the renewal, and the automatic deletion of a content are processes applied on the entity layer. These processes affect also presentation layers, however, this is for the purpose of maintaining the consistency with the entity layer. In contrast, the process of copying a content by each user's operation is applied on the presentation layer (or presentation table) of the user. Accordingly, in contrast to the case of the flowcharts for the processes of addition, renewal, and automatic deletion of a content, the flowchart used for the process of copying a content does not need the change that the process on the presentation layer is carried out for all users. Thus, the flowchart used for the process of copying a content in Embodiment 2 is used intact.

Described below is the process of deleting a content by user's operation according to Embodiment 3 capable of treating a plurality of users. Here, the target content for deletion is assumed not to be one copied by a user.

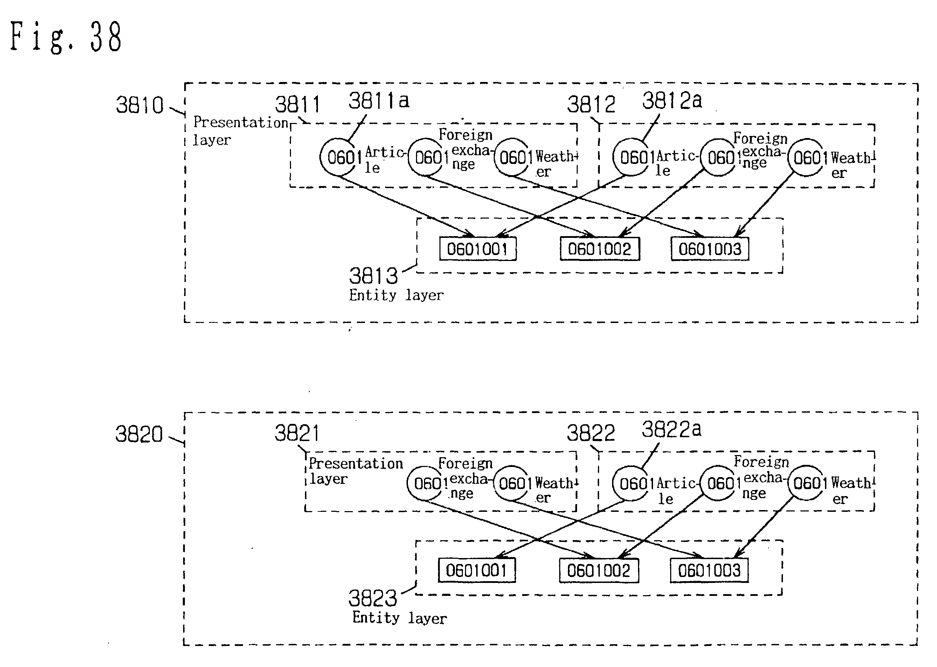

Figure 38 is a schematic diagram showing the data of the file system according to Embodiment 3 when a user deletes a content.

Numeral 3810 indicates a diagram showing the state before a user deletes a content. Numeral 3820 indicates a diagram showing the state after the user deletes a content.

In Diagram 3810, a first user corresponding to the presentation layer 3811 deletes a content corresponding to the presentation node 3811a, and then the situation becomes as shown in Diagram 3820. Here, not deleted is the presentation node 3812a (that is, 3822a) corresponding to the target content for deletion in the presentation layer 3812 corresponding to a second user. That is, the deletion by the first user does not affect the presentation layer 3812 (that is, 3822) of the second user.

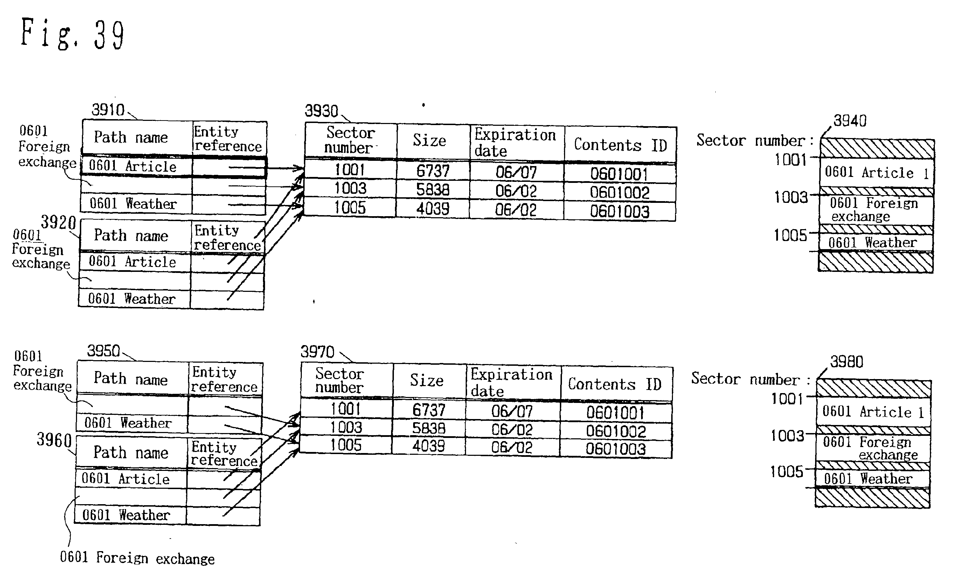

Figure 39 is a diagram showing an example of data structure according to Embodiment 3 when a user deletes a content.

Presentation tables 3910 and 3920, an entity table 3930, and a storage heap 3940 correspond to those shown in Diagram 3810 of Figure 38. Presentation tables 3950 and 3960, an entity table 3970, and a storage heap 3980 correspond to those shown in Diagram 3820 of Figure 38.

The process on this data structure is carried out according to Flowchart 2400 shown in Figure 24 in Embodiment 2. This is because the process of deleting a content by user's operation is applied only on the presentation layer of the specific user, similarly to the case of the process of copying a content by user's operation

Described below is the user-operated process of deleting a copied content according to Embodiment 3 capable of treating a plurality of users.

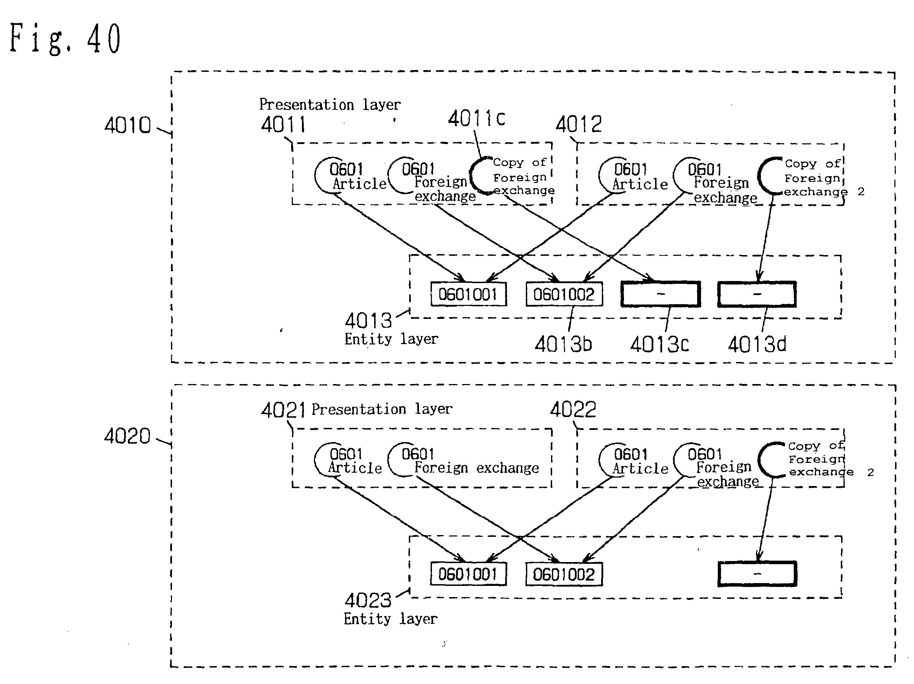

Figure 40 is a schematic diagram showing the data of the file system according to Embodiment 3 when a user deletes a copied content.

Numeral 4010 indicates a diagram showing the state before a user deletes a copied content. Numeral 4020 indicates a diagram showing the state after the user deletes a copied content. In Diagram 4010, a first user deletes a content corresponding to the presentation node 4011c in the presentation layer 4011 of the first user, and then the situation becomes as shown in Diagram 4020. At this time, the entity 4013c is also deleted along with the presentation node 4011c.

Here, the entities 4013c and 4013d have been copied from a common entity 4013b, however, the deletion of the entity 4013c does not affect the presence of the entity 4013d.

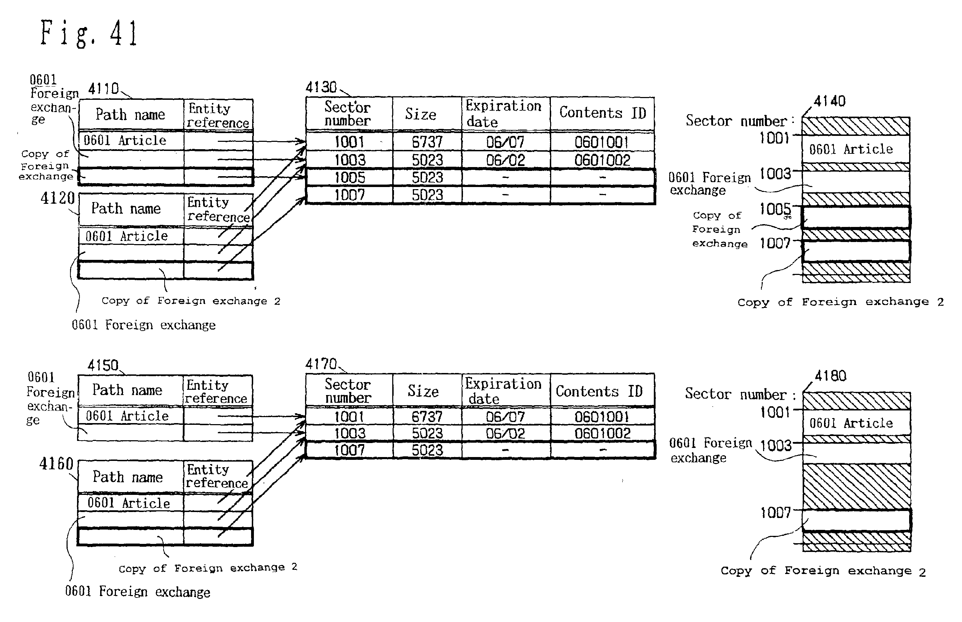

Figure 41 is a diagram showing an example of data structure according to Embodiment 3 when a user deletes a copied content.

Presentation tables 4110 and 4120, an entity table 4130, and a storage heap 4140 correspond to those shown in Diagram 4010 of Figure 40.' Presentation tables 4150 and 4160, an entity table 4170, and a storage heap 4180 correspond to those shown in Diagram 4020 of Figure 40.

Thus, according to Embodiment 3, in addition to the effects achieved by Embodiments 1 and 2, the storage for a plurality of users is managed on a single file system. In Embodiment 3, presentation layers each for storing information for a user are provided separately for each user, while a entity layer which is the control target by broadcasting is provided singly. A plurality of presentation layers permit that contents different for each user can be stored, and that operation, such as copy and deletion of contents, different for each user can be carried out independently. Further, since the entity layer is single, the byte string of the entity of a content controlled by broadcasting is stored singly in the entity layer of the file system. Accordingly, in comparison with the case that contents are stored independently for each user, regarding the processes of addition and renewal of a content by broadcasting as well as automatic content deletion, the storage capacity is used efficiently. Further, there are advantages in processing speed, power consumption, and the like.

### (Embodiment 4)

Embodiment 4 has the filtering function of changing the stored contents depending on the preference of each user in any of Embodiments 1, 2, and 3.

In addition to the features of the broadcast system according to Embodiments 1, 2, and 3, a broadcast system according to Embodiment 4 comprises: Step 1 in which when a contents ID, a path name, filter information, and a content entity are received, the received entity is stored in an entity layer; Step 2 in which the matching of the received filter information with a user profile is determined, whereby in case of unmatching, the process is terminated; and Step 3 of adding a presentation node having the received path name and referring to the entity added in Step 1, in a presentation layer.

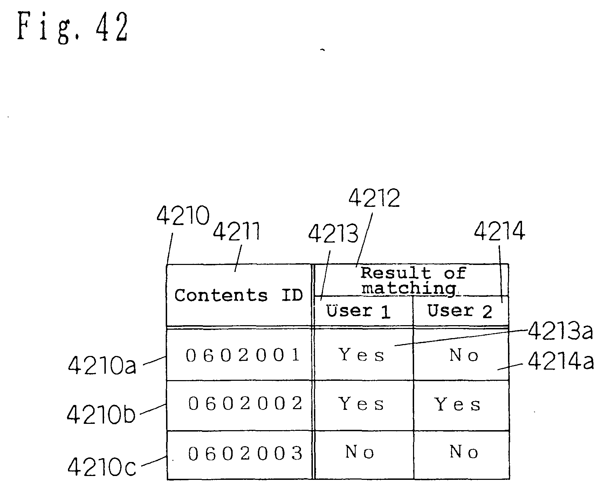

Figure 42 is a diagram showing an example of a filter matching table according to Embodiment 4. Numeral 4210 indicates an example of a filter matching table.

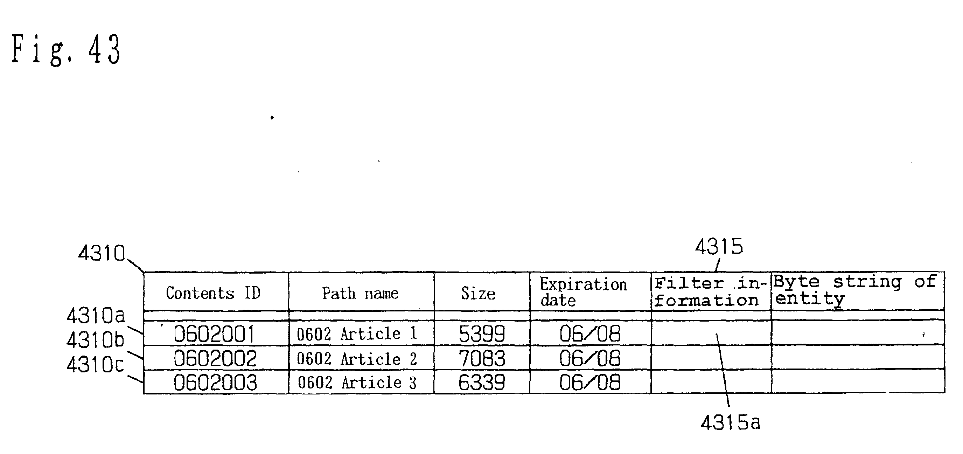

Figure 43 is a diagram showing an example of a transmission contents table for adding contents according to Embodiment 4. Numeral 4310 indicates the entirety of the transmission contents table. In the transmission contents table 4310, a "filter information" column 4315 is added. The filter information is identical to that in Embodiment 1.

When a received transmission contents table 4310 is input into content filtering means 0133, a filter matching table 4210 is included in the output of the content filtering means 0133. On the basis of the matching between the filter information provided in each content in the transmission contents table 4310 and the user profile of each user, it is determined whether each content is to be stored or not. As a result, the filter matching table 4210 is obtained.

The filter matching table 4210 has the data structure in the form of a table. Each line corresponds to a transmitted content, and at the same time, corresponds to a line in the transmission contents table 4310. The filter matching table 4210 comprises: a column 4211 for storing a contents ID; and a column 4212 for storing matching result. The column 4212 further comprises columns 4213 and 4214 each corresponding to a user. When a line in the filter matching table 4210 is considered, the result of matching for each user with the filter information of the content having the contents ID identical to that of the line is stored in the column 4212.

For example, when a line 4210a is considered, the value "Yes" in the column 4212 of the matching result for User 1 indicates that the filter information 4315a of the content having a contents ID "0602001" matches with the user profile of User 1.

Similarly, the value "No" in the column 4213 of the matching result for User 2 indicates that the filter information 4315a of the content having a contents ID "0602001" does not match with the user profile of User 2.

Further, when a line 4210b is considered, it is indicated that the content matches with both user profiles for User 1 and User 2. When a line 4210c is considered, it is indicated that the content does not match with both user profiles for User 1 and User 2.

The process by the storage changing means 0134 when the transmission contents table 4310 and the filter matching table 4210 are input in a reception apparatus according to Embodiment 4 having filtering function is described below with reference to a detailed example.

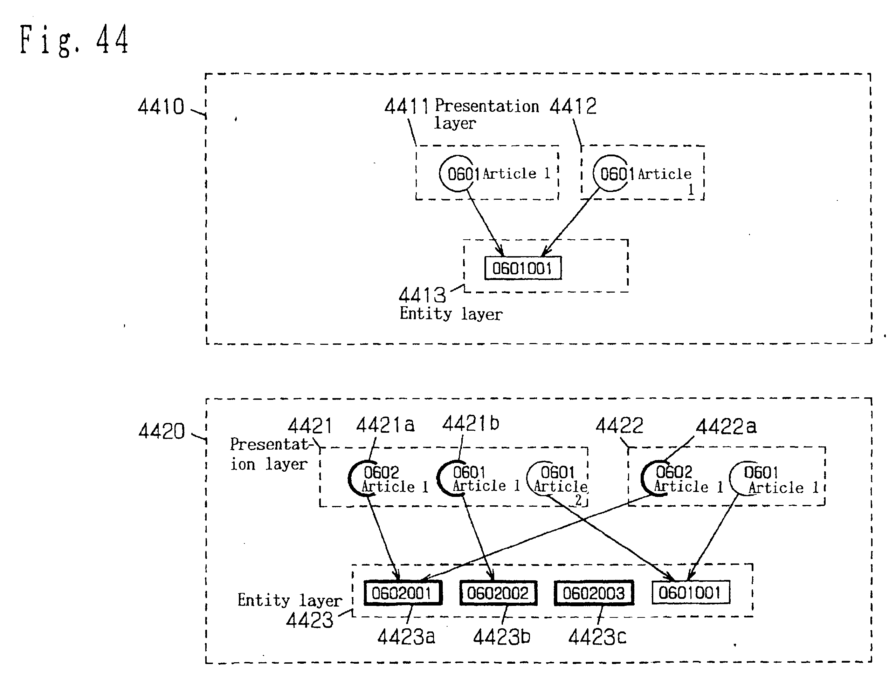

Figure 44 is a schematic diagram showing the data of the file system according to Embodiment 4 when contents are added.

Diagram 4410 shows the data of the file system before the transmission contents table 4310 is processed, while Diagram 4420 shows the data of the file system after the transmission contents table 4310 is processed.

In Diagram 4420, in the entity layer 4423, entities 4423a, 4423b, and 4423c are added. In the presentation layer 4421 of a first user, presentation nodes 4421a and 4421b are added, while in the presentation layer 4421 of a second user, a presentation node 4422a is added.

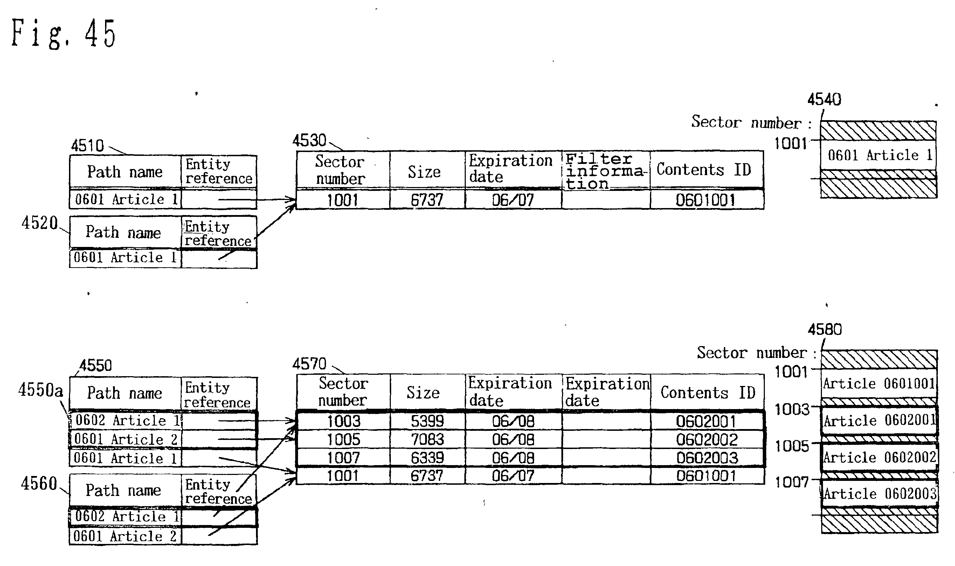

Figure 45 is a diagram showing an example of data structure according to Embodiment 4 when contents are added. Figure 45 corresponds to Figure 44.

The process detail is described below with reference to a flowchart.

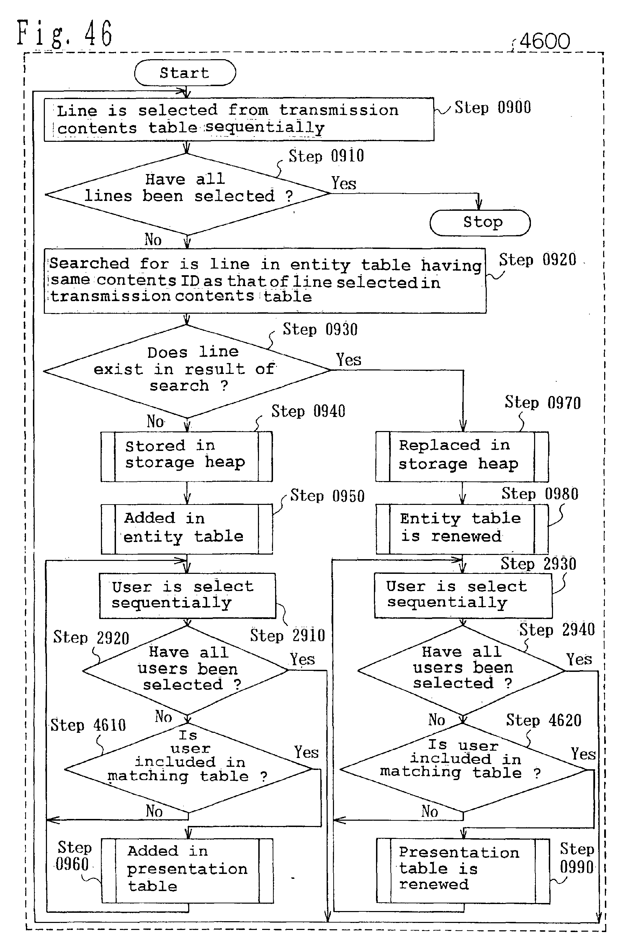

Figure 46 is a diagram used for the description of the process flowchart of the storage changing means according to Embodiment 4 when a contents table is received. Numeral 4600 indicates the entirety of the flowchart. Flowchart 4600 is similar to Flowchart 2900 in Embodiment 3. The difference is that Steps 4610 and 4620 are added.

In Step 4610, when a content is added to a presentation table, only when the user selected in Step 2910 has the positive result of matching in the file matching table, the Step 0960 of adding the content to the presentation table is carried out.

Similarly, Step 4620 is added to the Step 0990 of renewing the presentation table.

When a line 4310a in the transmission contents table 4310 is selected in Step 0900, a content having a contents ID "0602001" is not stored. Accordingly, in Step 0930, the process goes to Step 0940.

In Step 2910, User 1 is selected. In Step 4610, since the item 4213a of the matching result for User 1 in the filter matching table 4210 is "Yes," the process goes to Step 0960. Then, a line 4550a is added to the presentation table 4550.

In Step 2910 in the next turn, User 2 is selected. In Step 4610, since the item 4214a of the matching result for User 2 in the filter matching table 4210 is "No," the process does not go to Step 0960, but returns to Step 2910. Accordingly, no line is added to the presentation table 4560 of User 2.

After that, the lines 4310b and 4310c are processed similarly. As a result, presentation tables 4550 and 4560, an entity table 4570, and a storage heap 4580 are obtained.

The process when a user profile is changed according to Embodiment 4 is described below. The change of a user profile may be carried out not only when a new user is registered and the user's profile is added, but also when a user profile is already set for a registered user and filtered contents are already stored on the basis of the user profile.

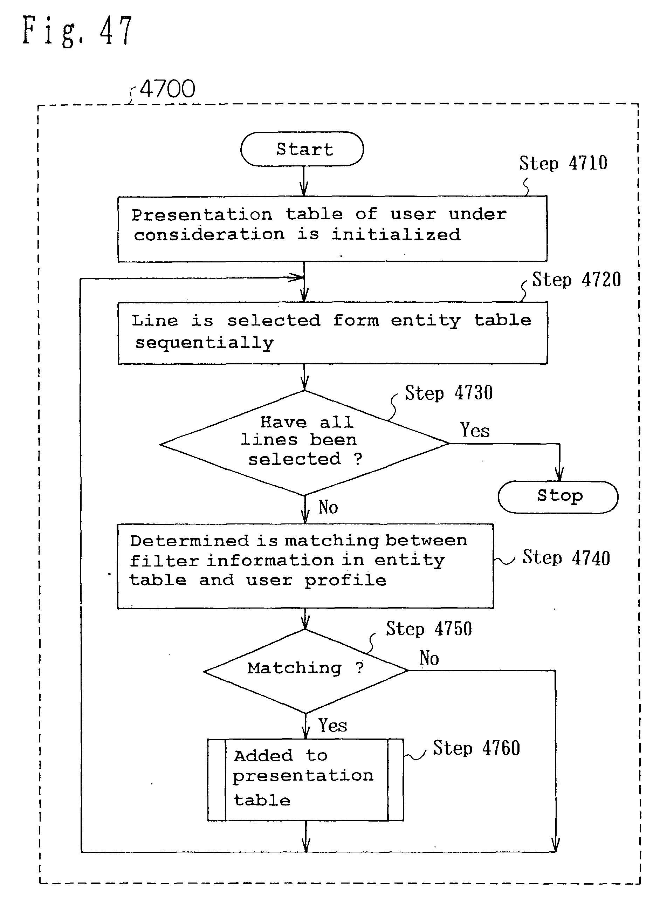

Figure 47 is a diagram used for the description of a process flowchart according to Embodiment 4 when a user profile is changed. Numeral 4700 indicates the process flowchart of the storage changing means 0134.

(Step 4710) The presentation table corresponding to a user the user profile of which is changed is initialized. That is, all lines in the presentation table are deleted. In the diagram, all presentation nodes in the presentation layer corresponding to the user under consideration are deleted.

Here, copied contents generated by the user are excluded from the target contents for deletion.

(Step 4720) A line is selected from the entity table sequentially.

(Step 4730) When no line remains to be selected, the process is terminated. Otherwise, the process goes to Step 4740.

(Step 4740) Determined is the matching between the filter information stored in the line selected in the entity table in Step 4720 and the user profile of the user under consideration.

(Step 4750) When the matching is positive in Step 4740, the process goes to Step 4760. Otherwise, the process returns to Step 4720.

(Step 4760) The content corresponding to the line selected in the entity table in Step 4720 is added to the presentation table of the user under consideration. Then, the process returns to Step 4720.

This process provides the advantage that contents already stored in the entity layer (or in the entity table and the storage heap) can be watched immediately without the necessity of waiting for the new reception of contents.

In particular, in Flowchart 4600 of Figure 46, even a content unmatching with any user profile is stored in the entity layer by virtue of Steps 0940 and 0950 or Steps 0970 and 0980. In other words, even a content unmatching with any user profile before the change of a user profile is stored in the entity layer, despite that the presentation node of the content does not exist in any presentation layer. Accordingly, all the contents included in received transmission contents tables are stored in the entity layer except for automatically deleted ones. Thus, in the change of a user profile, the data in the entity layer are ready to be consistent with the change immediately.

Thus, according to Embodiment 4, in addition to the effects achieved by Embodiments 1, 2, and 3, contents matching with user preference are solely selected automatically, whereby contents are stored depending on each user's preference. The user preference is reflected by generating the presentation node of a content matching with user preference, in the presentation layer. The user preference is stored as a user profile in the reception apparatus in advance. However, even in case of the change of the user profile, contents having unmatched with the previous user profile but matching with the new user profile are immediately stored for the user without waiting for the new reception of contents. The change of a user profile is carried out also in the registration of a new user. After the registration of the user, contents are immediately stored without waiting for the new reception of contents, whereby the contents can be watched immediately. The determination of the matching between a content and user preference can be carried out after the completion of the storing of the byte string of the entity which requires real time processing. This minimizes the processing load in reception, and hence avoids the dropping of contents and further minimizes the influence to other processes. Further, the process of determining the matching with the user preference may be even one causing a heavy load and requiring a long processing time.

Embodiments 1-4 have been described above in detail.

A reception storage apparatus according to the invention is the reception apparatus 0130 (see Figure 1) in the above-mentioned embodiments. However, a reception storage apparatus according to the invention is not restricted to this, and is a reception storage apparatus for receiving and storing at least a content and a contents ID for identifying said content which are transmitted from a transmission apparatus, wherein: said reception storage apparatus stores a path name corresponding to said content and said contents ID; and said path name is transmitted from said transmission apparatus or generated in said reception storage apparatus, presentable to a user of said reception storage apparatus, and changeable in response to an instruction by said user.

A transmission apparatus according to the invention is the send-out apparatus 0110 (see Figure 1) in the above-mentioned embodiments. However, a transmission apparatus according to the invention is not restricted to this, and is a transmission apparatus for transmitting at least a content and a contents ID for identifying said content, wherein: a reception storage apparatus for receiving and storing said transmitted content and said transmitted contents ID stores a path name corresponding to said content and said contents ID; and said path name is transmitted from said transmission apparatus or generated in said reception storage apparatus, presentable to a user of said reception storage apparatus, and changeable in response to an instruction by said user.

A broadcast system according to the invention is the broadcast system 0100 (see Figure 1) in the above-mentioned embodiments. However, a broadcast system according to the invention is not restricted to this, and is a broadcast system comprising: a transmission apparatus for transmitting at least a content and a contents ID for identifying said content; and a reception storage apparatus for receiving and storing said transmitted content and said transmitted contents ID; wherein: said reception storage apparatus stores a path name corresponding to said content and said contents ID; and said path name is transmitted from said transmission apparatus or generated in said reception storage apparatus, presentable to a user of said reception storage apparatus, and changeable in response to an instruction by said user.

Further, the invention is a program which causes a computer to execute the function of all or part of the means (or apparatuses, devices, circuits, sections, and the like) in the reception storage apparatus, the transmission apparatus, and the broadcast system, and works in cooperation with the computer. A computer according to the invention is not restricted to genuine hardware such as a CPU, and may be firmware, an OS, and a peripheral device.

The invention is a program which causes a computer to execute the operation of all or part of the steps (or processes, operations, effects, and the like) in the reception storage method, the transmission method, and the broadcast method, and works in cooperation with the computer.

Part of the means (or apparatuses, devices, circuits, sections, and the like) according the invention and part of the steps (or processes, operations, effects, and the like) according the invention indicate: a piece or pieces of means among a plurality of pieces of said means and a step or steps among a plurality of said steps; or alternatively, part of function in a piece of means and part of operation in a step, respectively.

Part of the apparatuses (or devices, circuits, sections, and the like) according the invention indicates: an apparatus or apparatuses among a plurality of apparatuses; part of means (or devices, circuits, sections, and the like) in an apparatus; or alternatively, part of function in a piece of means.

The scope of the invention includes also a computer-readable recording medium in which a program according to the invention is recorded. A mode of use of a program according to the invention may be that the program is recorded in a computer-readable recording medium and works in cooperation with a computer. A mode of use of a program according to the invention may be that the program is transmitted through a transmitting medium, read out by a computer, and works in cooperation with the computer. The scope of recording media according to the invention includes a ROM and the like, while the scope of transmitting media according to the invention includes a transmitting medium such as the Internet, as well as light, radio waves, acoustic waves, and the like.

The configuration of the invention may be implemented in software or in hardware.

The invention is a medium carrying a program for causing a computer to execute the operation of all or part of the steps of all or part of the reception storage apparatus, the transmission apparatus, and the broadcast system according to the invention, wherein: the medium is read out by a computer; and the read-out program works in cooperation with the computer.

The invention is a medium carrying a program for causing a computer to execute the function of all or part of the means of all or part of the reception storage method, the transmission method, and the broadcast method according to the invention, wherein: the medium is read out by a computer; and the read-out program works in cooperation with the computer.

Further, in a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for storing and managing presentation nodes identified with path names; and wherein when a contents ID, a path name, and an entity are received, the storage management method comprises: Step 1 of adding the received entity to the entity layer; and Step 2 of adding to the presentation layer a presentation node having the received path name and referring to the entity added in Step 1.

In a broadcast system in which contents stored in a reception apparatus is controlled by a transmission apparatus, the invention is, for example, a storage management method, wherein said reception apparatus comprises: an entity layer for storing and managing the entity of contents identified with contents IPs; and a presentation layer for storing and managing presentation nodes identified with path names; and wherein when a contents ID, a path name, and an entity are received, the storage management method comprises: Step 1 of searching for an entity having the received contents ID, in the entity layer; Step 2 of overwriting the entity found out in Step 1 with the received entity; Step 3 of searching for a presentation node referring to the entity found out in Step 1, in the presentation layer; and Step 4 of overwriting the path name of the presentation node found out in Step 3 with the received path name.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for storing and managing presentation nodes identified with path names; and wherein when a contents ID, a path name, and an entity are received, the storage management method comprises: Step 1 of searching for an entity having the received contents ID, in the entity layer; Step 2 of going to Step 5 when the search in Step 1 is successful; Step 3 of adding the received entity to the entity layer; Step 4 of adding to the presentation layer a presentation node having the received path name and referring to the entity added in Step 3, and of terminating the process; Step 5 of overwriting the entity found out in Step 1 with the received entity; Step 6 of searching for a presentation node referring to the entity found out in Step 1, in the presentation layer; and Step 7 of overwriting the path name of the presentation node found out in Step 6 with the received path name.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for storing and managing presentation nodes identified with path names and having expiration dates; and wherein the storage management method comprises: Step 1 of searching for an entity having an exceeded expiration date, in the entity layer; Step 2 of deleting the entity found out in Step 1; Step 3 of searching for a presentation node referring to the entity found out in Step 1, in the presentation layer; and Step 4 of deleting the presentation node found out in Step 3.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for storing and managing presentation nodes identified with path names; and wherein the storage management method comprises: Step 1 in which a user specifies a path name; Step 2 of searching the presentation layer for a presentation node having the path name specified in Step 1; Step 3 of deleting the presentation node found out in Step 2.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for storing and managing presentation nodes identified with path names; and wherein the storage management method comprises: Step 1 in which a user specifies a path name; Step 2 of searching the presentation layer for a presentation node having the path name specified in Step 1; Step 3 of copying an entity referred to by the presentation node found out in Step 2; Step 4 of setting the contents ID of the entity copied in Step 3, into an invalid value; Step 5 of copying the presentation node found out in Step 2; and Step 6 of setting the presentation node copied in Step 5 such as to refer to the entity copied in Step 3.

The invention is, for example, a storage management method, wherein: said presentation nodes have expiration dates; and the storage management method further comprises, before said Step 5, the step of setting the expiration date of said entity copied in said Step 3, into an invalid value.

The invention is, for example, a storage management method in the process of deleting a copied content, comprising: Step 11 in which a user specifies a path name; Step 12 of searching the presentation layer for a presentation node having the path name specified in Step 11; Step 13 of deleting the presentation node found out in Step 12; and Step 14 of deleting an entity referred to by the presentation node found out in Step 12.

The invention is, for example, a storage management method in the process of deleting a copied content, comprising: Step 11 in which a user specifies a path name; Step 12 of searching the presentation layer for a presentation node having the path name specified in Step 11; Step 13 of deleting the presentation node found out in Step 12; Step 14 of terminating the process when the contents ID of an entity referred to by the presentation node found out in Step 12 is valid; and Step 15 of deleting the entity referred to by the presentation node found out in Step 12.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for storing and managing presentation nodes identified with path names; and wherein when a contents ID, a path name, filter information, and an entity are received, the storage management method comprises: Step 1 in which the received entity is stored in the entity layer; Step 2 in which the matching of the received filter information with a user profile is determined, whereby in case of unmatching, the process is terminated; and Step 3 of adding a presentation node having the received path name and referring to the entity added in Step 1, into a presentation layer.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for storing and managing presentation nodes identified with path names; and wherein when a contents ID, a path name, filter information, and an entity are received, the storage management method comprises: Step 1 of searching for an entity having the received contents ID, in the entity layer; Step 2 of overwriting the entity found out in Step 1 with the received entity; Step 3 of searching for a presentation node referring to the entity found out in Step 1, in the presentation layer; Step 4 in which the matching of the received filter information with a user profile is determined, whereby in case of positive matching, the process goes to Step 6; Step 5 of deleting the presentation node found out in Step 3, and of terminating the process; and Step 6 of overwriting the path name of the presentation node found out in Step 3 with the received path name.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for storing and managing presentation nodes identified with path names; and wherein when a contents ID, a path name, filter information, and an entity are received, the storage management method comprises: Step 1 of searching for an entity having the received contents ID, in the entity layer; Step 2 of going to Step 6 when the search in Step 1 is successful; Step 3 of adding the received entity in the entity layer; Step 4 in which the matching of the received filter information with a user profile is determined, whereby in case of unmatching, the process is terminated; Step 5 of adding a presentation node having the received path name and referring to the entity added in Step 3 , into a presentation layer, and of terminating the process; Step 6 of overwriting the entity found out in Step 1 with the received entity; Step 7 of searching for a presentation node referring to the entity found out in Step 1, in the presentation layer; Step 8 in which the matching of the received filter information with a user profile is determined, whereby in case of positive matching, the process goes to Step 10; Step 9 of deleting the presentation node found out in Step 7, and of terminating the process; and Step 10 of overwriting the path name of the presentation node found out in Step 7 with the received path name.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for storing and managing presentation nodes identified with path names; and wherein the storage management method comprises: Step 1 of changing a user profile; Step 2 of deleting all presentation nodes in the presentation layer; Step 3 of selecting each entity sequentially among all entities in the entity layer; Step 4 in which the matching of the filter information of the entity selected in Step 3 with the user profile is determined, whereby in case of unmatching, the process returns to Step 3; and Step 5 of adding a presentation node having the received path name and referring to the entity selected in Step 3, into a presentation layer, and of returning to Step 3.

Further, in a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for each user for storing and managing presentation nodes identified with path names; and wherein when a contents ID, a path name, and an entity are received, the storage management method comprises: Step 1 of adding the received entity to the entity layer; Step 2 of selecting a user sequentially among all users; and Step 3 of adding, to the presentation layer corresponding to the user selected in Step 2, a presentation node having the received path name and referring to the entity added in Step 1, and of returning to Step 2.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for each user for storing and managing presentation nodes identified with path names; and wherein when a contents ID, a path name, and an entity are received, the storage management method comprises: Step 1 of searching for an entity having the received contents ID, in the entity layer; Step 2 of overwriting the entity found out in Step 1 with the received entity; Step 3 of selecting a user sequentially among all users; Step 4 of searching for a presentation node referring to the entity found out in Step 1, in the presentation layer corresponding to the user selected in Step 2; and Step 5 of overwriting the path name of the presentation node found out in Step 4 with the received path name, and of returning to Step 3.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for each user for storing and managing presentation nodes identified with path names; and wherein when a contents ID, a path name, and an entity are received, the storage management method comprises: Step 1 of searching for an entity having the received contents ID, in the entity layer; Step 2 of going to Step 6 when the search in Step 1 is successful; Step 3 of adding the received entity to the entity layer; Step 4 of selecting a user sequentially among all users; Step 5 of adding, to the presentation layer corresponding to the user selected in Step 4, a presentation node having the received path name and referring to the entity added in Step 3, and of returning to Step 4; Step 6 of overwriting the entity found out in Step 1 with the received entity; Step 7 of selecting a user sequentially among all users; Step 8 of searching for a presentation node referring to the entity found out in Step 1, in the presentation layer corresponding to the user selected in Step 7; and Step 9 of overwriting the path name of the presentation node found out in Step 8 with the received path name, and of returning to Step 7.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for each user for storing and managing presentation nodes identified with path names and having expiration dates; and wherein the storage management method comprises: Step 1 of searching for an entity having an exceeded expiration date, in the entity layer; Step 2 of deleting the entity found out in Step 1; Step 3 of selecting a user sequentially among all users; Step 4 of searching for a presentation node referring to the entity found out in Step 1, in the presentation layer corresponding to the user selected in Step 3; and Step 5 of deleting the presentation node found out in Step 4, and of returning to Step 3.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for each user for storing and managing presentation nodes identified with path names; and wherein the storage management method comprises: Step 1 in which a specific user specifies a path name; Step 2 of searching the presentation layer corresponding to the specific user for a presentation node having the path name specified in Step 1; Step 3 of deleting the presentation node found out in Step 2.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for each user for storing and managing presentation nodes identified with path names; and wherein the storage management method comprises: Step 1 in which a specific user specifies a path name; Step 2 of searching the presentation layer corresponding to the specific user for a presentation node having the path name specified in Step 1; Step 3 of copying an entity referred to by the presentation node found out in Step 2; Step 4 of setting the contents ID of the entity copied in Step 3, into an invalid value; Step 5 of copying the presentation node found out in Step 2, in the presentation layer corresponding to the specific user; and Step 6 of setting the presentation node copied in Step 5 such as to refer to the entity copied in Step 3.

The invention is, for example, a storage management method, wherein: said presentation nodes have expiration dates ; and the storage management method further comprises, before said Step 5, the step of setting the expiration date of said entity copied in said Step 3, into an invalid value.

The invention is, for example, a storage management method in the process of deleting a copied content, comprising: Step 11 in which a specific user specifies a path name; Step 12 of searching the presentation layer corresponding to the specific user for a presentation node having the path name specified in Step 11; Step 13 of deleting the presentation node found out in Step 12; and Step 14 of deleting an entity referred to by the presentation node found out in Step 12.

The invention is, for example, a storage management method in the process of deleting a copied content, comprising: Step 11 in which a specific user specifies a path name; Step 12 of searching the presentation layer corresponding to the specific user for a presentation node having the path name specified in Step 11; Step 13 of deleting the presentation node found out in Step 12; Step 14 of terminating the process when the contents ID of an entity referred to by the presentation node found out in Step 12 is valid; and Step 15 of deleting the entity referred to by the presentation node found out in Step 12.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for each user for storing and managing presentation nodes identified with path names; and wherein when a contents ID, a path name, filter information, and an entity are received, the storage management method comprises: Step 1 in which the received entity is stored in the entity layer; Step 2 of selecting a user sequentially among all users; Step 3 in which the matching of the received filter information with the user profile corresponding to the user selected in Step 2 is determined, whereby in case of unmatching, the process returns to Step 2; and Step 4 of adding a presentation node having the received path name and referring to the entity added in Step 1, into the presentation layer corresponding to the user selected in Step 2, and of returning to Step 2.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for each user for storing and managing presentation nodes identified with path names; and wherein when a contents ID, a path name, filter information, and an entity are received, the storage management method comprises: Step 1 of searching for an entity having the received contents ID, in the entity layer; Step 2 of overwriting the entity found out in Step 1 with the received entity; Step 3 of selecting a user sequentially, among all users; Step 4 of searching for a presentation node referring to the entity found out in Step 1, in the presentation layer corresponding to the user selected in Step 3; Step 5 in which the matching of the received filter information with the user profile corresponding to the user selected in Step 3 is determined, whereby in case of positive matching, the process goes to Step 7; Step 6 of deleting the presentation node found out in Step 4, and of returning to Step 3; and Step 7 of overwriting the path name of the presentation node found out in Step 4 with the received path name, and of returning to Step 3.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for each user for storing and managing presentation nodes identified with path names; and wherein when a contents ID, a path name, filter information, and an entity are received, the storage management method comprises: Step 1 of searching for an entity having the received contents ID, in the entity layer; Step 2 of going to Step 7 when the search in Step 1 is successful; Step 3 of adding the received entity in the entity layer; Step 4 of selecting a user sequentially among all users; Step 5 in which the matching of the received filter information with the user profile corresponding to the user selected in Step 4 is determined, whereby in case of unmatching, the process returns to Step 4; Step 6 of adding a presentation node having the received path name and referring to the entity added in Step 3, into the presentation layer corresponding to the user selected in Step 4, and of returning to Step 3; Step 7 of overwriting the entity found out in Step 1 with the received entity; Step 8 of selecting a user sequentially among all users; Step 9 of searching for a presentation node referring to the entity found out in Step 1, in the presentation layer corresponding to the user selected in Step 8; Step 10 in which the matching of the received filter information with the user profile corresponding to the user selected in Step 8 is determined, whereby in case of positive matching, the process goes to Step 12; Step 11 of deleting the presentation node found out in Step 9, and of returning to Step 8; and Step 12 of overwriting the path name of the presentation node found out in Step 9 with the received path name, and of returning to Step 8.

In a broadcast system in which contents stored in a reception apparatus is controlled by a transmission apparatus, the invention is, for example, a storage management method, wherein said reception apparatus comprises: an entity layer for storing and managing the entity of contents identified with contents IDs; and a presentation layer for each user for storing and managing presentation nodes identified with path names; and wherein the storage management method comprises : Step 1 of changing the user profile corresponding to a specific user; Step 2 of deleting all presentation nodes in the presentation layer corresponding to the specific user; Step 3 of selecting each entity sequentially among all entities in the entity layer; Step 4 of selecting a user sequentially among all users; Step 5 of returning to Step 3 when all users have been selected in Step 4; Step 6 in which the matching of the filter information of the entity selected in Step 3 with the user profile corresponding to the user selected in Step 4 is determined, whereby in case of unmatching, the process returns to Step 4; and Step 7 of adding a presentation node having the received path name and referring to the entity selected in Step 3, into the presentation layer corresponding to the user selected in Step 4, and of returning to Step 4.

Further, the invention is, for example, a reception apparatus in a broadcast system in which contents stored in the reception apparatus is controlled by a send-out apparatus, wherein the reception apparatus can implement the above-mentioned storage management methods.

The invention is, for example, a broadcast system wherein: contents stored in a reception apparatus is controlled by a send-out apparatus; the send-out apparatus sends out the content together with a path name; and the reception apparatus can implement the above-mentioned storage management methods.

The invention is, for example, a broadcast system wherein: contents stored in a reception apparatus is controlled by a send-out apparatus; the send-out apparatus sends out the content together with a path name and filter information; and the reception apparatus can implement the above-mentioned storage management methods.

The invention is, for example, a send-out apparatus in a broadcast system for implementing the above-mentioned storage management methods.

The entire disclosure of the above-mentioned literature is incorporated herein by reference in its entirety.

### INDUSTRIAL APPLICABILITY

As described above, the invention has the advantage of storing and managing broadcasted contents more appropriately.

## Claims

1. A reception storage apparatus for receiving and storing at least a content and a contents ID for identifying said content which are transmitted from a transmission apparatus side, wherein:
said reception storage apparatus stores a path name corresponding to said content and said contents ID; and
said path name is transmitted from said transmission apparatus side or generated in said reception storage apparatus side, presentable to a user of said reception storage apparatus side, and changeable in response to an instruction by said user.

2. A reception storage apparatus according to Claim 1, wherein when a contents ID identical to said contents ID already stored is received newly, said content stored together with said contents ID already stored is renewed by being overwritten with a content received together with said newly received contents ID.

3. A reception storage apparatus according to Claim 1, wherein:
said storage is carried out to a predetermined recording medium;
said path name corresponds to a hierarchical directory of said recording medium; and
the hierarchical directory of said stored content is changed when said path name is changed by an instruction from said user.

4. A reception storage apparatus according to Claim 1, wherein even when said path name is deleted by an instruction from said user, said content and said contents ID corresponding to said deleted path name is not deleted.

5. A reception storage apparatus according to Claim 1, wherein: expiration date information on the limit date when said content is to be deleted is stored; and
said stored content is deleted on the basis of said stored expiration date information.

6. A reception storage apparatus according to any of Claims 1-5, comprising copy generating means of generating a copy of said stored content in response to an instruction from said user, wherein
said generated copy is not provided with said contents ID but provided with said corresponding path name.

7. A reception storage apparatus according to Claim 6, wherein said generated copy is deleted in response to an instruction from said user.

8. A reception storage apparatus according to any of Claims 1-5, comprising path name providing means of providing to said single content said path name separately for each of a plurality of said users.

9. A reception storage apparatus according to any of Claims 1-5, comprising path name presenting means of presenting or not presenting said path name corresponding to said content on the basis of the user preference information on the preference of said user.

10. A reception storage apparatus according to Claim 9, wherein when said user preference information is changed, said path name corresponding to said already stored content is presented or not presented on the basis of the result of the change.

11. A transmission apparatus for transmitting at least a content and a contents ID for identifying said content, wherein:
a path name corresponding to said content and said contents ID is stored on the side of a reception storage apparatus for receiving and storing said transmitted content and said transmitted contents ID; and
said path name is transmitted from said transmission apparatus side or generated in said reception storage apparatus side, presentable to a user of said reception storage apparatus side, and changeable in response to an instruction by said user.

12. A transmission apparatus according to Claim 11, wherein:
a content is newly transmitted together with a contents ID identical to said contents ID already stored in said reception storage apparatus side; and
said content stored together with said contents ID already stored is renewed by being overwritten with said content newly transmitted.

13. A broadcast system comprising:
a transmission apparatus for transmitting at least a content and a contents ID for identifying said content; and
a reception storage apparatus for receiving and storing said transmitted content and said transmitted contents ID; wherein:
a path name corresponding to said content and said contents ID is stored on said reception storage apparatus side; and
said path name is transmitted from said transmission apparatus side or generated in said reception storage apparatus side, presentable to a user of said reception storage apparatus side, and changeable in response to an instruction by said user.

14. A reception storage method comprising the steps of:
receiving and storing at least a content and a contents ID for identifying said content which are transmitted from a transmission side; and
storing a path name corresponding to said content and said contents ID; wherein
said path name is transmitted from said transmission side or generated in said reception storage side, presentable to a user of said reception storage side, and changeable in response to an instruction by said user.

15. A transmission method comprising the step of transmitting at least a content and a contents ID for identifying said content, wherein:
a path name corresponding to said content and said contents ID is stored on a reception storage side for receiving and storing said transmitted content and said transmitted contents ID; and
said path name is transmitted from said transmission side or generated in said reception storage side, presentable to a user of said reception storage side, and changeable in response to an instruction by said user.

16. A broadcasting method comprising the steps of:
transmitting at least a content and a contents ID for identifying said content and then receiving and storing said transmitted content and said transmitted contents ID; and
storing a path name corresponding to said content and said contents ID, on said receiving and storing side; wherein
said path name is transmitted from said transmission side or generated in said reception storage side, presentable to a user of said reception storage side, and changeable in response to an instruction by said user.

17. A program for causing a computer to execute all or part of the steps of: receiving and storing at least a content and a contents ID for identifying said content which are transmitted from a transmission side; and storing a path name corresponding to said content and said contents ID; in the reception storage method according to Claim 14.

18. A program for causing a computer to execute the step of transmitting at least a content and a contents ID for identifying said content, in the transmission method according to Claim 15.

19. A program for causing a computer to execute all or part of the steps of: transmitting at least a content and a contents ID for identifying said content and then receiving and storing said transmitted content and said transmitted contents ID; and storing a path name corresponding to said content and said contents ID, on said receiving and storing side; in the broadcasting method according to Claim 16.

20. A computer-processable medium carrying a program for causing a computer to execute all or part of the steps of: receiving and storing at least a content and a contents ID for identifying said content which are transmitted from a transmission side; and storing a path name corresponding to said content and said contents ID; in the reception storage method according to Claim 14.

21. A computer-processable medium carrying a program for causing a computer to execute the step of transmitting at least a content and a contents ID for identifying said content, in the transmission method according to Claim 15.

22. A computer-processable medium carrying a program for causing a computer to execute all or part of the steps of: transmitting at least a content and a contents ID for identifying said content and then receiving and storing said transmitted content and said transmitted contents ID; and storing a path name corresponding to said content and said contents ID, on said receiving and storing side; in the broadcasting method according to Claim 16.
